# EUROPEAN PATENT APPLICATION

(11) **EP 4 694 461 A1**
(43) Date of publication of application: **11.02.2026**
(21) Application number: 24796141.0
(22) Date of filing: 25.04.2024
(51) Int. Cl.: H04W 72/0453

(54) **COMMUNICATION METHOD AND COMMUNICATION APPARATUS**

(30) Priority: 28.04.2023 CN 202310486086
(71) Applicant: Huawei Technologies Co., Ltd., Shenzhen, Guangdong 518129 (CN)
(72) Inventor: MAO, Zhi, Shenzhen, Guangdong 518129 (CN); LIU, Chenchen, Shenzhen, Guangdong 518129 (CN); YU, Jian, Shenzhen, Guangdong 518129 (CN); GAN, Ming, Shenzhen, Guangdong 518129 (CN)
(74) Representative: Goddar, Heinz J.
(86) International application number: PCT/CN2024/089689
(87) International publication number: WO 2024/222765

(57) **Abstract**

This application provides a communication method. The method may be applied to a WLAN system supporting 802.11 series protocols such as a next-generation Wi-Fi protocol of IEEE 802.11ax like 802.11be, Wi-Fi 7, or EHT, and a next-generation protocol of 802.11be like Wi-Fi 8, or applied to a UWB-based wireless personal area network system and a sensing system. The method includes: Devices communicate with each other based on a frequency resource, where the frequency resource includes a multiple resource unit MRU, the MRU includes a k×996+m×484-tone MRU, k is an integer greater than or equal to 4, and m is equal to 0 or 1. An MRU is designed for a bandwidth greater than 320 MHz, to meet OFDMA transmission in a future large-bandwidth scenario.

## Description

This application claims priority to Chinese Patent Application No. 202310486086.2, filed with the China National Intellectual Property Administration on April 28, 2023 and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and a communication apparatus.

### BACKGROUND

With development of wireless local area network (wireless local area network, WLAN), an orthogonal frequency division multiple access (orthogonal frequency division multiple access, OFDMA) technology is newly introduced, allowing an entire bandwidth to be divided into a plurality of resource units (resource units, RUs). In other words, allocation of user frequency-domain resources are based on resource units but rather than channels. For example, within a 20 MHz channel, there may be a plurality of RUs, which may be a small-size RUs, for example, 26-tone RUs, 52-tone RUs, or 106-tone RUs, where "tone" indicates a number of subcarriers. In addition, the RU may alternatively be a large-size RU, for example, a 242-tone RU, a 484-tone RU, or a 996-tone RU.

In 802.11be, the concept of multiple resource unit (Multiple Resource Unit, MRU) is defined, and a plurality of RUs are allowed to be allocated to a same user, to implement more flexible frequency resource allocation. An MRU formed by combining large-size RUs is referred to as a large-size MRU, and an MRU formed by combining small-size RUs is referred to as a small-size MRU.

For different bandwidths, such as 20 MHz, 40 MHz, 80 MHz, 160 MHz, and 320 MHz bandwidths, corresponding MRU patterns have been defined in the standard. However, a new large bandwidth (for example, 640 MHz or 480 MHz) may emerge in future standards, and an MRU pattern in the large bandwidth needs to be designed in a new manner.

### SUMMARY

Embodiments of this application provide a communication method, to design an MRU pattern for a large bandwidth (for example, 640 MHz or 480 MHz) that may emerge in a future Wi-Fi standard, to meet OFDMA transmission in a future large-bandwidth scenario.

According to a first aspect, a communication method is provided. The method may be performed by an access point or a station, or may be performed by a circuit configured in the access point or the station. This is not limited in this application.

The communication method includes: A first device communicates with a second device based on a frequency resource, where the frequency resource includes a multiple resource unit MRU, the MRU includes a k×996+m×484-tone MRU, k is an integer greater than or equal to 4, and m is equal to 0 or 1.

Based on the foregoing technical solution, the devices may communicate with each other by using the MRU, and a size of the MRU may be a k×996+m×484-tone MRU, where k is an integer greater than or equal to 4, and m is equal to 0 or 1. The MRU in this technical solution is different from an MRU type defined in an existing standard. A small-size MRU defined in the existing standard includes two types: a 52+26-tone MRU and a 106+26-tone MRU, and a large-size MRU type includes a 484+242-tone MRU, a 996+484-tone MRU, a 996+484+242-tone MRU, a 2×996+484-tone MRU, a 3×996-tone MRU, and a 3×996+484-tone MRU, which are MRUs designed for a bandwidth less than or equal to 320 MHz. In this solution, an indicated MRU type is k×996+m×484, indicates an MRU pattern designed for an ultra-320 MHz bandwidth, and may indicate an MRU pattern in a next-generation WLAN ultra-large bandwidth (for example, 640 MHz or 480 MHz), to meet OFDMA transmission in a future large-bandwidth scenario. Herein, k is an integer greater than or equal to 4, and m is equal to 0 or 1.

With reference to the first aspect, in some implementations of the first aspect, the frequency resource further includes a resource unit RU, and the RU includes at least one of a 484-tone RU, a 996-tone RU, a 2×996-tone RU, and a 4×996-tone RU.

Based on the foregoing technical solution, in the future large-bandwidth scenario, devices may communicate with each other by using a large-size RU and MRU. Specifically, specific forms of the RU include at least one of the 484-tone RU, the 996-tone RU, the 2×996-tone RU, and the 4×996-tone RU, and a specific form of the MRU includes the k×996+m×484-tone MRU. In this technical solution, the RU and the MRU may be further compatible with RU and MRU types defined after an OFDMA technology is introduced in the existing 802.11be standard. For example, the RU may further include a 242-tone RU. For another example, the MRU may further include a k1×996+m×484-tone MRU (for example, a 3×996-tone MRU and a 3×996+484-tone MRU), where k1 is a positive integer less than 4, and m is equal to 0 or 1.

With reference to the first aspect, in some implementations of the first aspect, the MRU is a part of a frequency resource in a 640 MHz bandwidth, and the MRU includes at least one of the following: a 7×996-tone MRU, a 6×996-tone MRU, a 5×996-tone MRU, a 7×996+484-tone MRU, a 6×996+484-tone MRU, a 5×996+484-tone MRU, and a 4×996+484-tone MRU.

Based on the foregoing technical solution, if an MRU occupied for communication between devices is a part of the frequency resource in the 640 MHz bandwidth, the MRU includes at least one of the 7×996-tone MRU, the 6×996-tone MRU, the 5×996-tone MRU, the 7×996+484-tone MRU, the 6×996+484-tone MRU, the 5×996+484-tone MRU, and the 4×996+484-tone MRU, and a plurality of stations may jointly use the 640 MHz bandwidth by using the OFDMA technology, to improve solution flexibility.

With reference to the first aspect, in some implementations of the first aspect, if no 40 MHz subchannel is punctured in the 640 MHz bandwidth, the MRU includes at least one of the following: the 7×996-tone MRU, the 6×996-tone MRU, and the 5×996-tone MRU; or if a punctured subchannel in the 640 MHz bandwidth includes one 40 MHz subchannel, the MRU includes at least one of the following: the 7×996+484-tone MRU, the 6×996+484-tone MRU, the 5×996+484-tone MRU, and the 4×996+484-tone MRU.

Based on the foregoing technical solution, two different MRU mode design solutions are provided by using whether to disregard the punctured 40 MHz (or a 484-tone RU) subchannel as a criterion. In the solution in which no punctured 40 MHz subchannel is disregarded, a simplified solution based on double extension of an MRU mode for 320 MHz (for example, the 7×996-tone MRU, the 6×996-tone MRU, the 5×996-tone MRU) is provided. In the solution in which the punctured 40 MHz subchannel is disregarded, a more refined MRU mode design solution for 640 MHz (for example, the 7×996+484-tone MRU, the 6×996+484-tone MRU, the 5×996+484-tone MRU, and the 4×996+484-tone MRU) is provided.

With reference to the first aspect, in some implementations of the first aspect, if one 80 MHz subchannel is punctured in the 640 MHz bandwidth, the MRU includes the 7×996-tone MRU; if one 160 MHz subchannel is punctured in the 640 MHz bandwidth, the MRU includes the 6×996-tone MRU; if one 160 MHz subchannel and one 80 MHz subchannel are punctured in the 640 MHz bandwidth, the MRU includes the 5 ×996-tone MRU, and the punctured 160 MHz subchannel is 160 MHz with a lowest or highest frequency in the 640 MHz bandwidth; if one 40 MHz subchannel is punctured in the 640 MHz bandwidth, the MRU includes the 7×996+484-tone MRU; if one 80 MHz subchannel and one 40 MHz subchannel are punctured in the 640 MHz bandwidth, the MRU includes the 6×996+484-tone MRU, and the punctured 80 MHz subchannel is 80 MHz with a lowest or highest frequency in the 640 MHz bandwidth; if one 160 MHz subchannel and one 40 MHz subchannel are punctured in the 640 MHz bandwidth, the MRU includes the 5×996+484-tone MRU, and the punctured 160 MHz subchannel is 160 MHz with a lowest or highest frequency in the 640 MHz bandwidth; or if one 160 MHz subchannel, one 80 MHz subchannel, and one 40 MHz subchannel are punctured in the 640 MHz bandwidth, the MRU includes the 4×996+484-tone MRU, the punctured 160 MHz subchannel is 160 MHz with a lowest or highest frequency in the 640 MHz bandwidth, and the punctured 80 MHz subchannel is 80 MHz with a lowest or highest frequency in a remaining 480 MHz bandwidth after the 160 MHz subchannel is punctured in the 640 MHz bandwidth.

Based on the foregoing technical solution, subchannels of different bandwidths and different numbers (for example, at least one of the 40 MHz, 80 MHz, and 160 MHz subchannels) may be punctured in the 640 MHz bandwidth, to implement more flexible spectrum resource utilization.

With reference to the first aspect, in some implementations of the first aspect, the MRU is a part of a frequency resource in a 480 MHz bandwidth, and the MRU includes at least one of the following: a 5×996+484-tone MRU, a 5×996-tone MRU, a 4×996+484-tone MRU, and a 4×996-tone MRU.

Based on the foregoing technical solution, if an MRU occupied for communication between devices is a part of the frequency resource in the 480 MHz bandwidth, the MRU includes at least one of the 5×996+484-tone MRU, the 5×996-tone MRU, the 4×996+484-tone MRU, and the 4×996-tone MRU, and a plurality of stations may jointly use the 480 MHz bandwidth by using the OFDMA technology, to improve solution flexibility.

With reference to the first aspect, in some implementations of the first aspect, if an MRU corresponding to the 480 MHz bandwidth reuses an MRU corresponding to a 640 MHz bandwidth, the MRU corresponding to the 480 MHz bandwidth includes at least one of a 5×996+484-tone MRU, a 5×996-tone MRU, and a 4×996+484-tone MRU of the 640 MHz bandwidth; or if an MRU corresponding to the 480 MHz bandwidth does not reuse any part of an MRU in a 640 MHz bandwidth, the MRU corresponding to the 480 MHz bandwidth is generated for a 480 MHz physical layer protocol data unit PPDU.

Based on the foregoing technical solution, two different MRU mode design solutions for the 480 MHz bandwidth are provided by using whether a part of the MRU corresponding to the 640 MHz bandwidth is reused as a criterion. In the solution in which the MRU corresponding to the 640 MHz bandwidth is reused, a simple reuse solution (for example, at least one of the 5×996+484-tone MRU, the 5×996-tone MRU, and the 4×996+484-tone MRU of the 640 MHz bandwidth) is provided. In the solution in which the MRU corresponding to the 640 MHz bandwidth is not reused, an MRU mode design solution for the 480 MHz PPDU is provided.

With reference to the first aspect, in some implementations of the first aspect, if one 40 MHz subchannel is punctured in the 480 MHz bandwidth, the MRU includes the 5×996+484-tone MRU; if one 80 MHz subchannel is punctured in the 480 MHz bandwidth, the MRU includes the 5×996-tone MRU; if one 80 MHz subchannel and one 40 MHz subchannel are punctured in the 480 MHz bandwidth, the MRU includes the 4×996+484-tone MRU, and the punctured 80 MHz subchannel is 80 MHz with a lowest or highest frequency in the 480 MHz bandwidth; or if one 160 MHz subchannel is punctured in the 480 MHz bandwidth, the MRU includes the 4×996-tone MRU.

Based on the foregoing technical solution, subchannels of different bandwidths and different numbers (for example, the 40 MHz, 80 MHz, and 160 MHz subchannels) may be punctured in the 480 MHz bandwidth, to implement more flexible spectrum resource utilization.

With reference to the first aspect, in some implementations of the first aspect, the method further includes: The first device determines the frequency resource based on a resource allocation field, where the resource allocation field includes information indicating the MRU, and when a value range of the resource allocation field is greater than or equal to 304, the resource allocation field indicates the MRU.

With reference to the first aspect, in some implementations of the first aspect, when the value range of the resource allocation field is greater than or equal to 0 and less than or equal to 303, the resource allocation field indicates an MRU corresponding to a bandwidth less than or equal to 320 MHz.

With reference to the first aspect, in some implementations of the first aspect, the resource allocation field further includes information indicating a resource unit RU, and when the value range of the resource allocation field is greater than or equal to 304, the resource allocation field indicates the RU, and the RU includes at least one of a 484-tone RU, a 996-tone RU, a 2×996-tone RU, and a 4×996-tone RU.

With reference to the first aspect, in some implementations of the first aspect, the resource allocation field is X bits, and X is an integer greater than or equal to 9.

Based on the foregoing technical solution, the resource indication information may use an unused information segment in the resource allocation field defined in an existing protocol, or a function of indicating a frequency resource by using the resource indication information may be implemented by extending the resource allocation field defined in the existing protocol, to improve solution compatibility.

With reference to the first aspect, in some implementations of the first aspect, the frequency resource is a part of a frequency resource in a 2×P MHz bandwidth, P is greater than 160, and the method further includes: The first device determines the frequency resource based on a resource allocation field and a combination field.

With reference to the first aspect, in some implementations of the first aspect, the resource allocation field includes information indicating an MRU corresponding to a P MHz bandwidth, and the combination field indicates whether a first resource block on a left side of a direct current (Direct current, DC) subcarrier in the 2×P MHz and a second resource block on a right side of the direct current subcarrier are combined.

With reference to the first aspect, in some implementations of the first aspect, if the combination field indicates that the first resource block and the second resource block are not combined, the first resource block and the second resource block are separately allocated to different stations; or if the combination field indicates that the first resource block and the second resource block are combined, the first resource block and the second resource block are allocated to a same station.

Based on the foregoing technical solution, the combination field may be a field indicating whether the first resource block on the left side of the direct current subcarrier in the bandwidth and the second resource block on the right side of the direct current subcarrier are combined, to indicate whether to allocate the first resource block and the second resource block to a same station. Compared with the foregoing manner in which the frequency resource is indicated by the resource allocation field, the manner in which the combination field is used together with the resource allocation field is simpler and more efficient because information included in a table corresponding to the resource allocation field is much less than information included in a table corresponding to the resource allocation field in the second aspect.

With reference to the first aspect, in some implementations of the first aspect, the first resource block includes any one of the following: a 1^{st} adjacent RU on the left side of the direct current subcarrier in the bandwidth, a 1^{st} adjacent MRU on the left side of the direct current subcarrier in the bandwidth, a 2^{nd} adjacent RU on the left side of the direct current subcarrier in the bandwidth, or a 2^{nd} adjacent MRU on the left side of the direct current subcarrier in the bandwidth; and the second resource block includes any one of the following: a 1^{st} adjacent RU on the right side of the direct current subcarrier in the bandwidth, a 1^{st} adjacent MRU on the right side of the direct current subcarrier in the bandwidth, a 2^{nd} adjacent RU on the right side of the direct current subcarrier in the bandwidth, or a 2^{nd} adjacent MRU on the right side of the direct current subcarrier in the bandwidth.

According to a second aspect, a communication method is provided. The method may be performed by an access point, or may be performed by a circuit configured in the access point. This is not limited in this application. For convenience, the following uses an example in which the method is performed by the access point for description.

The communication method includes: The access point generates a physical layer protocol data unit (physical layer protocol data unit, PPDU), where the PPDU includes a resource allocation field, the resource allocation field indicates an allocation status of a frequency resource of a station, and the frequency resource includes a multiple resource unit MRU; and the access point sends the PPDU to a station, where when a value range of the resource allocation field is greater than or equal to 304, the resource allocation field indicates an MRU corresponding to a bandwidth greater than 320 MHz.

Based on the foregoing technical solution, the PPDU sent by the access point to the station includes the resource allocation field, where the resource allocation field may indicate the allocation status of the frequency resource, and the frequency resource includes the MRU. Specifically, when the value range of the resource allocation field is greater than or equal to 304, the resource allocation field indicates an MRU corresponding to a bandwidth greater than 320 MHz. In this solution, the resource allocation field is added with a new indication of an MRU corresponding to a bandwidth greater than 320 MHz, and may indicate an MRU pattern in a next-generation WLAN ultra-large bandwidth (for example, 640 MHz or 480 MHz), to meet OFDMA transmission in a future large-bandwidth scenario.

With reference to the second aspect, in some implementations of the second aspect, when the value range of the resource allocation field is greater than or equal to 0 and less than or equal to 303, the resource allocation field indicates an MRU corresponding to a bandwidth less than or equal to 320 MHz.

With reference to the second aspect, in some implementations of the second aspect, the frequency resource further includes a resource unit RU, and when the value range of the resource allocation field is greater than or equal to 304, the resource allocation field indicates the RU, and the RU includes at least one of a 484-tone RU, a 996-tone RU, a 2×996-tone RU, and a 4×996-tone RU.

Based on the foregoing technical solution, the resource allocation field may further indicate the RU. Specifically, specific forms of the RU include at least one of the 484-tone RU, the 996-tone RU, the 2×996-tone RU, and the 4×996-tone RU.

With reference to the second aspect, in some implementations of the second aspect, the resource allocation field is X bits, and X is an integer greater than or equal to 9.

Based on the foregoing technical solution, the resource indication information may use an unused information segment in the resource allocation field defined in an existing protocol, or a function of indicating a frequency resource by using the resource indication information may be implemented by extending the resource allocation field defined in the existing protocol, to improve solution compatibility.

According to a third aspect, a communication method is provided. The method may be performed by a station, or may be performed by a circuit configured in the station. This is not limited in this application. For convenience, the following uses an example in which the method is performed by the station for description.

The communication method includes: A station receives a PPDU from an access point, where the PPDU includes a resource allocation field, the resource allocation field indicates an allocation status of a frequency resource of the station, and the frequency resource includes a multiple resource unit MRU; and the station determines an allocated frequency resource based on the resource indication information, where when a value range of the resource allocation field is greater than or equal to 304, the resource allocation field indicates an MRU corresponding to a bandwidth greater than 320 MHz. For descriptions related to the frequency resource and the resource allocation field, refer to the second aspect. Details are not described herein again.

With reference to the third aspect, in some implementations of the third aspect, the method further includes: The station sends information to the access point on the allocated frequency resource; or the station receives data from the access point on the allocated frequency resource.

For technical effect of the method described in the third aspect, refer to the technical effect in the second aspect and the possible designs of the second aspect.

According to a fourth aspect, a communication method is provided. The method may be performed by an access point, or may be performed by a circuit configured in the access point. This is not limited in this application. For convenience, the following uses an example in which the method is performed by the access point for description.

The communication method includes: An access point generates a physical layer protocol data unit PPDU, where the PPDU includes a resource allocation field and a combination field, and the resource allocation field and the combination field indicate an allocation status of a frequency resource of a station; and the access point sends the PPDU to the station.

Based on the foregoing technical solution, the PPDU sent by the access point to the station includes the resource allocation field and the combination field, and the resource allocation field and the combination field may indicate the allocation status of the frequency resource of the station.

With reference to the fourth aspect, in some implementations of the fourth aspect, the resource allocation field includes information indicating an MRU corresponding to a P MHz bandwidth, P is greater than 160, and the combination field indicates whether a first resource block on a left side of a direct current subcarrier in the 2×P MHz and a second resource block on a right side of the direct current subcarrier are combined.

Specifically, the resource allocation field includes the information indicating the MRU corresponding to the P MHz bandwidth, the combination field indicates whether the first resource block on the left side of the direct current subcarrier in the 2×P MHz and the second resource block on the right side of the direct current subcarrier are combined, and the 2×P MHz bandwidth is greater than a 320 MHz bandwidth. In this solution, the resource allocation field and the combination field may indicate an MRU corresponding to a bandwidth greater than 320 MHz, and may indicate an MRU pattern in a next-generation WLAN ultra-large bandwidth (for example, 640 MHz or 480 MHz), to meet OFDMA transmission in a future large-bandwidth scenario.

In addition, compared with the foregoing manner in which the frequency resource is indicated by the resource allocation field, the manner in which the combination field is used together with the resource allocation field is simpler and more efficient because information included in a table corresponding to the resource allocation field is much less than information included in a table corresponding to the resource allocation field in the second aspect.

With reference to the fourth aspect, in some implementations of the fourth aspect, if the combination field indicates that the first resource block and the second resource block are not combined, the first resource block and the second resource block are separately allocated to different stations; or if the combination field indicates that the first resource block and the second resource block are combined, the first resource block and the second resource block are allocated to a same station.

With reference to the fourth aspect, in some implementations of the fourth aspect, the frequency resource further includes a multiple resource unit MRU.

With reference to the fourth aspect, in some implementations of the fourth aspect, the frequency resource further includes a resource unit RU, and the RU includes at least one of a 484-tone RU, a 996-tone RU, a 2×996-tone RU, and a 4×996-tone RU.

With reference to the fourth aspect, in some implementations of the fourth aspect, the first resource block includes any one of the following: a 1^{st} adjacent RU on the left side of the direct current subcarrier in the bandwidth, a 1^{st} adjacent MRU on the left side of the direct current subcarrier in the bandwidth, a 2^{nd} adjacent RU on the left side of the direct current subcarrier in the bandwidth, or a 2^{nd} adjacent MRU on the left side of the direct current subcarrier in the bandwidth; and the second resource block includes any one of the following: a 1^{st} adjacent RU on the right side of the direct current subcarrier in the bandwidth, a 1^{st} adjacent MRU on the right side of the direct current subcarrier in the bandwidth, a 2^{nd} adjacent RU on the right side of the direct current subcarrier in the bandwidth, or a 2^{nd} adjacent MRU on the right side of the direct current subcarrier in the bandwidth.

According to a fifth aspect, a communication method is provided. The method may be performed by a station, or may be performed by a circuit configured in the station. This is not limited in this application. For convenience, the following uses an example in which the method is performed by the station for description.

The communication method includes: A station receives a PPDU from an access point, where the PPDU includes a resource allocation field and a combination field, and the resource allocation field and the combination field indicate an allocation status of a frequency resource of the station; and the station determines an allocated frequency resource based on the resource indication information. For descriptions related to the frequency resource, a first resource block, and a second resource block, refer to the fourth aspect. Details are not described herein again.

With reference to the fifth aspect, in some implementations of the fifth aspect, the method further includes: The station sends information to the access point on the allocated frequency resource; or the station receives data from the access point on the allocated frequency resource.

For technical effect of the method described in the fifth aspect, refer to the technical effect in the fourth aspect and the possible designs of the fourth aspect.

According to a sixth aspect, a communication apparatus is provided, to implement the method described in the first aspect. The apparatus includes:
a transceiver module, configured to communicate with a second device based on a frequency resource, where the frequency resource includes a multiple resource unit MRU, the MRU includes a k×996+m×484-tone MRU, k is an integer greater than or equal to 4, and m is equal to 0 or 1.

For example, the transceiver module communicates with the second device by using a frequency resource in a 640 MHz bandwidth, or the transceiver module communicates with the second device by using a frequency resource in a 480 MHz bandwidth.

For technical effect of the apparatus shown in the sixth aspect, refer to the technical effect in the first aspect and the possible designs of the first aspect.

According to a seventh aspect, a communication apparatus is provided, to implement the method described in the second aspect. The apparatus includes: a processing module, configured to generate a PPDU, where the PPDU includes a resource allocation field, the resource allocation field indicates an allocation status of a frequency resource of a station, and the frequency resource includes a multiple resource unit MRU. The access point sends the PPDU to the station, where when a value range of the resource allocation field is greater than or equal to 304, the resource allocation field indicates an MRU corresponding to a bandwidth greater than 320 MHz.

For example, the transceiver module sends the PPDU to the station by using a 640 MHz bandwidth, or the transceiver module sends the PPDU to the station by using a 480 MHz bandwidth.

For technical effect of the apparatus shown in the seventh aspect, refer to the technical effect in the second aspect and the possible designs of the second aspect.

According to an eighth aspect, a communication apparatus is provided, configured to implement the method described in the third aspect. The apparatus includes:
a transceiver module, configured to receive a PPDU from an access point, where the PPDU includes a resource allocation field, the resource allocation field indicates an allocation status of a frequency resource of a station, and the frequency resource includes a multiple resource unit MRU; and a processing module, configured to determine an allocated frequency resource based on the resource indication information, where when a value range of the resource allocation field is greater than or equal to 304, the resource allocation field indicates an MRU corresponding to a bandwidth greater than 320 MHz.

With reference to the eighth aspect, in some implementations of the eighth aspect, the transceiver module is further configured to: send information to the access point on the allocated frequency resource; or receive data from the access point on the allocated frequency resource.

For example, the transceiver module receives data from an RU or an MRU of a 640 MHz bandwidth from the access point, or the transceiver module receives data from an RU or an MRU of a 480 MHz bandwidth from the access point.

For technical effect of the apparatus shown in the eighth aspect, refer to the technical effect in the third aspect and the possible designs of the third aspect.

According to a ninth aspect, a communication apparatus is provided, configured to implement the method described in the fourth aspect. The apparatus includes: a processing module, configured to generate a PPDU, where the PPDU includes a resource allocation field and a combination field, and the resource allocation field and the combination field indicate an allocation status of a frequency resource of a station; and a transceiver module, configured to send the PPDU to the station.

For example, the transceiver module sends the PPDU to the station by using a 640 MHz bandwidth, or the transceiver module sends the PPDU to the station by using a 480 MHz bandwidth.

For technical effect of the apparatus shown in the ninth aspect, refer to the technical effect in the fourth aspect and the possible designs of the fourth aspect.

According to a tenth aspect, a communication apparatus is provided, configured to implement the method described in the fifth aspect. The apparatus includes:
a transceiver module, configured to receive a PPDU from an access point, where the PPDU includes a resource allocation field and a combination field, and the resource allocation field and the combination field indicate an allocation status of a frequency resource of a station; and a processing module, configured to determine an allocated frequency resource based on the resource indication information.

With reference to the tenth aspect, in some implementations of the tenth aspect, the transceiver module is further configured to: send information to the access point on the allocated frequency resource; or receive data from the access point on the allocated frequency resource.

For example, the transceiver module receives data from an RU or an MRU of a 640 MHz bandwidth from the access point, or the transceiver module receives data from an RU or an MRU of a 480 MHz bandwidth from the access point.

For technical effect of the apparatus shown in the tenth aspect, refer to the technical effect in the fifth aspect and the possible designs of the fifth aspect.

For MRU modes designed for the 640 MHz bandwidth or the 480 MHz bandwidth in the second aspect to the tenth aspect, refer to the descriptions of the MRU mode designed for the 640 MHz bandwidth or the 480 MHz bandwidth in the first aspect. Details are not described herein again.

According to an eleventh aspect, a communication system is provided, including an access point and a station. The access point is configured to perform the method described in the first aspect; or the station performs the method described in the first aspect; or the access point is configured to perform the method described in the second aspect, and the station performs the method described in the third aspect; or the access point is configured to perform the method described in the fourth aspect, and the station performs the method described in the fifth aspect.

According to a twelfth aspect, a communication apparatus is provided. The apparatus includes: a memory, configured to store a program; and a processor, configured to execute the program stored in the memory. When the program stored in the memory is executed, the processor is configured to perform the methods provided in the foregoing aspects.

According to a thirteenth aspect, this application provides a processor, configured to perform the methods provided in the foregoing aspects. In a process of performing these methods, a process of sending the foregoing information and a process of obtaining/receiving the foregoing information in the foregoing methods may be understood as a process of outputting the foregoing information by the processor and a process of receiving the foregoing inputted information by the processor. When outputting the information, the processor outputs the information to a transceiver, so that the transceiver transmits the information. After the information is output by the processor, other processing may further need to be performed on the information before the information arrives at the transceiver. Similarly, when the processor receives the input information, the transceiver obtains/receives the information, and inputs the information into the processor. Further, after the transceiver receives the information, other processing may need to be performed on the information before the information is input into the processor.

According to the foregoing principle, for example, receiving a request message as mentioned in the foregoing methods may be understood as receiving input information by the processor.

Unless otherwise specified, or if operations such as transmitting, sending, and obtaining/receiving related to the processor do not contradict an actual function or internal logic of the operations in related descriptions, all the operations may be more generally understood as operations such as outputting, receiving, and inputting of the processor, instead of operations of transmitting, sending, and receiving directly performed by a radio frequency circuit and an antenna.

In an implementation process, the processor may be a processor specially configured to perform these methods, or a processor, for example, a general-purpose processor, that executes computer instructions in the memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

According to a fourteenth aspect, a computer-readable storage medium is provided. The computer-readable medium stores program code executed by a device, and the program code includes the methods provided in the foregoing aspects.

According to a fifteenth aspect, a computer program product including instructions is provided. When the computer program product runs on a computer, the computer is enabled to perform the methods provided in the foregoing aspects.

According to a sixteenth aspect, a chip is provided. The chip includes a processor and a communication interface, and the processor reads, through the communication interface, instructions stored in a memory, to perform the methods provided in the foregoing aspects.

Optionally, in an implementation, the chip may further include the memory. The memory stores the instructions. The processor is configured to execute the instructions stored in the memory. When the instructions are executed, the processor is configured to perform the methods provided in the foregoing aspects.

### BRIEF DESCRIPTION OF DRAWINGS

FIG. 1 is a diagram of an application scenario to which an embodiment of this application is applicable;
FIG. 2 shows a communication apparatus according to this application;
FIG. 3 is a diagram of a corresponding MRU pattern in an 80 MHz bandwidth;
FIG. 4 is a diagram of division of a 6 GHz frequency band;
FIG. 5 is a diagram of a PPDU format;
FIG. 6 is a diagram of a frequency resource allocation indication;
FIG. 7 is a diagram of an MRU change when a bandwidth is doubled from 160 MHz to 320 MHz according to an embodiment of this application;
FIG. 8A to FIG. 8C are another diagram of an MRU change when a bandwidth is doubled from 160 MHz to 320 MHz according to an embodiment of this application;
FIG. 9 is a schematic flowchart of a communication method according to an embodiment of this application;
FIG. 10(a) to FIG. 10(g)-2 are diagrams of several MRUs when a bandwidth is 640 MHz according to an embodiment of this application;
FIG. 11(a) to FIG. 11(c)-2 are a diagram of an MRU change when a bandwidth is doubled from 320 MHz to 640 MHz according to an embodiment of this application;
FIG. 12(a) to FIG. 12(c)-2 are diagrams of reusing a part of an MRU in 640 MHz for an MRU corresponding to a 480 MHz bandwidth according to an embodiment of this application;
FIG. 13 is a diagram in which an MRU corresponding to a 480 MHz bandwidth cannot reuse a part of an MRU in 640 MHz according to an embodiment of this application;
FIG. 14(a) to FIG. 14(d) are diagrams of MRU modes designed for a 480 MHz bandwidth according to an embodiment of this application;
FIG. 15 is a diagram of determining logic of how to determine an MRU mode according to an embodiment of this application;
FIG. 16 is a schematic flowchart of another communication method according to an embodiment of this application;
FIG. 17 is a block diagram of a communication apparatus according to an embodiment of this application;
FIG. 18 is a diagram of another communication apparatus according to an embodiment of this application; and
FIG. 19 is a diagram of a chip system according to an embodiment of this application.

### DESCRIPTION OF EMBODIMENTS

The following describes technical solutions of this application with reference to accompanying drawings.

The technical solutions provided in embodiments of this application are applicable to a wireless local area network (wireless local area network, WLAN) scenario, for example, support related institute of electrical and electronics engineers (institute of electrical and electronics engineers, IEEE) 802.11 standards, such as the 802.11a/b/g standard, the 802.11n standard, the 802.11ac standard, the 802.11ax standard, and a next-generation Wi-Fi protocol of IEEE 802.11ax, for example, 802.11be, Wi-Fi 7, extremely high throughput (extremely high throughput, EHT), 802.11ad, 802.11ay, or 802.11bf, or for another example, a next generation of 802.11be like Wi-Fi 8; may be further applied to an ultra-wideband (ultra-wideband, UWB)-based wireless personal area network system, for example, 802.15 series standards; and may be further applied to a sensing (sensing) system, for example, 802.11bf series standards. The 802.11n standard is referred to as high throughput (high throughput, HT), the 802.11ac standard is referred to as a very high throughput (very high throughput, VHT) standard, the 802.11ax standard is referred to as a high efficient (high efficient, HE) standard, and the 802.11be standard is referred to as an extremely high throughput (extremely high throughput, EHT) standard. 802.11bf includes two major categories of standards: a low-frequency (for example, sub-7 GHz) standard and a high-frequency (for example, 60 GHz) standard. An implementation of sub-7 GHz mainly depends on 802.11ac, 802.11ax, 802.11be, and a next-generation standard. An implementation of 60 GHz mainly depends on 802.11ad, 802.11ay, and a next-generation standard. 802.11ad may also be referred to as a directional multi-gigabit (directional multi-gigabit, DMG) standard, and 802.11ay may also be referred to as an enhanced directional multi-gigabit (enhanced directional multi-gigabit, EDMG) standard.

Although embodiments of this application are mainly described by using an example in which a WLAN network is deployed, especially a network to which the IEEE 802.11 system standards are applied, a person skilled in the art easily understands that various aspects in embodiments of this application may be extended to other networks that use various standards or protocols, for example, a high performance radio local area network (high performance radio local area network, HIPERLAN), a wireless wide area network (wireless wide area network, WWAN), a wireless personal area network (wireless personal area network, WPAN), or other networks that are known or developed in the future. Therefore, regardless of a used coverage area and a used wireless access protocol, the various aspects provided in embodiments of this application are applicable to any suitable wireless network.

The technical solutions in embodiments of this application may be further applied to various communication systems, for example, a WLAN communication system, a wireless fidelity (wireless fidelity, Wi-Fi) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or new radio (new radio, NR), a future 6th generation (6th generation, 6G) system, an internet of things (internet of things, IoT) network, or vehicle-to-everything (vehicle-to-x, V2X).

The communication systems applicable to this application are merely examples for description, and the communication systems applicable to this application are not limited thereto. This is described herein once for all, and details are not described below again.

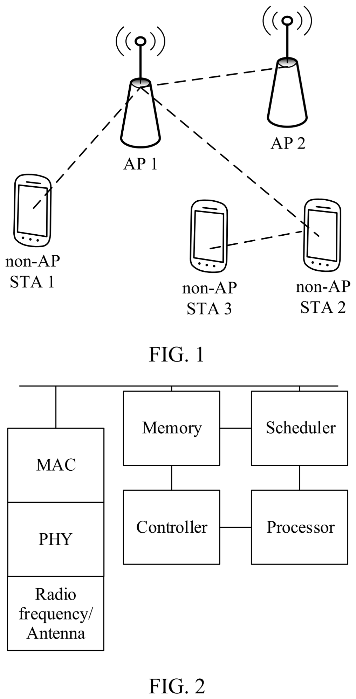

FIG. 1 is a diagram of an application scenario to which an embodiment of this application is applicable. As shown in FIG. 1, a communication method provided in this application is applicable to data communication between an access point (access point, AP) and a station (station, STA). The station may be a non-access point station (non-access point station, non-AP STA), which is referred to as a non-AP station or a STA for short. Specifically, the solutions of this application are applicable to data communication between an AP and one or more non-AP stations (for example, data communication between an AP 1 and a non-AP STA 1 and a non-AP STA 2), and are also applicable to data communication between APs (for example, data communication between the AP 1 and an AP 2) and data communication between non-AP STAs (for example, data communication between the non-AP STA 2 and a non-AP STA 3).

The access point may be a node through which a terminal (for example, a mobile phone) accesses a wired (or wireless) network, and is mainly deployed at home, in a building, or on a campus, with a typical coverage radius ranging from tens of meters to more than 100 meters, or certainly, may be deployed outdoors. The access point is equivalent to a bridge that connects the wired network and the wireless network. The access point is mainly used to connect various wireless network clients together and then connect the wireless network to the Ethernet.

Specifically, the access point may be a terminal or a network device with a Wi-Fi chip. The network device may be a server, a router, a switch, a bridge, a computer, a mobile phone, a relay station, a vehicle-mounted device, a wearable device, a network device in a 5G network, a network device in a 6G network, a network device in a public land mobile network (public land mobile network, PLMN), or the like. This is not limited in embodiments of this application. The access point may be a device that supports a Wi-Fi standard. For example, the access point may alternatively support one or more of the following IEEE 802.11 series standards: 802.11a, 802.1 1b, 802.11g, 802.11n, 802.11ac, 802.11ax, 802.11be, 802.11ad, and 802.11ay.

The non-AP station may be a wireless communication chip, a wireless sensor, a wireless communication terminal, or the like, and may also be referred to as a user, user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The non-AP station may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, an internet of things device, a wearable device, a terminal device in a 5G network, a terminal device in a 6G network, a terminal device in a PLMN, or the like. This is not limited in embodiments of this application. The non-AP station may be a device that supports a WLAN standard. For example, the non-AP station may support one or more of the following IEEE 802.11 series standards: 802.11a, 802.11b, 802.11g, 802.11n, 802.11ac, 802.11ax, 802.11be, 802.11ad, and 802.11ay.

For example, the non-AP station may be a mobile phone, a tablet computer, a set-top box, a smart television, a smart wearable device, a vehicle-mounted communication device, a computer, an internet of things (internet of things, IoT) node, a sensor, a smart home device like a smart camera, a smart remote control, or a smart water/electricity meter, or a sensor in a smart city.

The AP or the non-AP station may include a transmitter, a receiver, a memory, a processor, and the like. The transmitter and the receiver are respectively configured to send and receive packet structures. The memory is configured to store signaling information, store a preset value that is pre-agreed-upon, and the like. The processor is configured to parse the signaling information, process related data, and the like.

For example, FIG. 2 shows a communication apparatus according to this application. The apparatus shown in FIG. 2 may be an AP or a non-AP station. A medium access control (medium access control, MAC) layer processing module, a physical (physical, PHY) layer processing module, a radio frequency/antenna, and the like are configured to implement related functions of the foregoing transmitter and receiver. As shown in FIG. 2, in addition to the MAC layer processing module, the PHY layer processing module, the radio frequency/antenna, a memory, and a processor, the apparatus may further include a controller and a scheduler.

It should be understood that FIG. 2 shows merely an example of an apparatus provided in this application, and does not constitute a limitation on this application. For example, the apparatus may alternatively not include the controller and/or the scheduler.

For ease of understanding of the technical solutions in embodiments of this application, some terms or concepts that may be used in embodiments of this application are first briefly described.

1. Resource unit (Resource Unit, RU): The introduction of an OFDMA technology to the 802.11ax standard allows one bandwidth to be divided into a plurality of RUs, which may be 26-tone RUs, 52-tone RUs, 106-tone RUs, 242-tone RUs, 484-tone RUs, 996-tone RUs, 2×996-tone RUs, and the like. Each RU may be allocated to one user, to implement more refined division of spectrum resources, so as to implement more flexible frequency resource scheduling.

There are two types of RUs in the standard: a large-size RU and a small-size RU. An RU greater than or equal to the 242-tone RU (a 20 MHz bandwidth) is referred to as a large-size RU, and an RU smaller than the 242-tone RU is referred to as a small-size RU.

2. Multiple resource unit (Multiple Resource Unit, MRU): In the 802.11be standard, a new frequency resource unit, namely, the MRU, is defined. A plurality of RUs are allowed to be allocated to a same user, to implement more flexible frequency resource allocation. An MRU formed by combining large-size RUs is a referred to as large-size MRU, and an MRU formed by combining small-size RUs is referred to as a small-size MRU.

In the existing standard, there are two types of small-size MRUs: a 52+26-tone MRU and a 106+26-tone MRU. In the existing standard, large-size MRU types include a 484+242-tone MRU, a 996+484-tone MRU, a 996+484+242-tone MRU, a 2×996+484-tone MRU, a 3×996-tone MRU, and 3×996+484-tone MRU.

For different bandwidths, such as 20 MHz, 40 MHz, 80 MHz, 160 MHz, and 320 MHz bandwidths, corresponding MRU patterns have been defined in the standard.

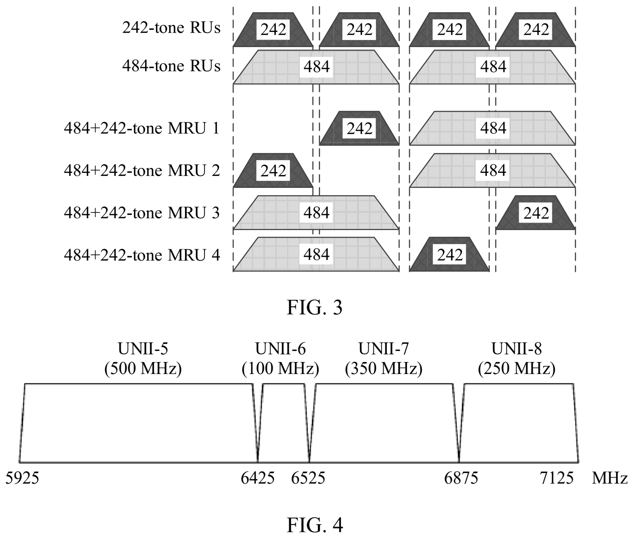

For example, a 484+242-tone MRU pattern in the 80 MHz bandwidth in the 802.11be standard is shown in FIG. 3, and the 484+242-tone MRU pattern includes four MRU patterns in total: a 484+242-tone MRU 1, a 484+242-tone MRU 2, a 484+242-tone MRU 3, and a 484+242-tone MRU 4 shown in FIG. 3.

3. Possible future bandwidth: In a future WLAN standard, if a larger bandwidth emerges, the larger bandwidth is more likely to exist in a 6 GHz frequency band. This is because 6 GHz is a new spectrum and has a larger bandwidth compared with 2.4 GHz and 5 GHz frequency bands. As shown in FIG. 4, there are four frequency bands UNII-5, 6, 7, and 8 in the 6 GHz frequency band. However, many countries and regions, such as the European Union and Hong Kong (China), have only a 500 MHz bandwidth in UNII-5. A large bandwidth that may emerge in a future standard may include but is not limited to two cases: 480 MHz and 640 MHz. Currently, a maximum bandwidth in an existing standard is 320 MHz, and a new bandwidth usually emerges in a form of doubling (for example, 2×320 MHz=640 MHz) or adding a half (for example, 320 MHz+160 MHz=480 MHz). Therefore, a future possible bandwidth form defined in this application includes but is not limited to two bandwidths: 480 MHz and 640 MHz. For ease of description, in the following embodiments, two bandwidths 480 MHz and 640 MHz are mainly used as examples for description.

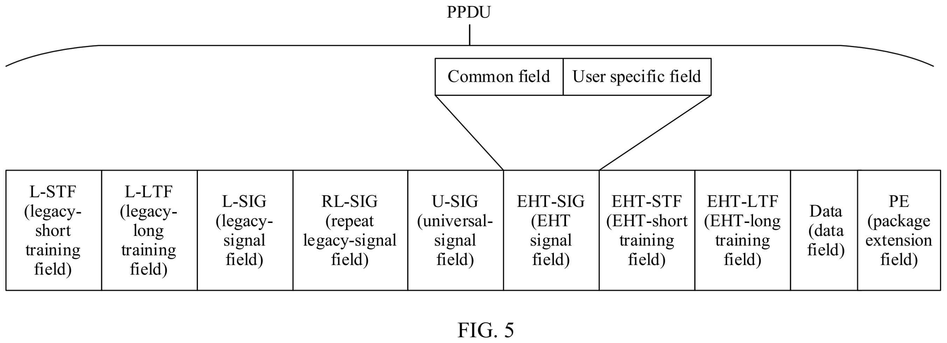

4. Physical layer protocol data unit (physical layer protocol data unit, PPDU): FIG. 5 is a diagram of a PPDU format. The PPDU includes a legacy short training field (Legacy Short Training Field, L-STF), a legacy long training field (Legacy Long Training Field, L-LTF), a legacy signal field (Legacy Signal Field, L-SIG), a repeat legacy-signal field (repeat legacy-signal field, RL-SIG), a universal signal field (universal SIG, U-SIG), an extremely high throughput signal field (extremely high throughput, EHT-SIG), an EHT-short training field (EHT-short training field, EHT-STF), an EHT-long training field (EHT-long training field, EHT-LTF), a data (Data) field, and a package extension (package extension, PE) field. The L-STF, the L-LTF, the L-SIG, the RL-SIG, the U-SIG, the EHT-SIG, the EHT-STF, and the EHT-LTF are a part of structures in a physical layer header (or referred to as a preamble part) of the PPDU.

The L-STF, the L-LTF, and the L-SIG may be understood as legacy preamble fields, and are used to ensure coexistence of a new device and a legacy device. The RL-SIG is used to enhance reliability of a legacy signal field.

The U-SIG and the EHT-SIG are signal fields. The U-SIG is used to carry some common information, for example, information indicating a PPDU version, information indicating uplink/downlink, information indicating a frequency domain bandwidth of the PPDU, and puncturing indication information. The EHT-SIG includes information indicating resource allocation, information indicating data demodulation, and the like.

It should be noted that in this embodiment of this application, fields in a PPDU in an 802.11be scenario are used as an example for description. The fields in the PPDU mentioned in this embodiment of this application are not limited to fields related to 802.11be. The fields in the PPDU mentioned in this embodiment of this application may alternatively be fields related to a standard version after 802.11be, including but not limited to a case that a PPDU signal field in a next-generation protocol is ultra-high reliability signaling (ultra-high reliability signaling, UHR-SIG).

For example, a channel bandwidth for transmitting the PPDU is 20 MHz. In this case, the 20 MHz bandwidth may be formed by an entire resource unit (242-tone RU) including 242 tones, or may be formed by various combinations of a resource unit (26-tone RU) including 26 tones, a resource unit (52-tone RU) including 52 tones, and a resource unit (106-tone RU) including 106 tones. In addition to the RU used to transmit data, some guard (Guard) subcarriers, null subcarriers, or direct current subcarriers may be included.

For example, a channel bandwidth for transmitting the PPDU is 40 MHz. In this case, the entire bandwidth is approximately equivalent to a replication of subcarrier distribution of 20 MHz. The entire 40 MHz bandwidth may be formed by an entire resource unit (484-tone RU) including 484 tones, or may be formed by various combinations of a 26-tone RU, a 52-tone RU, a 106-tone RU, and a 242-tone RU.

For example, a channel bandwidth for transmitting the PPDU is 80 MHz. In this case, the entire channel bandwidth is approximately equivalent to a replication of subcarrier distribution of two 40 MHz. The entire 40 MHz bandwidth may be formed by an entire resource unit (996-tone RU) including 996 tones, or may be formed by various combinations of a 26-tone RU, a 52-tone RU, a 106-tone RU, and a 242-tone RU.

For example, a channel bandwidth for transmitting the PPDU is 160 MHz. In this case, the entire bandwidth may be considered as a replication of subcarrier distribution of two 80 MHz. The entire bandwidth may be formed by an entire 2×996-tone RU, or may be formed by various combinations of a 26-tone RU, a 52-tone RU, a 106-tone RU, a 242-tone RU, a 484-tone RU, and a 996-tone RU.

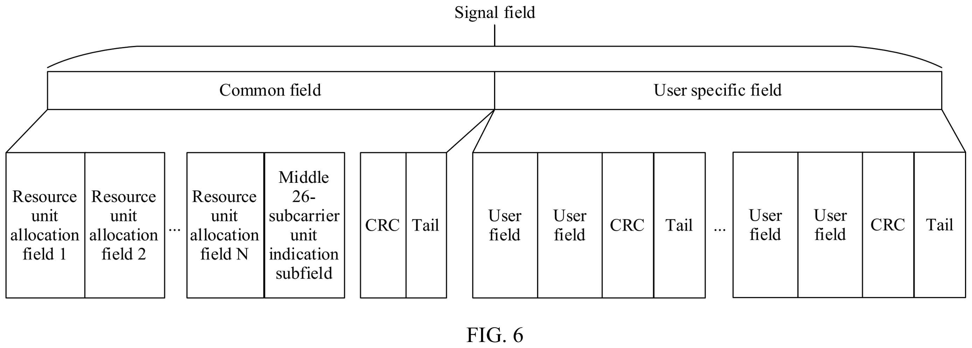

5. RU allocation: An AP may add resource allocation information to a signal field (Signal Field, SIG) included in the PPDU, to indicate an allocated RU to a STA. For example, the signal field may be a high efficient signal field B (High Efficient Signal Field-B, HE-SIG-B), or may be an extremely high throughput signal field (Extremely High Throughput Signal Field, EHT-SIG). In 802.11ax, the AP notifies a user of RU allocation by using the signal field. As shown in FIG. 6, the HE-SIG includes a common field (common field) and a user specific field (user specific field), which jointly indicate frequency resource allocation.

The common field includes 1 to N resource unit allocation subfields (RU allocation subfields), a cyclic redundancy code (cyclic redundancy code, CRC) used for checking, and a tail (Tail) subfield used for cyclic decoding. The user specific field includes a user field corresponding to an RU indicated by the resource unit allocation subfield.

One resource unit allocation subfield is one resource unit allocation index, and one resource unit allocation index indicates a size and a position of one or more resource units corresponding to one 242-tone RU. It should be understood that one resource unit allocation subfield corresponds to one 242-tone RU, and one 20 MHz corresponds to one 242-tone RU. In this case, it may also be understood that one resource unit allocation subfield corresponds to one 20 MHz. The resource unit allocation index is indicated by one or more indexes, where each index corresponds to one 20 MHz of a bandwidth.

The user specific field of the signal field (HE-SIG) includes 1 to M user fields (User Fields) based on a resource unit allocation sequence. Two of the M user fields are usually in a group, and every two user fields are followed by a CRC and a tail field. If a number of user fields is an odd number, a last user field is separately in a group, and the last user field is followed by a CRC and a tail field. For an RU including fewer than 106 tones, a specific field part includes a user field corresponding to the RU. For an RU including 106 or more tones, a specific field part includes one or more user fields corresponding to the RU.

6. MRU design rule: MRU design rules indicated by a PPDU when a bandwidth is doubled include:
(1) compared with an MRU before the doubling, an MRU after the bandwidth is doubled includes a doubled MRU;
(2) a minimum puncturing size after the bandwidth is doubled is greater than or equal to a minimum puncturing size before the doubling;
(3) only one hole is allowed between data subcarriers of the MRU; and
(4) when the MRU has a plurality of holes, a hole with a larger size is located outside data subcarriers, and a hole with a smaller size is located between the data subcarriers.

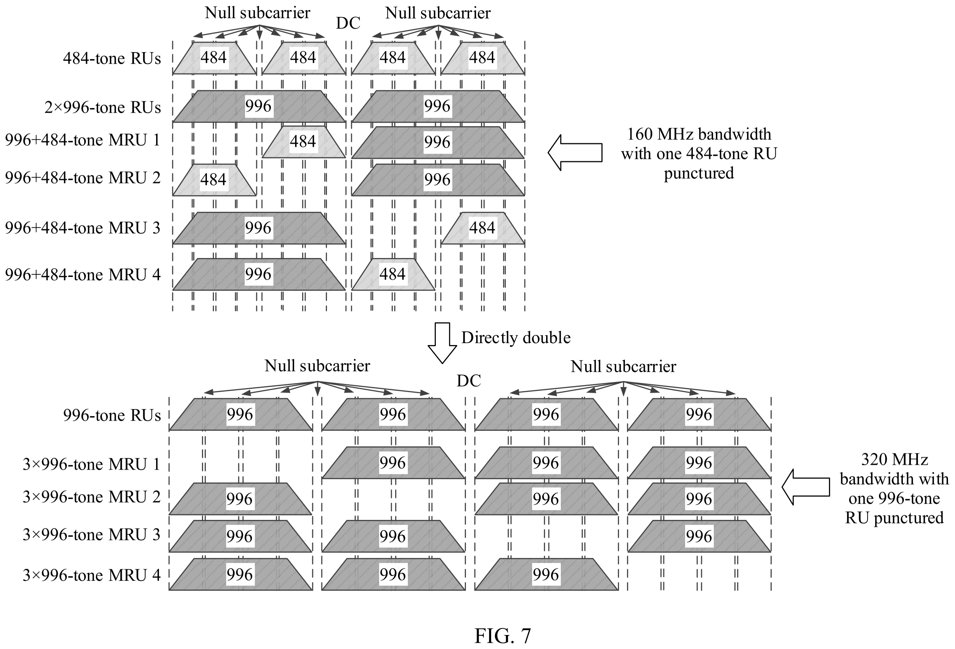

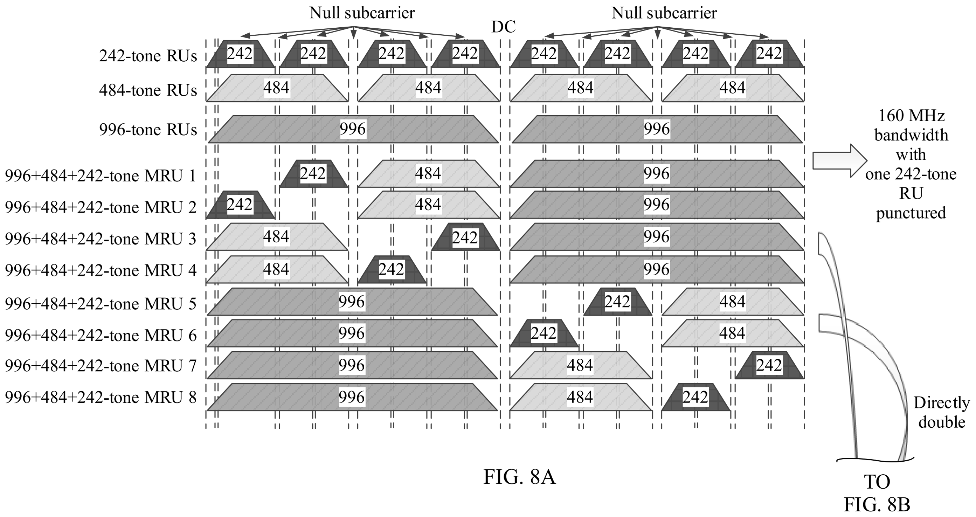

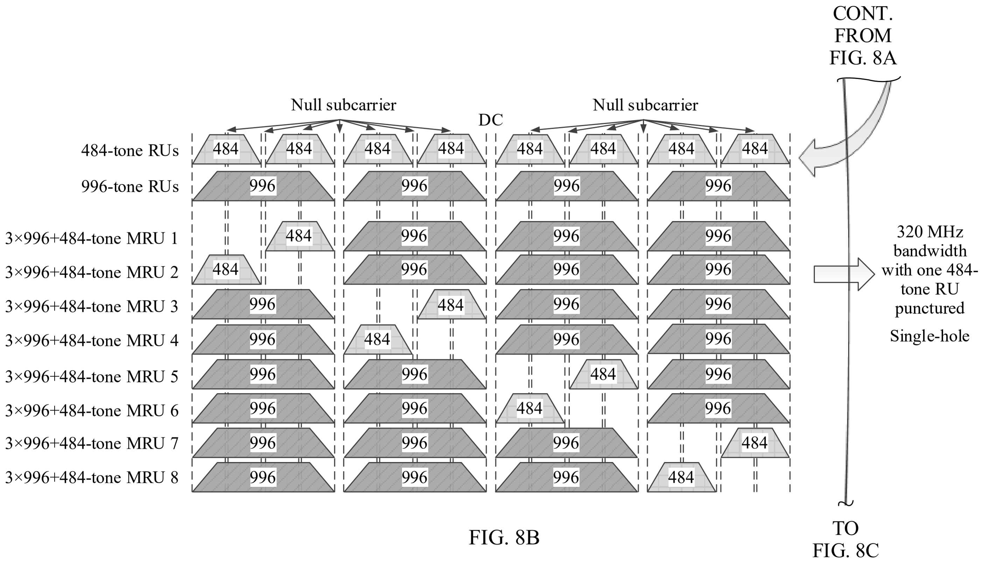

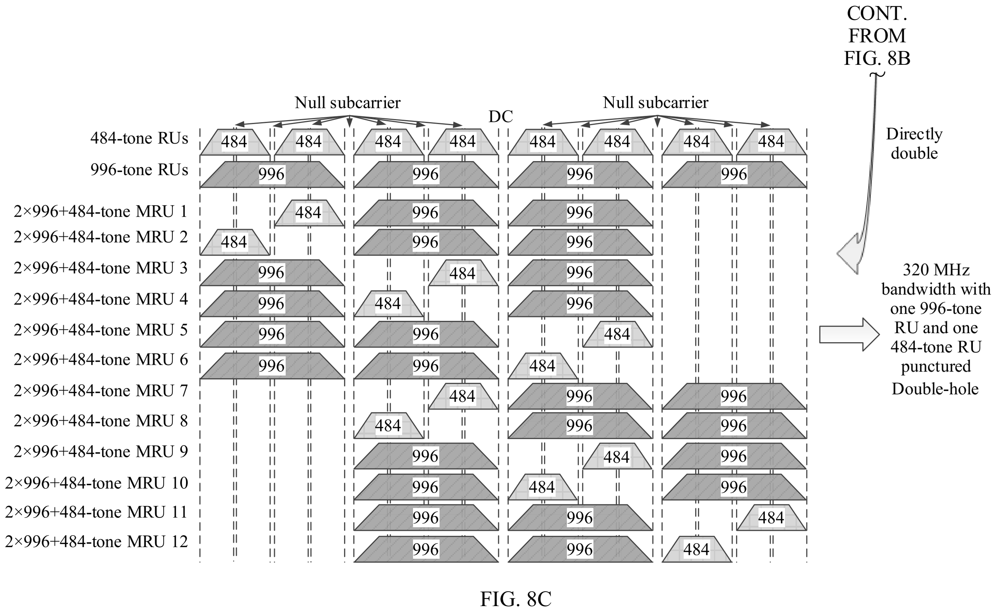

For ease of understanding of the MRU design rules used when the bandwidth is doubled, the following briefly describes, with reference to FIG. 7 and FIG. 8A to FIG. 8C, an MRU change in a case that a bandwidth is doubled from 160 MHz to 320 MHz.

It can be learned from FIG. 7 that, when the bandwidth is doubled from 160 MHz to 320 MHz, an MRU mode corresponding to 160 MHz with a puncturing size of 484 is doubled, and a puncturing size is doubled correspondingly, to obtain an MRU mode corresponding to 320 MHz.

It can be learned from FIG. 8A to FIG. 8C that, when the bandwidth is doubled from 160 MHz to 320 MHz, an MRU mode corresponding to 160 MHz with a puncturing size of 242 is doubled, and a puncturing size is doubled correspondingly, to obtain an MRU mode corresponding to 320 MHz.

As shown in FIG. 7 and FIG. 8A to FIG. 8C, the foregoing MRU design rules may be obtained. For example, there is a doubled MRU (for example, 242 is doubled to 484, 484 is doubled to 996, and 996 is doubled to 2×996) when the bandwidth is doubled from 160 MHz to 320 MHz. For another example, when the bandwidth is doubled from 160 MHz to 320 MHz, a puncturing size corresponding to 320 MHz may be 484 or 996, and is not less than a puncturing size 242 or 484 corresponding to 160 MHz. For another example, when 320 MHz corresponds to double holes (for example, puncturing 996+484), a hole of 996 is located outside data subcarriers, and a hole of 484 is located between the data subcarriers.

In addition, the following descriptions are first provided to facilitate understanding of embodiments of this application.

First, in this application, "indicate" may include "directly indicate" and "indirectly indicate". When a piece of indication information indicates A, the indication information may directly indicate A or indirectly indicate A, but it does not indicate that the indication information definitely carries A.

Information indicated by indication information is referred to as to-be-indicated information. In a specific implementation process, there are a plurality of manners of indicating the to-be-indicated information, for example, but not limited to, the following manners: The to-be-indicated information may be directly indicated. For example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that are pre-agreed on (for example, stipulated in a protocol), to reduce indication overheads to some extent. In addition, a common part of all pieces of information may be identified and indicated in a unified manner, to reduce indication overheads caused by separately indicating same information.

Second, "at least one" shown in this application means one or more, and "a plurality of" means two or more. In addition, in embodiments of this application, "first", "second", and various numbers (for example, "#1" and "#2") are merely used for differentiation for ease of description, and are not used to limit the scope of embodiments of this application. The sequence numbers in the following processes do not mean execution sequences. The execution sequences of the processes should be determined based on functions and internal logic of the processes, and should not constitute any limitation on implementation processes of embodiments of this application. It should be understood that, objects described in this way may be interchangeable in proper cases, so that solutions other than embodiments of this application can be described. In addition, in embodiments of this application, words such as "S510" are merely identifiers for ease of description, and do not limit a sequence of performing steps.

Third, in embodiments of this application, words such as "example" or "for example" are used to give an example, an illustration, or a description. Any embodiment or design solution described as "example" or "for example" in this application should not be interpreted as being preferable or having more advantages than another embodiment or design solution. To be precise, use of the words such as "example" or "for example" is intended to present a relative concept in a specific manner.

Fourth, "store" in embodiments of this application may mean "stored in one or more memories". The one or more memories may be separately disposed, or may be integrated into an encoder, a decoder, a processor, or a communication apparatus. Alternatively, some of the one or more memories may be separately disposed, and some may be integrated into a decoder, a processor, or a communication apparatus. A type of the memory may be a storage medium in any form. This is not limited in this application.

Fifth, in embodiments of this application, a "protocol" may be a standard protocol in the communication field, for example, may include an NR protocol and a related protocol applied to a further communication system. This is not limited in this application.

Sixth, in embodiments of this application, "of (of)", "corresponding/relevant (corresponding/relevant)", "corresponding (corresponding)", and "associate (associate)" may sometimes be used interchangeably. It should be noted that expressed meanings are consistent when no difference between the terms is emphasized.

Seventh, in embodiments of this application, "in a case of", "when", and "if" may be used interchangeably sometimes. It should be noted that, when a difference between the three is not emphasized, meanings to be expressed are consistent.

Eighth, the term "and/or" in this specification is merely an association relationship for describing associated objects, and indicates that three relationships may exist. For example, A and/or B may indicate the following three cases: Only A exists, both A and B exist, and only B exists. In addition, the character "/" in this specification generally indicates an "or" relationship between the associated objects.

With reference to FIG. 1, the foregoing briefly describes a scenario to which the communication method provided in embodiments of this application can be applied, describes basic concepts that may be used in embodiments of this application, and describes an MRU in the basic concepts. An MRU design has been completed for all existing large bandwidths in the standard, but new large bandwidths (for example, the foregoing 480 MHz and 640 MHz) may emerge in a future standard, and MRU patterns in these large bandwidths need to be newly designed. In addition, because the new bandwidth is definitely greater than 20 MHz, a new MRU is generally a large-size MRU.

Specifically, for a non-OFDMA 320 MHz PPDU, three large-size MRUs are defined in the 802.11be standard: a 2×996+484-tone MRU, a 3×996-tone MRU, and a 3×996+484-tone MRU. In addition, for an OFDMA 320 MHz PPDU, large-size MRUs that may be used include: a 484+242-tone MRU, a 996+484-tone MRU, a 2×996+484-tone MRU, a 3×996-tone MRU, and a 3×996+484-tone MRU.

The large-size MRU defined in the current standard does not cover an MRU form that may exist when a bandwidth is greater than 320 MHz, for example, an MRU pattern in a next-generation WLAN ultra-large bandwidth (for example, 640 MHz or 480 MHz).

This application provides a communication method, to design an MRU pattern for a large bandwidth that may emerge in a future Wi-Fi standard, to meet OFDMA transmission in a future large-bandwidth scenario.

The following describes the technical solutions provided in this application in detail with reference to the accompanying drawings. Embodiments of this application may be applied to a plurality of different scenarios, including but not limited to the scenario shown in FIG. 1.

It should be understood that a specific structure of an entity for performing a method provided in embodiments of this application is not particularly limited in the following embodiments, provided that the entity can run a program that records code of the method provided in embodiments of this application to perform communication according to the method provided in embodiments of this application. For example, the entity for performing the method provided in embodiments of this application may be a receive end device or a transmit end device, or a functional module that is in a receive end device or a transmit end device and that can invoke the program and execute the program.

Without loss of generality, the following describes in detail the communication method provided in embodiments of this application by using interaction between the transmit end device and the receive end device as an example. The transmit end device in embodiments of this application may be an access point AP, and the receive end device may be a non-access point non-AP (for example, a STA). Alternatively, the transmit end device may be an access point STA, and the receive end device may be a non-access point AP.

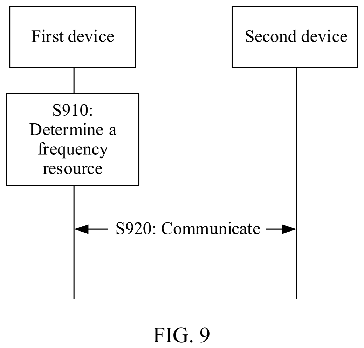

FIG. 9 is a schematic flowchart of a communication method according to an embodiment of this application. The following steps are included.

S910: A first device determines a frequency resource.

Specifically, the frequency resource includes an MRU, and the MRU in this application includes a k×996+m×484-tone MRU, where k is an integer greater than or equal to 4, and m is equal to 0 or 1.

S920: The first device communicates with a second device based on the frequency resource.

In a possible implementation, the first device is an AP, and the second device is a STA. In this implementation, the AP may send downlink information (for example, downlink data) to the STA based on the frequency resource.

In another possible implementation, the first device is a STA, and the second device is an AP. In this implementation, the STA may send uplink information (for example, uplink data) to the AP based on the frequency resource.

It should be noted that, in this embodiment, for ease of description, two communication parties are referred to as an AP and a STA. However, it should be understood that a name of a communication device is not limited in embodiments, provided that a corresponding function can be implemented. For example, the AP may be replaced with an access point, a base station, a terminal device, or the like, and the STA may be replaced with a non-AP station, a non-AP STA, a user, a terminal device, or the like. Examples are not described herein again.

For example, this embodiment mainly relates to an MRU form that may exist when a bandwidth is greater than 320 MHz, for example, an MRU pattern in a next-generation WLAN ultra-large bandwidth (for example, 640 MHz or 480 MHz). The following describes MRU patterns in different bandwidths in detail with reference to specific examples, and details are not described herein.

As shown above, in this embodiment, a new MRU mode is defined when possible future introduced bandwidths (for example, 480 MHz and 640 MHz) are mainly considered. The following provides detailed descriptions by using bandwidths of 480 MHz and 640 MHz.

Manner 1: A bandwidth for transmitting a PPDU is 640 MHz.

In the case shown in Manner 1, a total bandwidth for transmitting the PPDU is 640 MHz. For the 640 MHz bandwidth, in addition to compatible MRU modes (such as a 484+242-tone MRU, a 996+484-tone MRU, a 2×996+484-tone MRU, a 3×996-tone MRU, and a 3×996+484-tone MRU) defined in a 320 MHz bandwidth, some new MRU modes are introduced in the following manners.

Manner 1.1: When one 80 MHz subchannel is punctured in non-OFDMA 640 MHz (or one 996-tone RU is punctured in the non-OFDMA 640 MHz), the 640 MHz bandwidth after puncturing may include a 7×996-tone MRU. It may be understood that the non-OFDMA 640 MHz includes an 8×996-tone MRU (for example, if one 80 MHz corresponds to one 996-tone RU, 640 MHz corresponds to an 8×996-tone MRU). When one 80 MHz subchannel is punctured in the non-OFDMA 640 MHz, the 640 MHz bandwidth after puncturing may include an (8-1)×996-tone MRU, namely, a 7×996-tone MRU.

Specifically, if the 640 MHz after puncturing is allocated to one user, and the punctured 80 MHz subchannel is allocated to another user, OFDMA transmission can be implemented.

For example, the 7×996-tone MRU may be considered as a combination of one 4×996-tone RU, one 2×996-tone RU, and one 996-tone RU.

Alternatively, the 7×996-tone MRU may be considered as a combination of three 2×996-tone RUs and one 996-tone RU.

Alternatively, the 7×996-tone MRU may be considered as a combination of seven 996-tone RUs.

Alternatively, the 7×996-tone MRU may be considered as a combination of two 2×996-tone RUs and three 996-tone RUs.

It should be understood that how to obtain the 7×996-tone MRU is not limited in embodiments. The foregoing several combination manners are merely examples, and do not constitute any limitation on the protection scope of this application.

It should be further understood that data subcarriers of the 7×996-tone MRU are formed by a combination of data subcarriers of a plurality of RUs that form the 7×996-tone MRU, and pilot subcarriers of the 7×996-tone MRU are formed by pilot subcarriers of the plurality of RUs that form the 7×996-tone MRU. For example, if the 7×996-tone MRU is a combination of one 4×996-tone RU, one 2×996-tone RU, and one 996-tone RU, the data subcarriers of the 7×996-tone MRU are formed by a combination of data subcarriers of the 4×996-tone RU, the 2×996-tone RU, and the 996-tone RU. The pilot subcarriers of the 7×996-tone MRU include pilot subcarriers of the 4×996-tone RU, the 2×996-tone RU, and the 996-tone RU.

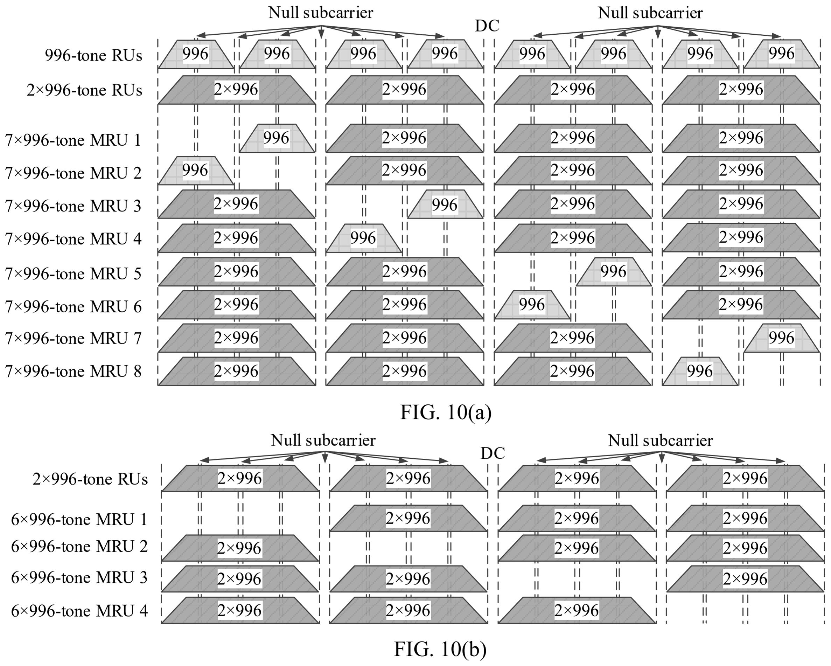

For ease of understanding, the following describes in detail a possible form of the 7×996-tone MRU with reference to FIG. 10(a). FIG. 10(a) to FIG. 10(g)-2 are diagrams of several MRUs when a bandwidth is 640 MHz according to an embodiment of this application.

It can be learned from FIG. 10(a) that, a 7×996-tone MRU pattern includes eight MRU patterns in total: a 7×996-tone MRU 1, a 7×996-tone MRU 2, a 7×996-tone MRU 3, a 7×996-tone MRU 4, a 47×996-tone MRU 5, a 7×996-tone MRU 6, a 7×996-tone MRU 7, and a 7×996-tone MRU 8, as shown in FIG. 10(a).

Manner 1.2: When one 160 MHz subchannel is punctured in non-OFDMA 640 MHz (or one 2×996-tone RU is punctured in the non-OFDMA 640 MHz), the 640 MHz bandwidth after puncturing may include a 6×996-tone MRU. It may be understood that the non-OFDMA 640 MHz includes an 8×996-tone MRU (for example, if one 80 MHz corresponds to one 996-tone RU, 640 MHz corresponds to an 8×996-tone MRU). When one 160 MHz subchannel is punctured in the non-OFDMA 640 MHz, the 640 MHz bandwidth after puncturing may include an (8-2)×996-tone MRU, namely, a 6×996-tone MRU.

Specifically, if the 640 MHz after puncturing is allocated to one user, and the punctured 160 MHz subchannel is allocated to another user, OFDMA transmission can be implemented.

For example, the 6×996-tone MRU may be considered as a combination of one 4×996-tone RU and one 2×996-tone RU.

Alternatively, the 6×996-tone MRU may be considered as a combination of three 2×996-tone RUs.

Alternatively, the 6×996-tone MRU may be considered as a combination of six 996-tone RUs.

Alternatively, the 6×996-tone MRU may be considered as a combination of two 2×996-tone RUs and two 996-tone RUs.

It should be understood that how to obtain the 6×996-tone MRU is not limited in embodiments. The foregoing several combination manners are merely examples, and do not constitute any limitation on the protection scope of this application.

It should be further understood that data subcarriers of the 6×996-tone MRU are formed by a combination of data subcarriers of a plurality of RUs that form the 6×996-tone MRU, and pilot subcarriers of the 6×996-tone MRU are formed by pilot subcarriers of the plurality of RUs that form the 6×996-tone MRU. For example, if the 6×996-tone MRU is a combination of two 2×996-tone RUs and two 996-tone RUs, data subcarriers of the 6×996-tone MRU are formed by a combination of data subcarriers of the two 2×996-tone RUs and the two 996-tone RUs. The pilot subcarriers of the 6×996-tone MRU include pilot subcarriers of the two 2×996-tone RUUs and the two 996-tone RUs.

For ease of understanding, the following describes in detail a possible form of the 6×996-tone MRU with reference to FIG. 10(b).

It can be learned from FIG. 10(b) that, a 6×996-tone MRU pattern includes four MRU patterns in total: a 6×996-tone MRU 1, a 6×996-tone MRU 2, a 6×996-tone MRU 3, and a 6×996-tone MRU 4, as shown in FIG. 10(b).

Manner 1.3: When one 2×996-tone RU 1 or 2×996-tone RU 4 is punctured in non-OFDMA 640 MHz (or one 160 MHz subchannel #1 or 160 MHz subchannel #4 is punctured in the non-OFDMA 640 MHz), and an 80 MHz subchannel is punctured in remaining 480 MHz, the 640 MHz bandwidth after puncturing may include a 5×996-tone MRU, where a 2×996-tone RU x indicates an x^{th} 2×996-tone RU. Different RUs have no overlapping subcarriers. It may be understood that the non-OFDMA 640 MHz includes an 8×996-tone MRU (for example, if one 80 MHz corresponds to one 996-tone RU, 640 MHz corresponds to an 8×996-tone MRU). When a 1^{st} or last 2×996-tone RU of the non-OFDMA 640 MHz is punctured and one 80 MHz subchannel is punctured, the 640 MHz bandwidth after puncturing may include an (8-3)×996-tone MRU, namely, a 5×996-tone MRU.

Specifically, if the 640 MHz after puncturing is allocated to one user, and the punctured 240 MHz subchannel is allocated to another user, OFDMA transmission can be implemented.

In the case shown in Manner 1.2, two holes are punctured in the non-OFDMA 640 MHz, one hole is the 160 MHz subchannel (or a 2×996-tone RU), and one hole is the 80 MHz subchannel (or a 996-tone RU). The hole of the 2×996-tone RU is greater than the hole of the 996-tone RU. It can be learned from the MRU design rules described in the foregoing basic concepts that "when the MRU has a plurality of holes, a hole with a larger size is located outside data subcarriers, and a hole with a smaller size is located between the data subcarriers". Therefore, in the case shown in Manner 1.2, the hole of the 2×996-tone RU is located outside data subcarriers. In other words, the RU is a 1^{st} 2×996-tone RU (for example, the foregoing 2×996-tone RU 1) or a last 2×996-tone RU (for example, the foregoing 2×996-tone RU 4). The hole of the 996-tone RU is located between the data subcarriers.

For example, the 5×996-tone MRU may be considered as a combination of one 4×996-tone RU and one 996-tone RU.

Alternatively, the 5 ×996-tone MRU may be considered as a combination of two 2×996-tone RUs and one 996-tone RU.

Alternatively, the 5×996-tone MRU may be considered as a combination of five 996-tone RUs.

It should be understood that how to obtain the 5×996-tone MRU is not limited in embodiments. The foregoing several combination manners are merely examples, and do not constitute any limitation on the protection scope of this application.

It should be further understood that data subcarriers of the 5 ×996-tone MRU are formed by a combination of data subcarriers of a plurality of RUs that form the 5×996-tone MRU, and pilot subcarriers of the 5×996-tone MRU are formed by pilot subcarriers of the plurality of RUs that form the 5×996-tone MRU. For example, if the 5×996-tone MRU is a combination of two 2×996-tone RUs and one 996-tone RU, data subcarriers of the 5×996-tone MRU are formed by a combination of data subcarriers of the two 2×996-tone RUs and the 996-tone RU. The pilot subcarriers of the 5×996-tone MRU include pilot subcarriers of the two 2×996-tone RUs and the 996-tone RU.

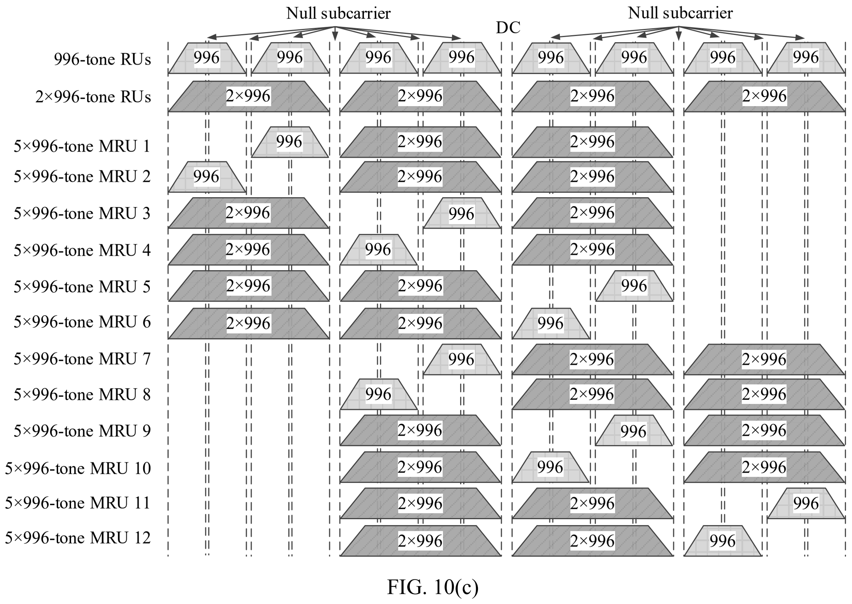

For ease of understanding, the following describes in detail a possible form of the 5×996-tone MRU with reference to FIG. 10(c).

It can be learned from FIG. 10(c) that, a 5×996-tone MRU pattern includes 12 MRU patterns in total: a 5×996-tone MRU 1, a 5×996-tone MRU 2, a 5×996-tone MRU 3, a 5×996-tone MRU 4, a 5×996-tone MRU 5, a 5×996-tone MRU 6, a 5×996-tone MRU 7, a 5×996-tone MRU 8, a 5×996-tone MRU 9, a 5×996-tone MRU 10, a 5×996-tone MRU 11, and a 5×996-tone MRU 12, as shown in FIG. 10(c).

Manner 1.4: When one 40 MHz subchannel is punctured in non-OFDMA 640 MHz (or one 484-tone RU is punctured in the non-OFDMA 640 MHz), the 640 MHz bandwidth after puncturing may include a 7×996+484-tone MRU. In comparison with Manner 1.1, in the case shown in Manner 1.4, a puncturing granularity is a 484-tone RU instead of a 996-tone RU, and the puncturing granularity is less than that in Manner 1.1. This is equivalent to a more refined MRU design solution. It may be understood that the non-OFDMA 640 MHz includes an 8×996-tone MRU (for example, if one 80 MHz corresponds to one 996-tone RU, 640 MHz corresponds to an 8×996-tone MRU). When one 40 MHz subchannel is punctured in the non-OFDMA 640 MHz, the 640 MHz bandwidth after puncturing may include an (8-1)×996+484-tone MRU, namely, a 7×996+484-tone MRU.

Specifically, if the 640 MHz after puncturing is allocated to one user, and the punctured 40 MHz subchannel is allocated to another user, OFDMA transmission can be implemented.

For example, the 7×996+484-tone MRU may be considered as a combination of one 4×996-tone RU, one 2×996-tone RU, one 996-tone RU, and one 484-tone RU.

Alternatively, the 7×996+484-tone MRU may be considered as a combination of three 2×996-tone RUs, one 996-tone RU, and one 484-tone RU.

Alternatively, the 7×996+484-tone MRU may be considered as a combination of seven 996-tone RUs and one 484-tone RU.

Alternatively, the 7×996+484-tone MRU may be considered as a combination of two 2×996-tone RUs, three 996-tone RUs, and one 484-tone RU.

It should be understood that how to obtain the 7×996+484-tone MRU is not limited in embodiments. The foregoing several combination manners are merely examples, and do not constitute any limitation on the protection scope of this application.

It should be further understood that data subcarriers of the 7×996+484-tone MRU are formed by a combination of data subcarriers of a plurality of RUs that form the 7×996+484-tone MRU, and pilot subcarriers of the 7×996+484-tone MRU are formed by pilot subcarriers of the plurality of RUs that form the 7×996+484-tone MRU. For example, if the 7×996+484-tone MRU is a combination of one 4×996-tone RU, one 2×996-tone RU, one 996-tone RU, and one 484-tone RU, the data subcarriers of the 7×996+484-tone MRU include data subcarriers of the 4×996-tone RU, the 2×996-tone RU, the 996-tone RU, and the 484-tone RU. The pilot subcarriers of the 7×996+484-tone MRU include pilot subcarriers of the 4×996-tone RU, the 2×996-tone RU, the 996-tone RU, and the 484-tone RU.

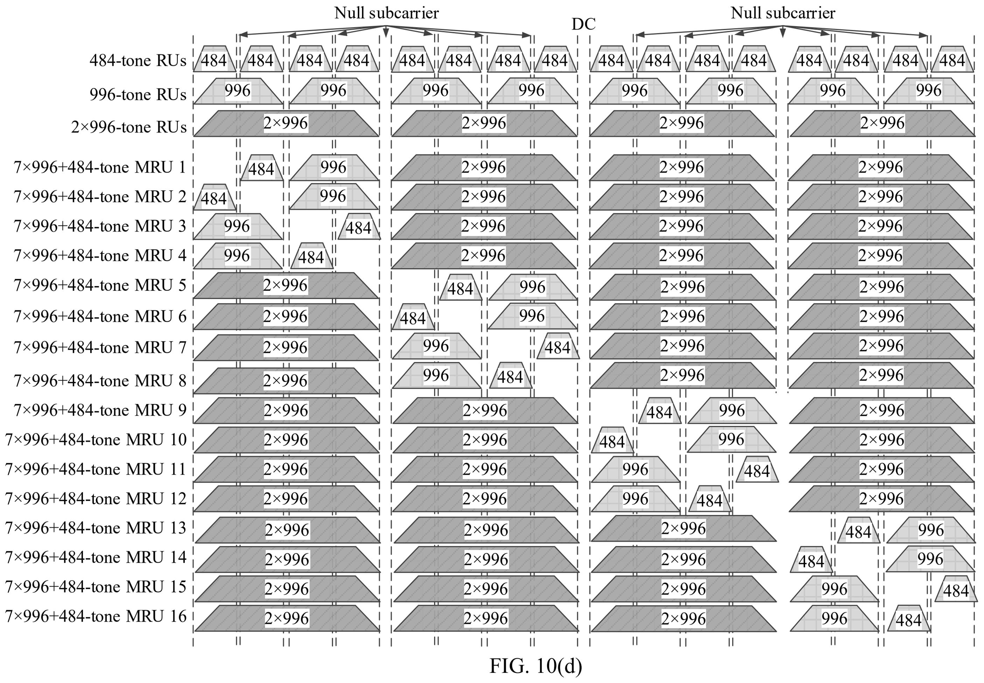

For ease of understanding, the following describes in detail a possible form of the 7×996+484-tone MRU with reference to FIG. 10(d).

It can be learned from FIG. 10(d) that, a 7×996-tone MRU pattern includes 16 MRU patterns in total: a 7×996+484-tone MRU 1, a 7×996+484-tone MRU 2, a 7×996+484-tone MRU 3, a 7×996+484-tone MRU 4, a 7×996+484-tone MRU 5, a 7×996+484-tone MRU 6, a 7×996+484-tone MRU 7, a 77×996+484-tone MRU 8, a 7×996+484-tone MRU 9, a 7×996+484-tone MRU 10, a 7×996+484-tone MRU 11, a 7×996+484-tone MRU 12, a 7×996+484-tone MRU 13, a 7×996+484-tone MRU 14, a 7×996+484-tone MRU 15, and a 77×996+484-tone MRU 16, as shown in FIG. 10(d).

Manner 1.5: When one 996-tone RU 1 or 996-tone RU 4 is punctured in non-OFDMA 640 MHz (or one 80 MHz subchannel #1 or 80 MHz subchannel #4 is punctured in the non-OFDMA 640 MHz), and a 40 MHz subchannel is punctured in remaining 560 MHz, the 640 MHz bandwidth after puncturing may include a 6×996+484-tone MRU, where a 996-tone RU x indicates an x^{th} 996-tone RU. Different RUs have no overlapping subcarriers. It may be understood that the non-OFDMA 640 MHz includes an 8×996-tone MRU (for example, if one 80 MHz corresponds to one 996-tone RU, 640 MHz corresponds to an 8×996-tone MRU). When a 1^{st} or last 996-tone RU and one 160 MHz subchannel are punctured in the non-OFDMA 640 MHz, the 640 MHz bandwidth after puncturing may include an (8-2)×996+484-tone MRU, namely, a 6×996+484-tone MRU.

Specifically, if the 640 MHz after puncturing is allocated to one user, and the punctured 120 MHz subchannel is allocated to another user, OFDMA transmission can be implemented.

In the case shown in Manner 1.5, two holes are punctured in the non-OFDMA 640 MHz, one hole is the 80 MHz subchannel (or a 996-tone RU), and one hole is the 40 MHz subchannel (or a 484-tone RU). The hole of the 996-tone RU is greater than the hole of the 484-tone RU. It can be learned from the MRU design rules described in the foregoing basic concepts that "when the MRU has a plurality of holes, a hole with a larger size is located outside data subcarriers, and a hole with a smaller size is located between the data subcarriers". Therefore, in the case shown in Manner 1.5, the hole of the 996-tone RU is located outside data subcarriers. In other words, the RU is a 1^{st} 996-tone RU (for example, the foregoing 996-tone RU 1) or a last 996-tone RU (for example, the foregoing 996-tone RU 4). The hole of the 484-tone RU is located between the data subcarriers.

For example, the 6×996+484-tone MRU may be considered as a combination of one 4×996-tone RU, one 2×996-tone RU, and one 484-tone RU.

Alternatively, the 6×996+484-tone MRU may be considered as a combination of three 2×996-tone RUs and one 484-tone RU.

Alternatively, the 6×996+484-tone MRU may be considered as a combination of six 996-tone RUs and one 484-tone RU.

Alternatively, the 6×996+484-tone MRU may be considered as a combination of two 2×996-tone RUs, two 996-tone RUs, and one 484-tone RU.

It should be understood that how to obtain the 6×996+484-tone MRU is not limited in embodiments. The foregoing several combination manners are merely examples, and do not constitute any limitation on the protection scope of this application.

It should be further understood that data subcarriers of the 6×996+484-tone MRU are formed by a combination of data subcarriers of a plurality of RUs that form the 6×996+484-tone MRU, and pilot subcarriers of the 6×996+484-tone MRU are formed by pilot subcarriers of the plurality of RUs that form the 6×996+484-tone MRU. For example, if the 6×996+484-tone MRU is a combination of two 2×996-tone RUs, two 996-tone RUs, and one 484-tone RU, the data subcarriers of the 6×996-tone MRU are a combination of data subcarriers of the two 2×996-tone RUs, the two 996-tone RUs, and the 484-tone RU. The pilot subcarriers of the 6×996-tone MRU include pilot subcarriers of the two 2×996-tone RUUs, the two 996-tone RUs, and the 484-tone RU.

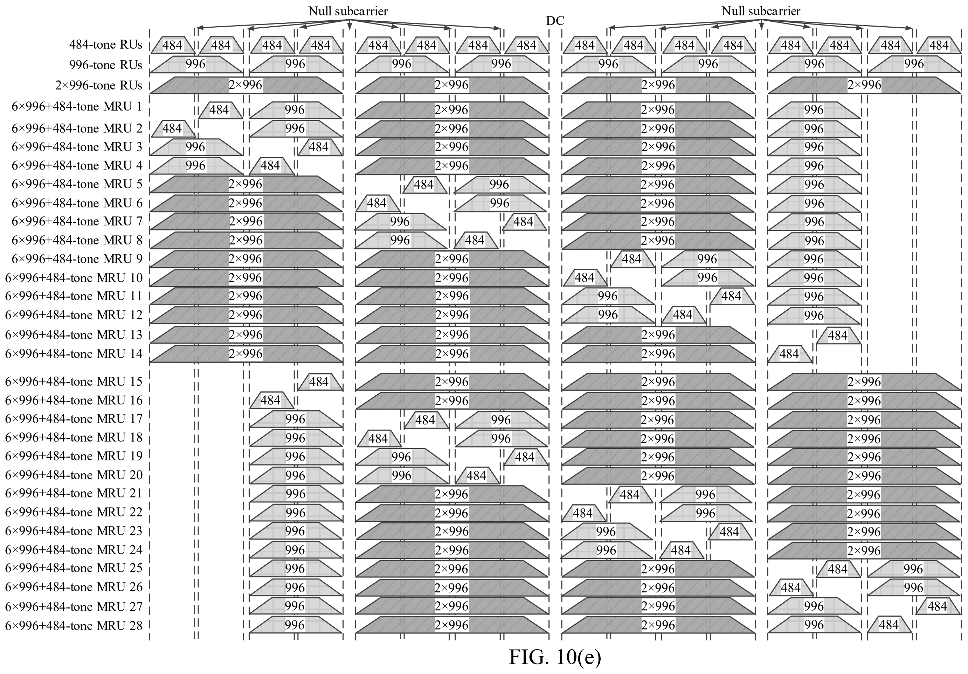

For ease of understanding, the following describes in detail a possible form of the 5×996-tone MRU with reference to FIG. 10(e).

It can be learned from FIG. 10(e) that, a 6×996+484-tone MRU pattern includes 28 MRU patterns in total: a 6×996+484-tone MRU 1 to a 6×996+484-tone MRU 28, as shown in FIG. 10(d). Higher 80 MHz of the 6×996+484-tone MRU 1 to the 6×996+484-tone MRU 14 is punctured, and lower 80 MHz of the 6×996+484-tone MRU 15 to the 6×996+484-tone MRU 28 is punctured.

Manner 1.6: When one 2×996-tone RU 1 or 2×996-tone RU 4 is punctured in non-OFDMA 640 MHz (or one 160 MHz subchannel #1 or 160 MHz subchannel #4 is punctured in the non-OFDMA 640 MHz), and a 40 MHz subchannel is punctured in remaining 480 MHz, the 640 MHz bandwidth after puncturing may include a 5×996+484-tone MRU, where a 2×996-tone RU x indicates an x^{th} 2×996-tone RU. Different RUs have no overlapping subcarriers. It may be understood that the non-OFDMA 640 MHz includes an 8×996-tone MRU (for example, if one 80 MHz corresponds to one 996-tone RU, 640 MHz corresponds to an 8×996-tone MRU). When a 1^{st} or last 2×996-tone RU of the non-OFDMA 640 MHz is punctured and one 40 MHz subchannel is punctured, the 640 MHz bandwidth after puncturing may include an (8-3)×996+484-tone MRU, namely, a 5×996+484-tone MRU.

Specifically, if the 640 MHz after puncturing is allocated to one user, and the punctured 200 MHz subchannel is allocated to another user, OFDMA transmission can be implemented.

In the case shown in Manner 1.6, two holes are punctured in the non-OFDMA 640 MHz, one hole is the 160 MHz subchannel (or a 2×996-tone RU), and one hole is the 40 MHz subchannel (or a 484-tone RU). The hole of the 2×996-tone RU is greater than the hole of the 484-tone RU. It can be learned from the MRU design rules described in the foregoing basic concepts that "when the MRU has a plurality of holes, a hole with a larger size is located outside data subcarriers, and a hole with a smaller size is located between the data subcarriers". Therefore, in the case shown in Manner 1.6, the hole of the 2×996-tone RU is located outside data subcarriers. In other words, the RU is a 1^{st} 2×996-tone RU (for example, the foregoing 2×996-tone RU 1) or a last 2×996-tone RU (for example, the foregoing 2×996-tone RU 4). The hole of the 484-tone RU is located between the data subcarriers.

For example, the 5×996+484-tone MRU may be considered as a combination of one 4×996-tone RU, one 996-tone RU, and one 484-tone RU.

Alternatively, the 5×996+484-tone MRU may be considered as a combination of two 2×996-tone RUs, one 996-tone RU, and one 484-tone RU.

Alternatively, the 5×996+484-tone MRU may be considered as a combination of five 996-tone RUs and one 484-tone RU.

It should be understood that how to obtain the 5×996+484-tone MRU is not limited in embodiments. The foregoing several combination manners are merely examples, and do not constitute any limitation on the protection scope of this application.

It should be further understood that data subcarriers of the 5×996+484-tone MRU are formed by a combination of data subcarriers of a plurality of RUs that form the 5×996+484-tone MRU, and pilot subcarriers of the 5×996+484-tone MRU are formed by pilot subcarriers of the plurality of RUs that form the 5×996+484-tone MRU. For example, if the 5×996+484-tone MRU is a combination of two 2×996-tone RUs, one 996-tone RU, and one 484-tone RU, the data subcarriers of the 5×996+484-tone MRU are a combination of data subcarriers of the two 2×996-tone RUs, the 996-tone RU, and the 484-tone RU. The pilot subcarriers of the 5×996+484-tone MRU include pilot subcarriers of the two 2×996-tone RUs, the 996-tone RU, and the 484-tone RU.

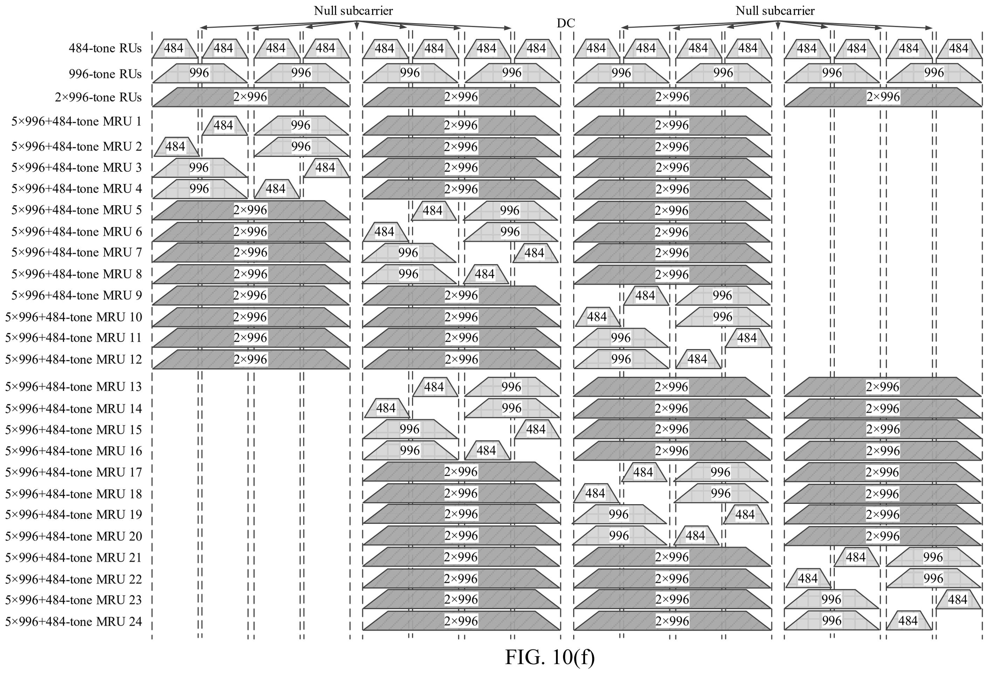

For ease of understanding, the following describes in detail a possible form of the 5×996+484-tone MRU with reference to FIG. 10(f).

It can be learned from FIG. 10(f) that, a 5×996+484-tone MRU pattern includes 24 MRU patterns in total: a 5 ×996+484-tone MRU 1 to a 5×996+484-tone MRU 24, as shown in FIG. 10(f). Higher 160 MHz of the 5×996+484-tone MRU 1 to the 5×996+484-tone MRU 12 is punctured, and lower 160 MHz of the 5×996+484-tone MRU 13 to the 5×996+484-tone MRU 24 is punctured.

Manner 1.7: One 2×996-tone RU 1 is punctured in non-OFDMA 640 MHz (or one 160 MHz subchannel #1 is punctured in the non-OFDMA 640 MHz), and one 996-tone RU 3 or 996-tone RU 8 is punctured in remaining 480 MHz (or one 80 MHz subchannel #3 or 80 MHz subchannel #8 is punctured in the remaining 480 MHz).

Alternatively, one 2×996-tone RU 4 is punctured in a non-OFDMA 640 MHz PPDU (or one 160 MHz subchannel #4 is punctured in the non-OFDMA 640 MHz), and one 996-tone RU 1 or 996-tone RU 6 is punctured in remaining 480 MHz (or one 80 MHz subchannel #1 or 80 MHz subchannel #6 is punctured in the remaining 480 MHz). In addition, when a 40 MHz subchannel is punctured in remaining 400 MHz, the 640 MHz bandwidth after puncturing may include a 4×996+484-tone MRU. A 2×996-tone RU x indicates an x^{th} 2×996-tone RU. Different RUs do not have overlapping subcarriers. It may be understood that the non-OFDMA 640 MHz includes an 8×996-tone MRU (for example, if one 80 MHz corresponds to one 996-tone RU, 640 MHz corresponds to an 8×996-tone MRU). When one 2×996-tone RU, one 996-tone RU, and one 40 MHz subchannel are punctured in the non-OFDMA 640 MHz, the 640 MHz bandwidth after puncturing may include an (8-4)×996+484-tone MRU, namely, a 4×996+484-tone MRU.

Specifically, if the 640 MHz after puncturing is allocated to one user, and the punctured 280 MHz subchannel is allocated to another user, OFDMA transmission can be implemented.

In the case shown in Manner 1.7, three holes are punctured in the non-OFDMA 640 MHz, one hole is the 160 MHz subchannel (or a 2×996-tone RU), one hole is the 80 MHz subchannel (or a 996-tone RU), and one hole is the 40 MHz subchannel (or a 484-tone RU). The 2×996-tone RU is greater than the 996-tone RU and the 484-tone RU. It can be learned from the MRU design rules described in the foregoing basic concepts that "when the MRU has a plurality of holes, a hole with a larger size is located outside data subcarriers, and a hole with a smaller size is located between the data subcarriers". Therefore, in the case shown in Manner 1.7, the hole of the 2×996-tone RU (for example, the 2×996-tone RU 1 or the 2×996-tone RU 4) is located outside data subcarriers. The hole of the 996-tone RU is at an outer side of the bandwidth except the hole of the 2×996-tone RU (for example, when the hole of the 2×996-tone RU is the 2×996-tone RU 1, the hole of the 996-tone RU is a 996-tone RU 3 or 996-tone RU 8; or when the hole of the 2×996-tone RU is the 2×996-tone RU 4, the hole of the 996-tone RU is a 996-tone RU 1 or 996-tone RU 6). The hole of the 484-tone RU is located between the data subcarriers.

For example, the 4×996+484-tone MRU may be considered as a combination of one 2×996-tone RU, two 2×996-tone RUs, and one 484-tone RU.

Alternatively, the 4×996+484-tone MRU may be considered as a combination of two 2×996-tone RUs and one 484-tone RU.

Alternatively, the 4×996+484-tone MRU may be considered as a combination of four 996-tone RUs and one 484-tone RU.

It should be understood that how to obtain the 4×996+484-tone MRU is not limited in embodiments. The foregoing several combination manners are merely examples, and do not constitute any limitation on the protection scope of this application.

It should be further understood that data subcarriers of the 4×996+484-tone MRU are formed by a combination of data subcarriers of a plurality of RUs that form the 4×996+484-tone MRU, and pilot subcarriers of the 4×996+484-tone MRU are formed by pilot subcarriers of the plurality of RUs that form the 4×996+484-tone MRU. For example, if the 4×996+484-tone MRU is a combination of one 2×996-tone RU, two 2×996-tone RUs, and one 484-tone RU, the data subcarriers of the 4×996-tone MRU are a combination of data subcarriers of the 2×996-tone RU, the two 2×996-tone RUs, and the 484-tone RU. The pilot subcarriers of the 4×996-tone MRU include pilot subcarriers of the 2×996-tone RU, the two 2×996-tone RUs, and the 484-tone RU.

For ease of understanding, the following describes in detail a possible form of the 4×996+484-tone MRU with reference to FIG. 10(g)-1 and FIG. 10(g)-2.

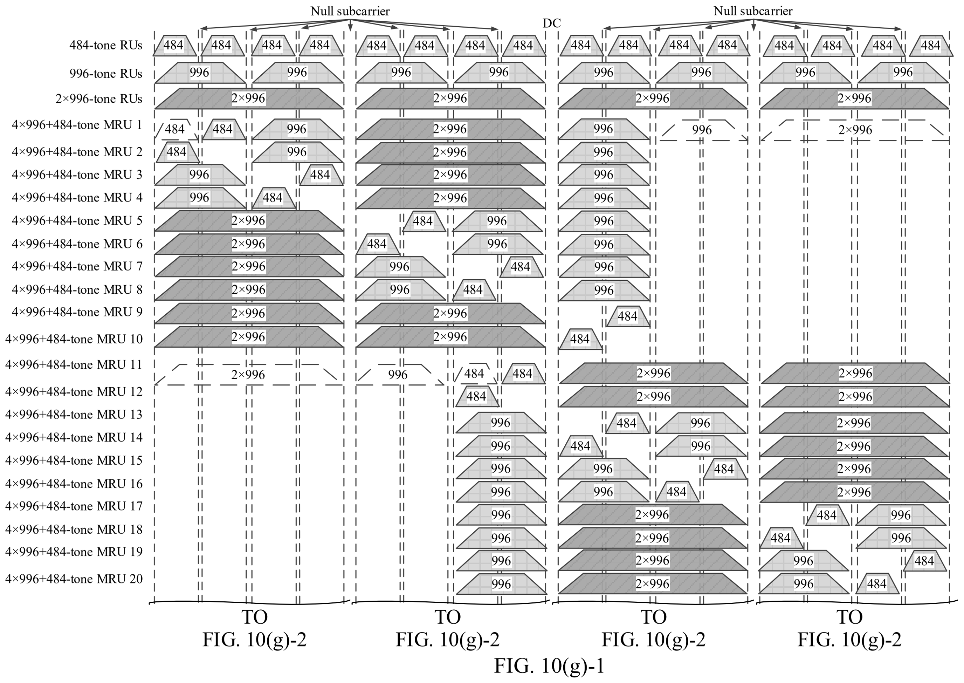

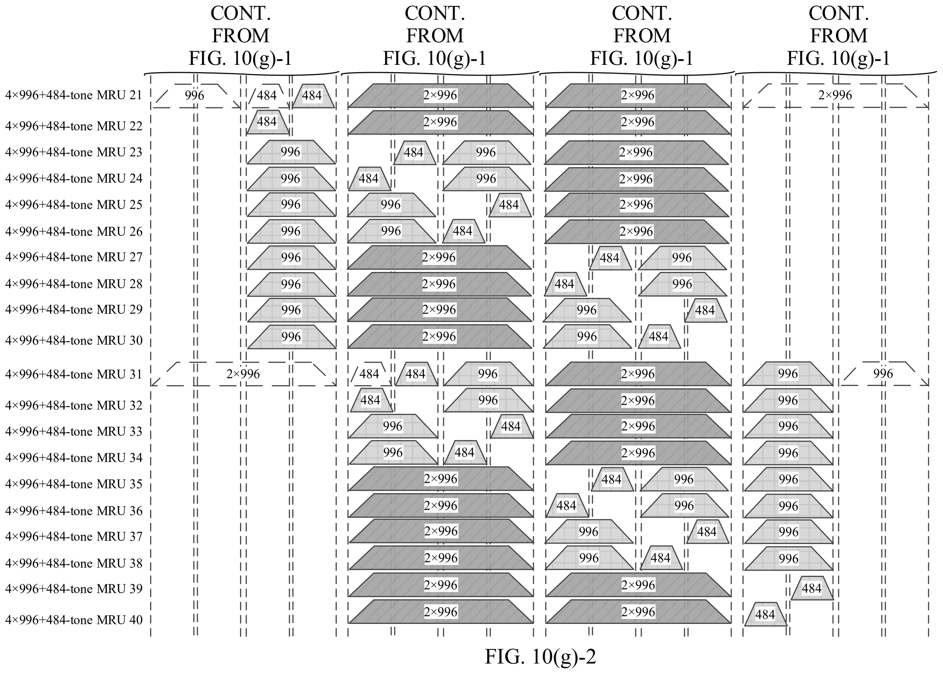

It can be learned from FIG. 10(g)-1 and FIG. 10(g)-2that, a 4×996+484-tone MRU pattern includes 40 MRU patterns in total: a 4×996+484-tone MRU 1 to a 4×996+484-tone MRU 40, as shown inFIG. 10(g)-1 and FIG. 10(g)-2. Higher 240 MHz of the 4×996+484-tone MRU 1 to the 4×996+484-tone MRU 10 is punctured, lower 240 MHz of the 4×996+484-tone MRU 11 to the 4×996+484-tone MRU 20 is punctured, lower 80 MHz and higher 160 MHz of the 4×996+484-tone MRU 21 to the 4×996+484-tone MRU 30 are punctured, and lower 160 MHz and higher 80 MHz of the 4×996+484-tone MRU 31 to the 4×996+484-tone MRU 40 are punctured.

In Manner 1.1 to Manner 1.7, MRU modes in different puncturing cases when the bandwidth for transmitting the PPDU is 640 MHz are described in detail. The three puncturing manners shown in Manner 1.1 to Manner 1.3 may be understood as directly doubling an MRU mode used when the bandwidth for transmitting the PPDU is 320 MHz.

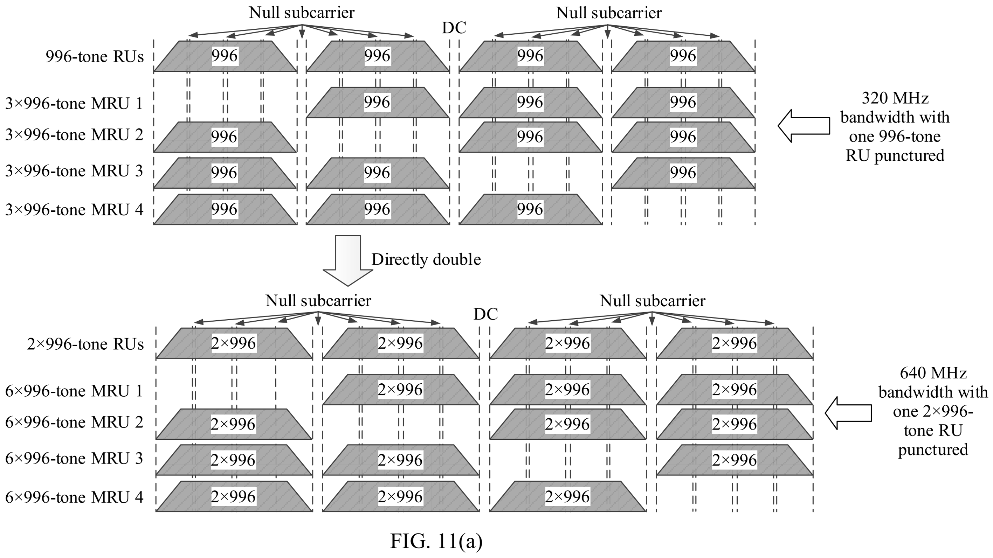

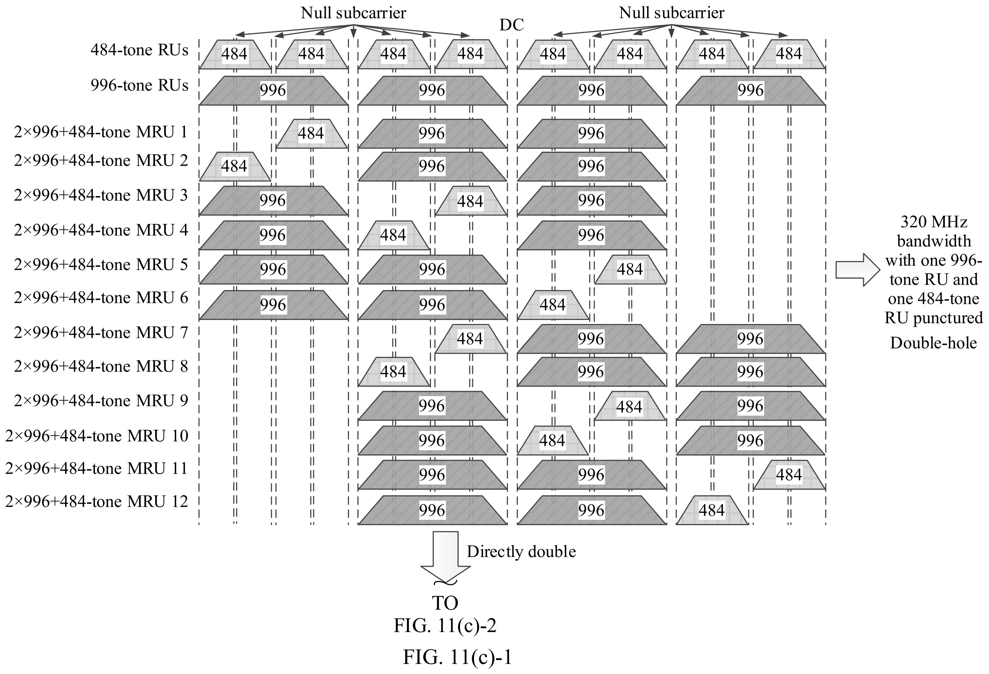

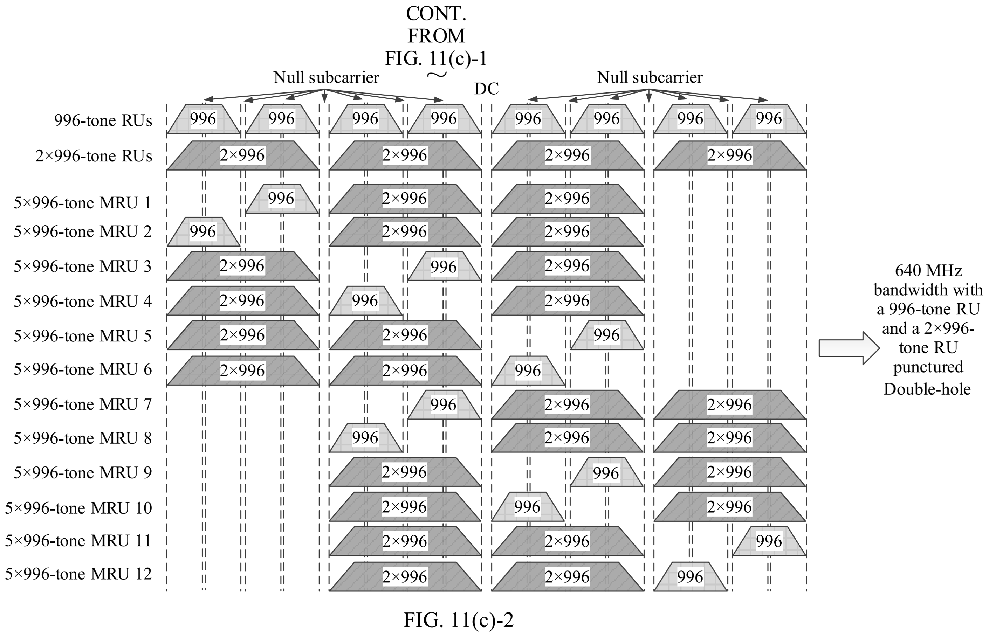

For ease of understanding, with reference to FIG. 11(a) to FIG. 11(c)-2, how to directly double the MRU mode corresponding to the bandwidth of 320 MHz to obtain the MRU mode for the bandwidth of 640 MHz is described in detail. For the MRU mode corresponding to the bandwidth of 320 MHz, refer to the MRU mode that corresponds to the bandwidth of 320 MHz and that is obtained by doubling 160 MHz shown in FIG. 7 and FIG. 8A to FIG. 8C. Details are not described herein again. It can be learned from FIG. 7 and FIG. 8A to FIG. 8C that the MRU mode corresponding to the bandwidth of 320 MHz includes several forms: puncturing a 996-tone RU in 320 MHz, puncturing a 484-tone RU in 320 MHz, and puncturing a 996-tone RU and a 484-tone RU in 320 MHz. Direct doubling in these forms includes several cases shown in FIG. 11(a) to FIG. 11(c)-2, which respectively correspond to puncturing a 2×996-tone RU in 640 MHz, puncturing a 996-tone RU in 640 MHz, and puncturing 2×996-tone RU and a 996-tone RU in 640 MHz.

It can be learned from FIG. 11(a) that, the MRU mode of puncturing a 996-tone RU in 320 MHz when a bandwidth is 320 MHz may be directly doubled to an MRU mode of puncturing a 2×996-tone RU in 640 MHz when a bandwidth is 640 MHz, and the bandwidth of 640 MHz after puncturing may include a 6×996-tone MRU.

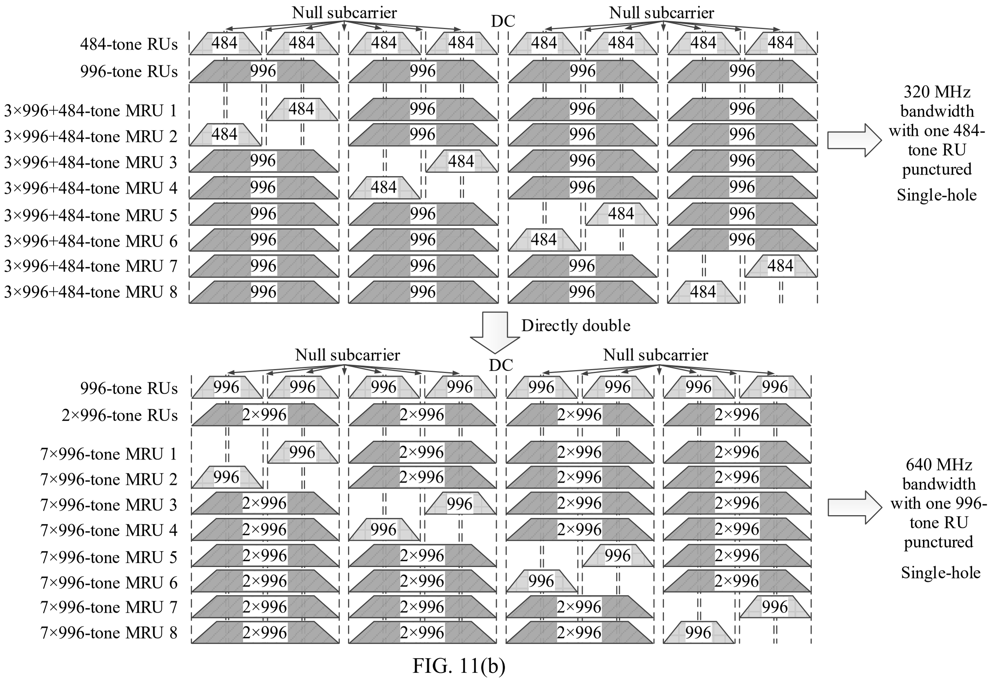

It can be learned from FIG. 11(b) that, the MRU mode of puncturing a 484-tone RU in 320 MHz when a bandwidth is 320 MHz may be directly doubled to an MRU mode of puncturing a 996-tone RU in 640 MHz when a bandwidth is 640 MHz, and the bandwidth of 640 MHz after puncturing may include a 7×996-tone MRU.

It can be learned from FIG. 11(c)-1 and FIG. 11(c)-2 that, the MRU mode of puncturing a 996-tone RU and a 484-tone RU in 320 MHz when a bandwidth is 320 MHz may be directly doubled to an MRU mode of puncturing a 2×996-tone RU and a 996-tone RU in 640 MHz when a bandwidth is 640 MHz, and the bandwidth of 640 MHz after puncturing may include a 5×996-tone MRU.

In addition, the four puncturing manners shown in Manner 1.4 to Manner 1.7 may be understood as solutions in which a punctured 484-tone RU in a 320 MHz MRU is disregarded. It may be understood that a puncturing granularity may be less than a 996-tone RU, the manner of puncturing a 2×996-tone RU or a 996-tone RU shown in Manner 1.1 to Manner 1.3 may not be used, and a 484-tone RU may be punctured. For a specific puncturing manner, refer to the descriptions of Manner 1.4 to Manner 1.7. Details are not described herein again.

In conclusion, two MRU modes, simple and complex, are provided for the 640 MHz bandwidth. One is a simple solution obtained through double extension based on the existing 320 MHz (namely, Manner 1.1 to Manner 1.3, which may be referred to as an MRU pattern #1); and the other is an MRU mode with more abundant subchannel puncturing patterns (namely, Manner 1.1 to Manner 1.7, which may be referred to as an MRU pattern #2). The two designed 640 MHz-oriented MRU modes may meet channel puncturing and OFDMA transmission of 640 MHz.

Manner 1 is mainly described by using an example in which the bandwidth for transmitting the PPDU is 640 MHz. In this application, a detailed MRU design solution is also provided for a case in which a bandwidth for transmitting a PPDU is 480 MHz. The following provides descriptions with reference to Manner 2.

Manner 2: A bandwidth for transmitting a PPDU is 480 MHz.

In the case shown in Manner 2, a total bandwidth for transmitting the PPDU is 480 MHz. For the 480 MHz bandwidth, some MRU modes designed for the 640 MHz bandwidth in Manner 1 may be reused, or an MRU mode may be redesigned for the 480 MHz bandwidth. The following manners are included.

Manner 2.1: A part of an MRU in 640 MHz is reused.

Specifically, a continuous 480 MHz bandwidth may be constructed by puncturing one 2×996-tone RU 1 or 2×996-tone RU 4 in 640 MHz. Therefore, an MRU having a feature of puncturing one 2×996-tone RU 1 or 2×996-tone RU 4 in 640 MHz may also be used for an MRU of 480 MHz.

For example, in the 5×996+484-tone MRU shown in Manner 1.6, one 2×996-tone RU 1 or 2×996-tone RU 4 is punctured in the non-OFDMA 640 MHz, and a 40 MHz subchannel is punctured in remaining 480 MHz. The 5×996+484-tone MRU is also applicable to the MRU of 480 MHz, which is equivalent to puncturing a 40 MHz subchannel in non-OFDMA 480 MHz. For a specific puncturing manner, refer to FIG. 10(f). Details are not described herein again.

For another example, in the 5×996-tone MRU shown in Manner 1.3, one 2×996-tone RU 1 or 2×996-tone RU 4 is punctured in the non-OFDMA 640 MHz, and an 80 MHz subchannel is punctured in remaining 480 MHz. The 5×996-tone MRU is also applicable to the MRU of 480 MHz, which is equivalent to puncturing an 80 MHz subchannel in non-OFDMA 480 MHz. For a specific puncturing manner, refer to FIG. 10(c). Details are not described herein again.

For another example, in the 4×996+484-tone MRU shown in Manner 1.7, one 2×996-tone RU 1 and one 996-tone RU 3 or 996-tone RU 8 are punctured in the non-OFDMA 640 MHz, and a 40 MHz subchannel is punctured in remaining 400 MHz. Alternatively, one 2×996-tone RU 4 and one 996-tone RU 1 or 996-tone RU 6 are punctured in the non-OFDMA 640 MHz, and a 40 MHz subchannel is punctured in remaining 400 MHz.

The 4×996+484-tone MRU is also applicable to the MRU of 480 MHz, which is equivalent to puncturing a 120 MHz subchannel in non-OFDMA 480 MHz. For a specific puncturing manner, refer to FIG. 10(g)-1 and FIG. 10(g)-2. Details are not described herein again.

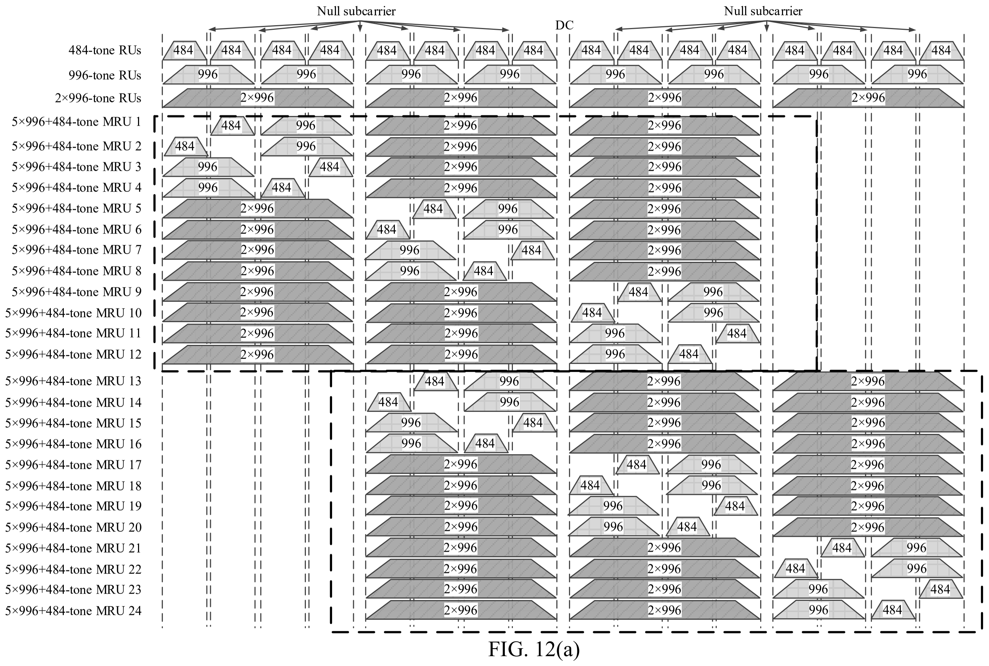

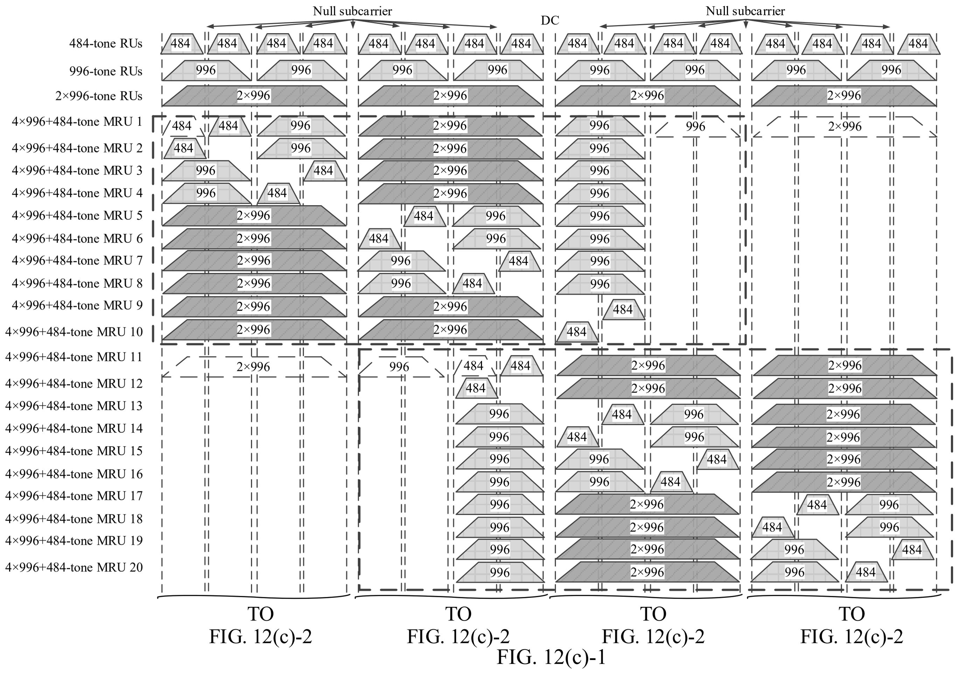

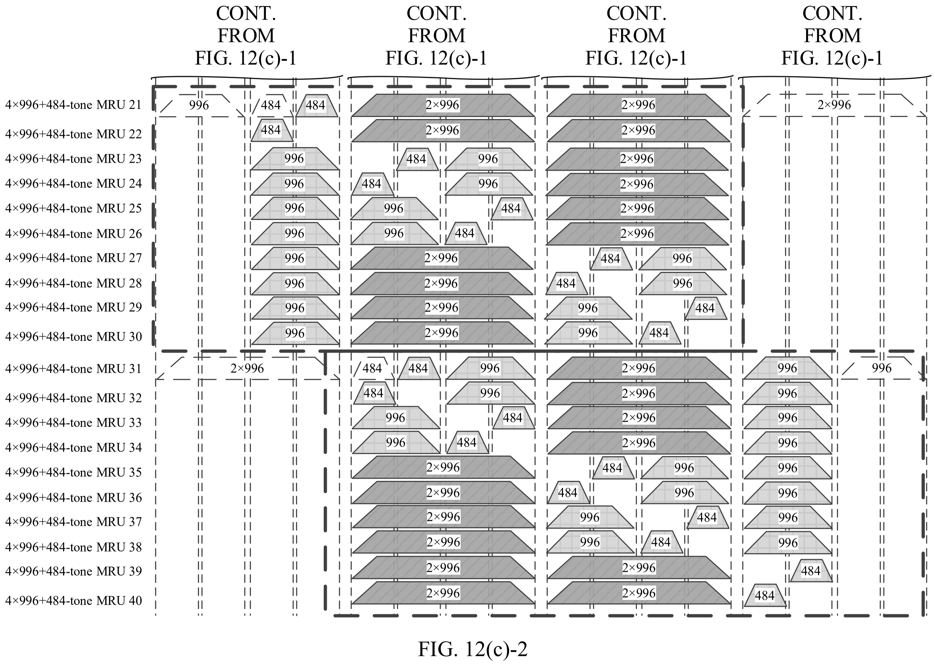

For ease of understanding, with reference to FIG. 12(a) to FIG. 12(c)-2, how the MRU corresponding to the 480 MHz bandwidth reuses a part of an MRU in 640 MHz is described.

It can be learned from FIG. 12(a) that, the MRU corresponding to the 480 MHz bandwidth may be in a 5×996+484-tone MRU mode, and a part shown in a dashed box in FIG. 12(a) may be an MRU mode corresponding to the 480 MHz bandwidth.

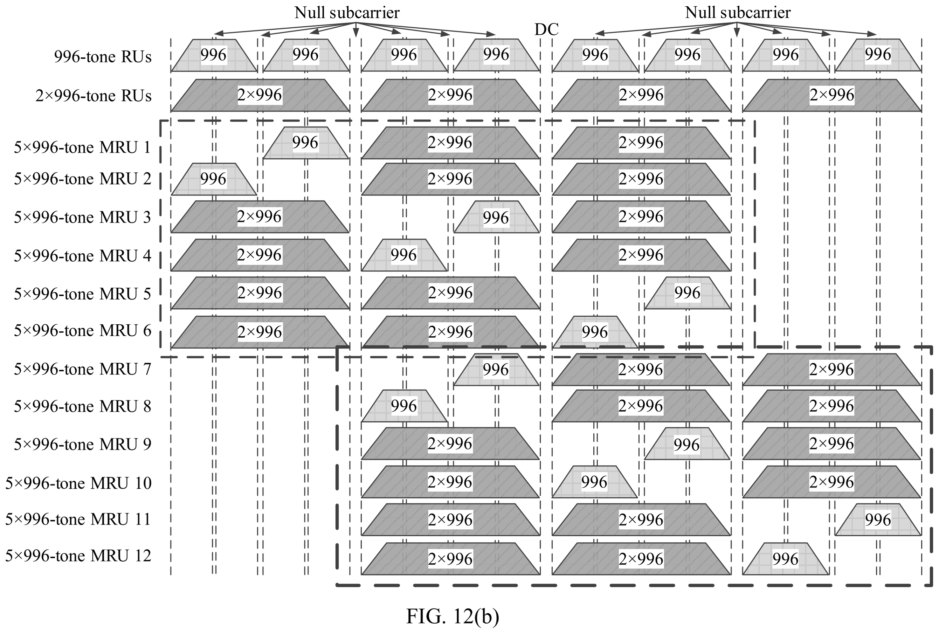

It can be learned from FIG. 12(b) that, the MRU corresponding to the 480 MHz bandwidth may be in a 5×996-tone MRU mode, and a part shown in a dashed box in FIG. 12(b) may be an MRU mode corresponding to the 480 MHz bandwidth.

It can be learned from FIG. 12(c)-1 and FIG. 12(c)-2 that, the MRU corresponding to the 480 MHz bandwidth may be in a 4×996+484-tone MRU mode, and a part shown in a dashed box in FIG. 12(c)-1 and FIG. 12(c)-2 may be an MRU mode corresponding to the 480 MHz bandwidth.

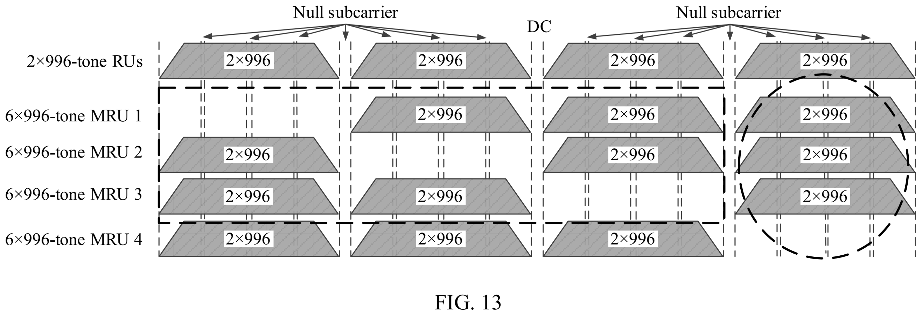

In addition, it should be noted that, although the 6×996-tone MRU in Manner 1.2 is also obtained by puncturing one 2×996-tone in the non-OFDMA 640 MHz, the MRU corresponding to the 480 MHz bandwidth cannot reuse the 6×996-tone MRU mode, because the MRU in the 480 MHz bandwidth needs to meet both conditions of a continuous 480 MHz bandwidth and puncturing in the continuous bandwidth. However, any one of the 6×996-tone MRUs meets only one of the conditions, as shown in FIG. 13.

Manner 2.2: An MRU mode that meets the 480 MHz bandwidth is designed for the 480 MHz bandwidth, and one 40 MHz subchannel is punctured in non-OFDMA 480 MHz, to implement OFDMA transmission.

For example, in the case shown in Manner 2.2, when one 40 MHz subchannel is punctured in the non-OFDMA 480 MHz (or one 484-tone RU is punctured in the non-OFDMA 480 MHz), the 480 MHz bandwidth after puncturing may include a 5×996+484-tone MRU. It may be understood that the non-OFDMA 480 MHz includes a 6×996-tone MRU (for example, if one 80 MHz corresponds to one 996-tone RU, 480 MHz corresponds to a 6×996-tone MRU). When one 40 MHz subchannel is punctured in the non-OFDMA 480 MHz, the 480 MHz bandwidth after puncturing may include a (6-1)×996+484-tone MRU, namely, a 5×996+484-tone MRU.

Specifically, if the 480 MHz after puncturing is allocated to one user, and the punctured 40 MHz subchannel is allocated to another user, OFDMA transmission can be implemented.

For example, the 5×996+484-tone MRU may be considered as a combination of one 4×996-tone RU, one 996-tone RU, and one 484-tone RU.

Alternatively, the 5×996+484-tone MRU may be considered as a combination of two 2×996-tone RUs, one 996-tone RU, and one 484-tone RU.

Alternatively, the 5×996+484-tone MRU may be considered as a combination of five 996-tone RUs and one 484-tone RU.

It should be understood that how to obtain the 5×996+484-tone MRU is not limited in embodiments. The foregoing several combination manners are merely examples, and do not constitute any limitation on the protection scope of this application.

It should be further understood that data subcarriers of the 5×996+484-tone MRU are formed by a combination of data subcarriers of a plurality of RUs that form the 5×996+484-tone MRU, and pilot subcarriers of the 5×996+484-tone MRU are formed by pilot subcarriers of the plurality of RUs that form the 5×996+484-tone MRU. For example, if the 5×996+484-tone MRU is a combination of two 2×996-tone RUs, one 996-tone RU, and one 484-tone RU, the data subcarriers of the 5×996+484-tone MRU are a combination of data subcarriers of the two 2×996-tone RUs, the 996-tone RU, and the 484-tone RU. The pilot subcarriers of the 5×996+484-tone MRU include pilot subcarriers of the two 2×996-tone RUs, the 996-tone RU, and the 484-tone RU.

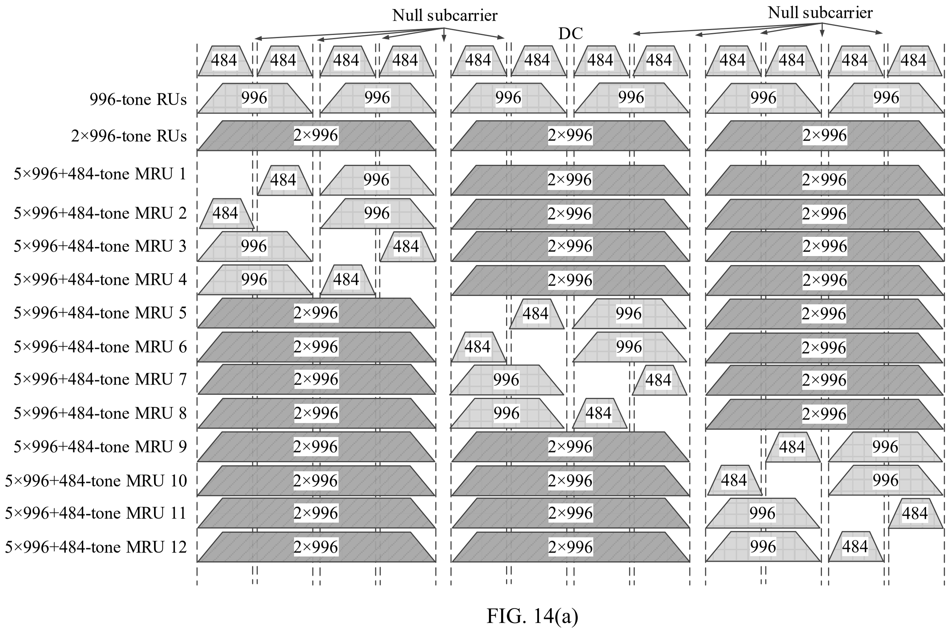

For ease of understanding, the following describes in detail a possible form of the 5×996+484-tone MRU with reference to FIG. 14(a).

It can be learned from FIG. 14(a) that, a 5×996+484-tone MRU pattern includes 12 MRU patterns in total: a 5×996+484-tone MRU 1 to a 5×996+484-tone MRU 12, as shown in FIG. 14(a).

Manner 2.3: An MRU mode that meets the 480 MHz bandwidth is designed for the 480 MHz bandwidth, and one 80 MHz subchannel is punctured in non-OFDMA 480 MHz, to implement OFDMA transmission.

For example, in the case shown in Manner 2.3, when one 80 MHz subchannel is punctured in the non-OFDMA 480 MHz (or one 996-tone RU is punctured in the non-OFDMA 480 MHz), the 480 MHz bandwidth after puncturing may include a 5×996-tone MRU. It may be understood that the non-OFDMA 480 MHz includes a 6×996-tone MRU (for example, if one 80 MHz corresponds to one 996-tone RU, 480 MHz corresponds to a 6×996-tone MRU). When one 80 MHz subchannel is punctured in the non-OFDMA 480 MHz, the 480 MHz bandwidth after puncturing may include a (6-1)×996-tone MRU, namely, a 5×996-tone MRU.

For example, the 5×996-tone MRU may be considered as a combination of one 4×996-tone RU and one 996-tone RU.

Alternatively, the 5×996-tone MRU may be considered as a combination of two 2×996-tone RUs and one 996-tone RU.

Alternatively, the 5×996-tone MRU may be considered as a combination of five 996-tone RUs.

It should be understood that how to obtain the 5×996-tone MRU is not limited in embodiments. The foregoing several combination manners are merely examples, and do not constitute any limitation on the protection scope of this application.

It should be further understood that data subcarriers of the 5 ×996-tone MRU are formed by a combination of data subcarriers of a plurality of RUs that form the 5×996-tone MRU, and pilot subcarriers of the 5×996-tone MRU are formed by pilot subcarriers of the plurality of RUs that form the 5×996-tone MRU. For example, if the 5×996-tone MRU is a combination of two 2×996-tone RUs and one 996-tone RU, data subcarriers of the 5×996-tone MRU are formed by a combination of data subcarriers of the two 2×996-tone RUs and the 996-tone RU. The pilot subcarriers of the 5×996-tone MRU include pilot subcarriers of the two 2×996-tone RUs and the 996-tone RU.

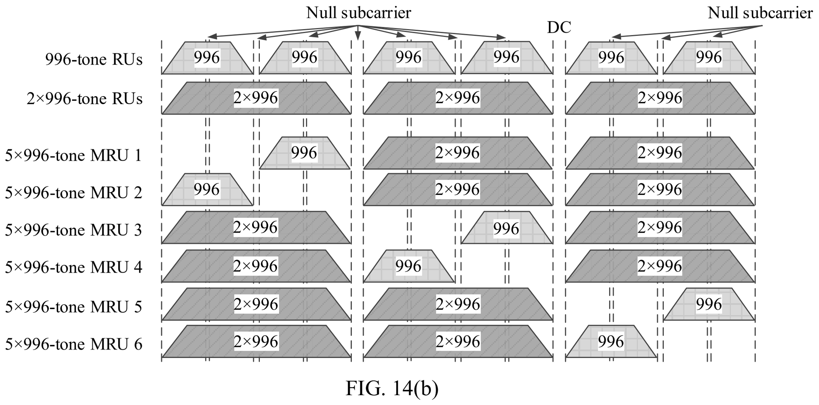

For ease of understanding, the following describes in detail a possible form of the 5×996-tone MRU with reference to FIG. 14(b).

It can be learned from FIG. 14(b) that, a 5×996-tone MRU pattern includes six MRU patterns in total: a 5×996-tone MRU 1 to a 5×996-tone MRU 6, as shown in FIG. 14(b).

Manner 2.4: An MRU mode that meets the 480 MHz bandwidth is designed for the 480 MHz bandwidth, and one 80 MHz subchannel is punctured and then one 40 MHz subchannel is punctured in non-OFDMA 480 MHz, to implement OFDMA transmission.

For example, in the case shown in Manner 2.4, one 996-tone RU 1 is punctured in the non-OFDMA 480 MHz (or one 80 MHz subchannel #1 is punctured in the non-OFDMA 640 MHz), and one 40 MHz subchannel is punctured in remaining 480 MHz (or one 484-tone RU is punctured in remaining 480 MHz).

Alternatively, one 996-tone RU 6 is punctured in the non-OFDMA 480 MHz (or one 80 MHz subchannel #6 is punctured in the non-OFDMA 640 MHz), and one 40 MHz subchannel is punctured in remaining 480 MHz. The 480 MHz bandwidth after puncturing may include a 4×996+484-tone MRU. A 996-tone RU x indicates an x^{th} 996-tone RU. Different RUs do not have overlapping subcarriers. It may be understood that the non-OFDMA 480 MHz includes a 6×996-tone MRU (for example, if one 80 MHz corresponds to one 996-tone RU, 640 MHz corresponds to an 8×996-tone MRU). When one 996-tone RU and one 40 MHz subchannel are punctured in the non-OFDMA 480 MHz, the 480 MHz bandwidth after puncturing may include a (6-2)×996+484-tone MRU, namely, a 4×996+484-tone MRU.

Specifically, if the 480 MHz after puncturing is allocated to one user, and the punctured 120 MHz subchannel is allocated to another user, OFDMA transmission can be implemented.

In the case shown in Manner 2.4, two holes are punctured in the non-OFDMA 480 MHz, one hole is the 80 MHz subchannel (or a 996-tone RU), and one hole is the 40 MHz subchannel (or a 484-tone RU). The 996-tone RU is greater than the 484-tone RU. It can be learned from the MRU design rules described in the foregoing basic concepts that "when the MRU has a plurality of holes, a hole with a larger size is located outside data subcarriers, and a hole with a smaller size is located between the data subcarriers". Therefore, in the case shown in Manner 2.4, the hole of the 996-tone RU (for example, the foregoing 996-tone RU 1 or the foregoing 996-tone RU 6) is located outside data subcarriers. The hole of the 484-tone RU is located between the data subcarriers.

For example, the 4×996+484-tone MRU may be considered as a combination of one 2×996-tone RU, two 2×996-tone RUs, and one 484-tone RU.

Alternatively, the 4×996+484-tone MRU may be considered as a combination of two 2×996-tone RUs and one 484-tone RU.

Alternatively, the 4×996+484-tone MRU may be considered as a combination of four 996-tone RUs and one 484-tone RU.

It should be understood that how to obtain the 4×996+484-tone MRU is not limited in embodiments. The foregoing several combination manners are merely examples, and do not constitute any limitation on the protection scope of this application.

It should be further understood that data subcarriers of the 4×996+484-tone MRU are formed by a combination of data subcarriers of a plurality of RUs that form the 4×996+484-tone MRU, and pilot subcarriers of the 4×996+484-tone MRU are formed by pilot subcarriers of the plurality of RUs that form the 4×996+484-tone MRU. For example, if the 4×996+484-tone MRU is a combination of one 2×996-tone RU, two 2×996-tone RUs, and one 484-tone RU, the data subcarriers of the 4×996-tone MRU are a combination of data subcarriers of the 2×996-tone RU, the two 2×996-tone RUs, and the 484-tone RU. The pilot subcarriers of the 4×996-tone MRU include pilot subcarriers of the 2×996-tone RU, the two 2×996-tone RUs, and the 484-tone RU.

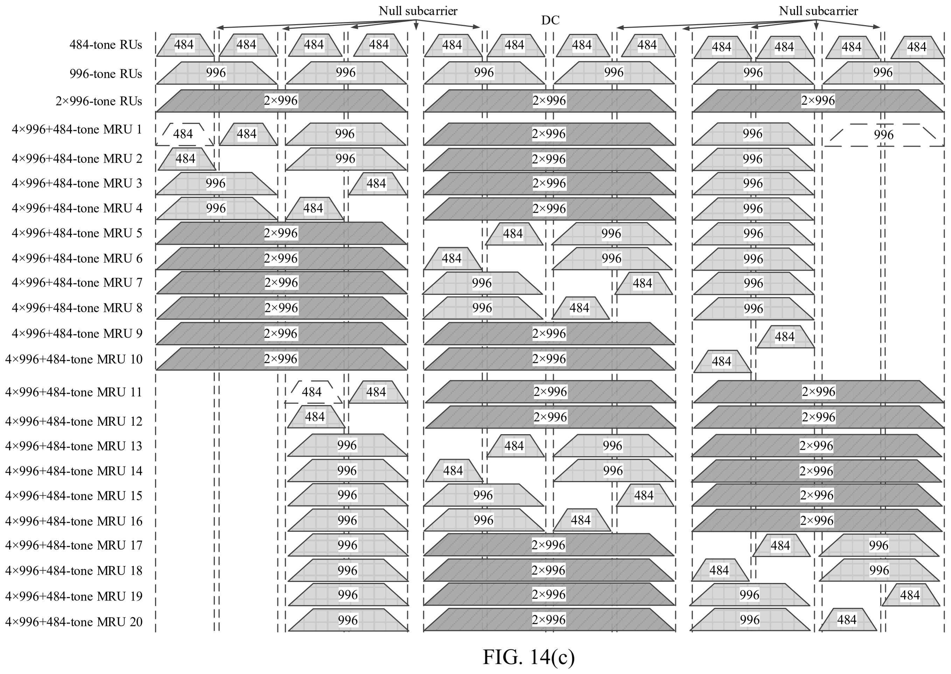

For ease of understanding, the following describes in detail a possible form of the 5×996-tone MRU with reference to FIG. 14(c).

It can be learned from FIG. 14(c) that, a 4×996+484-tone MRU pattern includes 20 MRU patterns in total: a 4×996+484-tone MRU 1 to a 4×996+484-tone MRU 20, as shown in FIG. 14(c). Higher 80 MHz of the 4×996+484-tone MRU 1 to the 4×996+484-tone MRU 10 is punctured, and lower 80 MHz of the 4×996+484-tone MRU 11 to the 4×996+484-tone MRU 20 is punctured.

Manner 2.5: An MRU mode that meets the 480 MHz bandwidth is designed for the 480 MHz bandwidth, and one 160 MHz subchannel is punctured in non-OFDMA 480 MHz, to implement OFDMA transmission.

For example, in the case shown in Manner 2.4, one 2×996-tone RU is punctured in the non-OFDMA 480 MHz (or one 160 MHz subchannel is punctured in the non-OFDMA 640 MHz), and the 480 MHz bandwidth after puncturing may include a 4×996-tone MRU. It may be understood that the non-OFDMA 480 MHz includes a 6×996-tone MRU (for example, if one 80 MHz corresponds to one 996-tone RU, 640 MHz corresponds to an 8×996-tone MRU). When one 996-tone RU is punctured in the non-OFDMA 480 MHz, the 480 MHz bandwidth after puncturing may include a (6-2)×996-tone MRU, namely, a 4×996-tone MRU.

Specifically, if the 480 MHz after puncturing is allocated to one user, and the punctured 160 MHz subchannel is allocated to another user, OFDMA transmission can be implemented.

For example, the 4×996-tone MRU may be considered as a combination of one 2×996-tone RU and two 2×996-tone RUs.

Alternatively, the 4×996-tone MRU may be considered as a combination of two 2×996-tone RUs.

Alternatively, the 4×996-tone MRU may be considered as a combination of four 996-tone RUs.

It should be understood that how to obtain the 4×996-tone MRU is not limited in embodiments. The foregoing several combination manners are merely examples, and do not constitute any limitation on the protection scope of this application.

It should be further understood that data subcarriers of the 4×996-tone MRU are formed by a combination of data subcarriers of a plurality of RUs that form the 4×996-tone MRU, and pilot subcarriers of the 4×996-tone MRU are formed by pilot subcarriers of the plurality of RUs that form the 4×996-tone MRU. For example, if the 4×996-tone MRU is a combination of one 2×996-tone RU and two 2×996-tone RUs, data subcarriers of the 4×996-tone MRU are formed by a combination of data subcarriers of the 2×996-tone RU and the two 2×996-tone RUs. The pilot subcarriers of the 4×996-tone MRU include pilot subcarriers of the 2×996-tone RU and the two 2×996-tone RUs.

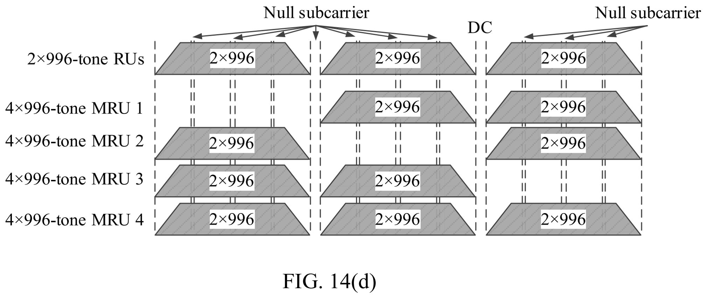

For ease of understanding, the following describes in detail a possible form of the 5×996-tone MRU with reference to FIG. 14(d).

It can be learned from FIG. 14(d) that, a 4×996-tone MRU pattern includes three MRU patterns in total: a 4×996-tone MRU 1 to a 4×996-tone MRU 3, as shown in FIG. 14(d).

In conclusion, for the 480 MHz bandwidth, two MRU pattern design solutions are provided: reusing (namely, Manner 2.1, which may be referred to as an MRU pattern #3) and not reusing (namely, Manner 2.2 to Manner 2.5, which may be referred to as an MRU pattern #3) some MRU patterns of the 640 MHz bandwidth. The designed 480 MHz-oriented MRU patterns can meet channel puncturing and OFDMA transmission of 480 MHz.

In Manner 1 and Manner 2, the possible related MRU modes are described in detail by using bandwidths of 640 MHz and 480 MHz. In this embodiment, a specific size of the bandwidth is not limited. For example, a future bandwidth may be 2×480 MHz, and for an MRU mode corresponding to the 2×480 MHz bandwidth, refer to the design of the MRU mode corresponding to 480 MHz. Examples are not described herein again. MRU modes designed for different bandwidths may be referred to as MRU modes included in the bandwidths, MRU modes corresponding to the bandwidths, or MRU modes included in the bandwidths. This is not limited in this application.

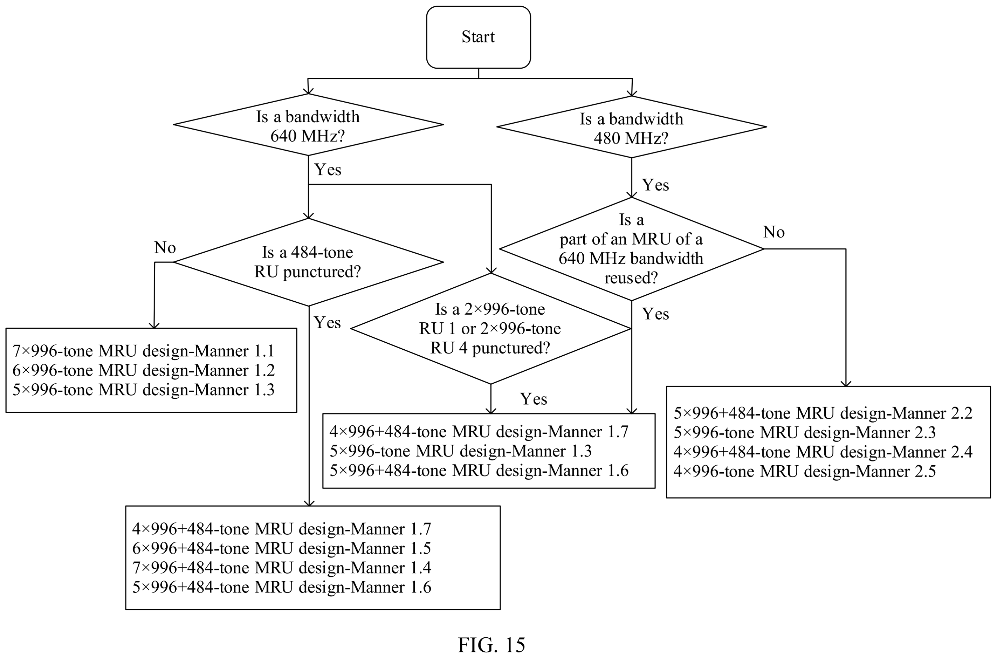

In addition, as described above, MRU modes of different bandwidth have different possibilities. Therefore, when a bandwidth may be 640 MHz or 480 MHz, before MRU allocation, an AP may determine a specific manner of designing an appropriate MRU. For ease of understanding, the following describes in detail, with reference to FIG. 15, how the AP determines a manner of designing an MRU mode in this embodiment.

It can be learned from FIG. 15 that, it may be determined that a bandwidth is 640 MHz or 480 MHz, and after the bandwidth is determined, the MRU mode may be determined in Manner 1 or Manner 2. For a specific manner of determining the MRU mode, refer to the foregoing descriptions. Details are not described herein again.

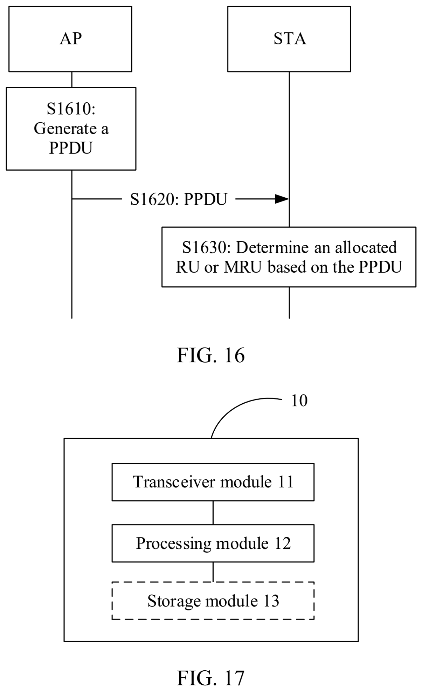

In addition, this application further provides a communication method. The communication method may indicate the MRU mode in the communication method shown in FIG. 9. It should be noted that the MRU mode indication method may further indicate another MRU mode. In this application, an MRU mode that may be specifically indicated in the following MRU mode method is not limited. For ease of description, the following describes in detail the communication method with reference to FIG. 16 by using an example in which the MRU mode in the communication method shown in FIG. 9 is indicated.

FIG. 16 is a schematic flowchart of another communication method according to an embodiment of this application. The following steps are included.

S1610: An AP generates a PPDU.

Specifically, the PPDU is used for an allocation status of a frequency resource.

In a possible implementation, the PPDU includes a resource allocation field, and the resource allocation field indicates an allocation status of a frequency resource of one or more stations. For example, the frequency resource includes an MRU.

Specifically, in this implementation, when a value range of the resource allocation field is greater than or equal to 304, the resource allocation field indicates an MRU corresponding to a bandwidth greater than 320 MHz. For example, the resource allocation field indicates the MRU mode designed for the 640 MHz bandwidth and/or the MRU mode designed for the 480 MHz bandwidth in the communication method shown in FIG. 9.

In addition, the resource allocation field is compatible with an indication function of the resource allocation field defined in a current protocol. For example, when the value range of the resource allocation field is greater than or equal to 0 and less than or equal to 303, the resource allocation field indicates an MRU corresponding to a bandwidth less than or equal to 320 MHz.

For example, in this implementation, the resource allocation field further indicates an RU, and the RU includes at least one of a 484-tone RU, a 996-tone RU, a 2×996-tone RU, and a 4×996-tone RU.

Optionally, the resource allocation field is X bits, and X is an integer greater than or equal to 9.

If a number of MRUs that are indicated by the resource allocation field and that correspond to the bandwidth greater than 320 MHz is less than or equal to 28 (for example, the MRU pattern #1 corresponding to the 640 MHz bandwidth), the resource allocation field is X bits (X is equal to 9), and may be compatible with indicating the MRU corresponding to the bandwidth less than or equal to 320 MHz and the MRU corresponding to the bandwidth greater than 320 MHz.

If a number of MRUs that are indicated by the resource allocation field and that correspond to the bandwidth greater than 320 MHz is greater than 28 (for example, the MRU pattern #2 corresponding to the 640 MHz bandwidth), the resource allocation field is X bits (X is an integer greater than 9), and may be compatible with indicating the MRU corresponding to the bandwidth less than or equal to 320 MHz and the MRU corresponding to the bandwidth greater than 320 MHz.

In another possible implementation, the PPDU includes a resource allocation field and a combination field, and the resource allocation field and the combination field indicate an allocation status of a frequency resource of a station. For example, the frequency resource includes an MRU.

Specifically, in this implementation, the resource allocation field includes information indicating an MRU corresponding to a P MHz bandwidth (for example, a bandwidth less than or equal to 320 MHz), P is greater than 160, and the combination field indicates whether a first resource block on a left side of a direct current subcarrier in 2×P MHz and a second resource block on a right side of the direct current subcarrier are combined. The first resource block on the left side of the direct current subcarrier may be understood as a low-frequency resource block, and the second resource block on the right side of the direct current subcarrier may be understood as a high-frequency resource block.

Further, if the combination field indicates that the first resource block and the second resource block are not combined, the first resource block and the second resource block are separately allocated to different stations; or if the combination field indicates that the first resource block and the second resource block are combined, the first resource block and the second resource block are allocated to a same station.

For example, in this implementation, the resource allocation field further indicates an RU, and the RU includes at least one of a 484-tone RU, a 996-tone RU, a 2×996-tone RU, and a 4×996-tone RU.

For example, the first resource block includes any one of the following:
a 1^{st} adjacent RU on the left side of the direct current subcarrier in the bandwidth, a 1^{st} adjacent MRU on the left side of the direct current subcarrier in the bandwidth, a 2^{nd} adjacent RU on the left side of the direct current subcarrier in the bandwidth, or a 2^{nd} adjacent MRU on the left side of the direct current subcarrier in the bandwidth.

The second resource block includes any one of the following:
a 1^{st} adjacent RU on the right side of the direct current subcarrier in the bandwidth, a 1^{st} adjacent MRU on the right side of the direct current subcarrier in the bandwidth, a 2^{nd} adjacent RU on the right side of the direct current subcarrier in the bandwidth, or a 2^{nd} adjacent MRU on the right side of the direct current subcarrier in the bandwidth.

Further, after generating the PPDU, the AP sends the PPDU to one or more STAs, and the method shown in FIG. 16 further includes the following steps.

S1620: The AP sends the PPDU to a STA, or the STA receives the PPDU from the AP.

The STA is any one of the one or more STAs. A transmission manner of the PPDU is not limited in this embodiment. For details, refer to descriptions of a transmission manner that is of the PPDU between the AP and the STA and that is specified in an existing protocol or a future protocol. Details are not described herein.

S1630: The STA determines an allocated RU or MRU based on the PPDU.

In this embodiment, the STA may determine the allocated RU or MRU based on the received PPDU. Specifically, the STA determines the allocated RU or MRU based on resource indication information included in the PPDU.

In a possible implementation, the STA may receive data or information from the AP on the allocated RU or MRU. For example, the STA receives data from an RU or an MRU of a 640 MHz bandwidth from the AP.

In another possible implementation, the STA may send data or information to the AP on the allocated RU or MRU. For example, the STA may send a PPDU to the AP on the allocated RU or MRU (for differentiation, the PPDU sent by the AP to the STA may be referred to as a PPDU #1, and the PPDU sent by the STA to the AP may be referred to as a PPDU #2).

For ease of understanding, the following describes in detail, with reference to Manner 3 to Manner 5, how the PPDU in this application indicates different MRUs corresponding to the 640 MHz bandwidth.

Manner 3: The PPDU includes the resource allocation field (for example, an RU Allocation subfield).

For ease of description, an example in which the resource allocation field is the RU allocation subfield is used for description. For a case in which the resource allocation field is another frequency resource allocation field (for example, a field used for frequency resource allocation defined in a future protocol), refer to the following descriptions of the RU allocation subfield. Details are not described in this embodiment.

Specifically, a remaining resource of the RU allocation subfield in the standard may be further used for allocation of 28 MRUs (there are 208 entries, and every eight entries are allocated to one MRU).

In a possible implementation, the MRU mode corresponding to the 640 MHz bandwidth is obtained by directly doubling the MRU mode corresponding to the 320 MHz bandwidth (for example, the MRU pattern #1), that is, several forms shown in Manner 1.1 to Manner 1.3. The MRU mode corresponding to the 640 MHz bandwidth includes 24 MRU modes in total (for example, a total of 8 MRU modes shown in FIG. 10(a): the 7×996-tone MRU 1 to the 7×996-tone MRU 8+a total of 4 MRU modes shown in FIG. 10(b): the 6×996-tone MRU 1 to the 6×996-tone MRU 4+a total of 12 MRU modes shown in FIG. 10(c): the 5×996-tone MRU 1 to the 5×996-tone MRU 12=24 MRU modes).

In this implementation, there are 24 MRU modes corresponding to the 640 MHz bandwidth, and the remaining resource of the RU allocation subfield may be further used to allocate 28 MRUs. Therefore, in this implementation, different MRUs may be indicated by designing the RU Allocation subfield.

For ease of understanding, with reference to Table 1, a possible form of the RU allocation subfield in this implementation is described.

**Table 1 RU allocation subfield**

| RU allocation subfield (B8 B7 B6 B5 B4 B3 B2 B1 B0) | | | | | | | | | | Number of entries (Number of entries) |
|---|---|---|---|---|---|---|---|---|---|---|
| 0 to 303 (000000000 to 100101111) | Compatible with 802.11be and consistent with content in Table 36-34 in 802.11be | | | | | | | | | 304 |
| 304 to 311 (100110y2y1y0) | 2×996-tone RU; allocated but not set a user specific field (User Specific field) in a content channel (content channel) of a corresponding next-generation signal field (SIG field) (for example, UHR-SIG) | | | | | | | | | 8 |
| 312 to 319 (100111y2yly0) | 4×996 | | | | | | | | | 8 |
| 320 to 327 (101000y2yly0) | MRU mode: [gap-996]-996-2×996-2×996-2×996, that is, 7×996-tone MRU-1 | | | | | | | | | 8 |
| 328 to 335 (101001y2yly0) | MRU mode: 996-[gap-996]-2×996-2×996-2×996, that is, 7×996-tone MRU-2 | | | | | | | | | 8 |
| 336 to 343 (101010y2yly0) | MRU mode: 2×996-[gap-996]-996-2×996-2×996, that is, 7×996-tone MRU-3 | | | | | | | | | 8 |
| 344 to 351 (101011y2y1y0) | MRU mode: 2×996-996-[gap-996]-2×996-2×996, that is, 7×996-tone MRU-4 | | | | | | | | | 8 |
| 352 to 359 (101100y2yly0) | MRU mode: 2×996-2×996-[gap-996]-996-2×996, that is, 7×996-tone MRU-5 | | | | | | | | | 8 |
| 360 to 367 (101101y2yly0) | MRU mode: 2×996-2×996-996-[gap-996]-2×996, that is, 7×996-tone MRU-6 | | | | | | | | | 8 |
| 368 to 375 (101110y2yly0) | MRU mode: 2×996-2×996-2×996-[gap-996]-996, that is, 7×996-tone MRU-7 | | | | | | | | | 8 |
| 376 to 383 (101111y2y1y0) | MRU mode: 2×996-2×996-2×996-996-[gap-996], that is, 7×996-tone MRU-8 | | | | | | | | | 8 |
| 384 to 391 (110000y2yly0) | MRU mode: [gap-2×996]-2×996-2×996-2×996, that is, 6×996-tone MRU-1 | | | | | | | | | 8 |
| 392 to 399 (110001y2yly0) | MRU mode: 2×996-[gap-2×996]-2×996-2×996, that is, 6×996-tone MRU-2 | | | | | | | | | 8 |
| 400 to 407 (110010y2yly0) | MRU mode: 2×996-2×996-[gap-2×996]- 2×996, that is, 6×996-tone MRU-3 | | | | | | | | | 8 |
| 408 to 415 (110011y2y1y0) | MRU mode: 2×996-2×996-2×996-[gap-2×996], that is, 6×996-tone MRU-4 | | | | | | | | | 8 |
| 416 to 423 (110100y2yly0) | MRU mode: [gap-996]-996-2×996-2×996, that is, 5×996-tone MRUs 1 and 7 are respectively in a 480 MHz subblock formed by the 1^{st}, 2^{nd}, and 3^{rd} 160 MHz frequency subblocks and a 480 MHz subblock formed by the 2^{nd}, 3^{rd}, and 4^{th} 160 MHz frequency subblocks (frequencies of the 1^{st}, 2^{nd}, 3^{rd}, and 4^{th} frequency subblocks increase in ascending order) (within the 480 MHz subblock composed of the first, second, and third 160 MHz frequency subblock and the 480 MHz subblock composed of the second, third, and fourth 160 MHz frequency subblock in increasing frequency order, respectively). | | | | | | | | | 8 |
| 424 to 431 (110101y2y1y0) | MRU mode: 996-[gap-996]-2×996-2×996, that is, 5×996-tone MRUs 2 and 8 are respectively in a 480 MHz subblock formed by the 1^{st}, 2^{nd}, and 3^{rd} 160 MHz frequency subblocks and a 480 MHz subblock formed by the 2^{nd}, 3^{rd}, and 4^{th} 160 MHz frequency subblocks (frequencies of the 1^{st}, 2^{nd}, 3^{rd}, and 4^{th} frequency subblocks increase in ascending order). | | | | | | | | | 8 |
| 432 to 439 (110110y2yly0) | MRU mode: 2×996-996-[gap-996]-2×996, that is, 5×996-tone MRUs 3 and 9 are respectively in a 480 MHz subblock formed by the 1^{st}, 2^{nd}, and 3^{rd} 160 MHz frequency subblocks and a 480 MHz subblock formed by the 2^{nd}, 3^{rd}, and 4^{th} 160 MHz frequency subblocks (frequencies of the 1^{st}, 2^{nd}, 3^{rd}, and 4^{th} frequency subblocks increase in ascending order). | | | | | | | | | 8 |
| 440 to 447 (110111y2y1y0) | MRU mode: 2×996-996-[gap-996]-2×996, that is, 5×996-tone MRUs 4 and 10 are respectively in a 480 MHz subblock formed by the 1^{st}, 2^{nd}, and 3^{rd} 160 MHz frequency subblocks and a 480 MHz subblock formed by the 2^{nd}, 3^{rd}, and 4^{th} 160 MHz frequency subblocks (frequencies of the 1^{st}, 2^{nd}, 3^{rd}, and 4^{th} frequency subblocks increase in ascending order). | | | | | | | | | 8 |
| 448 to 455 (111000y2y1y0) | MRU mode: 2×996-2×996-[gap-996]-996, that is, 5×996-tone MRUs 5 and 11 are respectively in a 480 MHz subblock formed by the 1^{st}, 2^{nd}, and 3^{rd} 160 MHz frequency subblocks and a 480 MHz subblock formed by the 2^{nd}, 3^{rd}, and 4^{th} 160 MHz frequency subblocks (frequencies of the 1^{st}, 2^{nd}, 3^{rd}, and 4^{th} frequency subblocks increase in ascending order). | | | | | | | | | 8 |
| 456 to 463 (111001y2y1y0) | MRU mode: 2×996-2×996-996-[gap-996], that is, 5×996-tone MRUs 6 and 12 are respectively in a 480 MHz subblock formed by the 1^{st}, 2^{nd}, and 3^{rd} 160 MHz frequency subblocks and a 480 MHz subblock formed by the 2^{nd}, 3^{rd}, and 4^{th} 160 MHz frequency subblocks (frequencies of the 1^{st}, 2^{nd}, 3^{rd}, and 4^{th} frequency subblocks increase in ascending order). | | | | | | | | | 8 |
| 464 to 471 (111010y2y1y0) | Disregard (Disregard) | | | | | | | | | 8 |
| 472 to 479 (111011y2y1y0) | Disregard | | | | | | | | | 8 |
| 480 to 487 (111100y2y1y0) | Disregard | | | | | | | | | 8 |
| 488 to 495 (111101y2y1y0) | Disregard | | | | | | | | | 8 |
| 496 to 503 | Disregard | | | | | | | | | 8 |
| (111110y2y1y0) | | | | | | | | | | |
| 504 to 511 (111111y2y1y0) | Disregard | | | | | | | | | 8 |

In Table 1, a number of entries in each row refers to a number of RU allocation subfield values in the corresponding row (for example, Number of entries=8 in the 3^{rd} row in Table 1 indicates that there are eight RU allocation subfield values in 304 to 311), and the RU allocation subfield value refers to same RU allocation to be used in frequency domain. However, in this case, when the RU allocation subfield value changes, a number of user fields of user specific fields in an EHT-SIG content channel corresponding to the RU allocation subfield changes accordingly.

In addition, the RU allocation subfield of the RU or the MRU may be represented by a value in a range of 304 to 463 (100110y2yly0 to 111001y2yly0 in binary representation), and y2yly0 indicates a number of user fields in a corresponding content channel.

It can be learned from Table 1 that, when the RU allocation subfield value is in 0 to 303, the MRU corresponding to the bandwidth less than or equal to 320 MHz may be indicated. For a specific indication manner, refer to descriptions of how the RU allocation subfield indicates MRUs corresponding to different bandwidths (for example, MRUs corresponding to 20 MHz, 40 MHz, 80 MHz, 160 MHz, and 320 MHz) in a current protocol (for example, the 802.11be standard). Details are not described herein again. Further, a remaining resource of the RU allocation subfield in the current standard may indicate an MRU mode (for example, the MRU pattern #1) corresponding to the 640 MHz bandwidth. Specifically, when the RU allocation subfield value is in 304 to 311, a 2×996-tone RU may be indicated. By analogy, when the RU allocation subfield value is in 312 to 319, a 4×996-tone RU may be indicated. Until the RU allocation subfield value is in 456 to 463 (as shown in Table 1), different indication content is defined, to indicate the MRU mode corresponding to the 640 MHz bandwidth.

It can be learned from the foregoing descriptions that, in the indication manner shown in Manner 3, a maximum of 28 MRUs may be allocated. However, if the MRU mode (for example, the MRU pattern #2) corresponding to the 640 MHz bandwidth is not directly doubled from the MRU mode corresponding to the 320 MHz bandwidth, there is a total of 132 MRU modes corresponding to the 640 MHz bandwidth (that is, a total number of all MRU modes in Manner 1.1 to Manner 1.7). If an indication is newly added to the RU allocation field, 132×8=1056 entries are required, and overheads are large. To reduce indication overheads, this application further provides another indication manner.

Manner 4: An MRU mode is indicated by indicating whether resource blocks on two sides of the direct current subcarrier are combined.

Specifically, in the case shown in Manner 4, the PPDU includes the resource configuration field and the combination field.

For example, at least two bits may be added to U-SIG or SIG (for example, UHR-SIG) in next-generation Wi-Fi as a combination field (for example, an MRU Combining Indication field).

In a possible implementation, the MRU combining indication field is the two newly added bits in the signal field, and in this case:
if the MRU combining indication field is 0, it indicates that no combination is performed;
if the MRU combining indication field is 1, it indicates that a 1^{st} RU or MRU on a left side of the direct current subcarrier position and a 2^{nd} RU or MRU on a right side of the direct current subcarrier position are combined;
if the MRU combining indication field is 2, it indicates that a 2^{nd} RU or MRU on a left side of the direct current subcarrier position and a 1^{st} RU or MRU on a right side of the direct current subcarrier position are combined; or
if the MRU combining indication field is 3, it indicates that a 1^{st} RU or MRU on a left side of the direct current subcarrier position and a 1^{st} RU or MRU on a right side of the direct current subcarrier position are combined.

For ease of understanding, the following describes, with reference to specific examples, how the MRU combining indication field indicates different MRUs.

In a 640 MHz PPDU, a direct current subcarrier position divides the PPDU into two 320 MHz. An original RU allocation field indication method for 320 MHz is used to separately indicate two 320 MHz bandwidths, and then an MRU combining indication field indicates a manner of combining two sides of the direct current subcarrier position. Values of the MRU combining indication field:
0: RUs/MRUs on the left and right sides of the direct current subcarrier position in 640 MHz are not combined;
1: A 1^{st} RU/MRU on a left side of the direct current subcarrier location in 640 MHz and a 2^{nd} RU/MRU on a right side of the direct current subcarrier location are combined;
2: A 2^{nd} RU/MRU on the left side of the direct current subcarrier location in 640 MHz and a 1^{st} RU/MRU on the right side of the direct current subcarrier location are combined; and
3: The 1^{st} RU/MRU on the left side of the direct current subcarrier location in 640 MHz and the 1^{st} RU/MRU on the right side of the direct current subcarrier location are combined.

For example, a 5×996-tone MRU 1 for 640 MHz includes a 996-tone RU, a 3×996-tone MRU 1, DC, a 2×996-tone RU, and a 2×996-tone RU with frequencies in ascending order.

If the MRU combining indication field is 0, no MRU with a bandwidth greater than 320 MHz exists in the 640 MHz PPDU.

If the MRU combining indication field is 3, the 1^{st} RU/MRU (the 3×996-tone MRU 1) on the left side of the direct current subcarrier position in 640 MHz and the 1^{st} RU/MRU (the 2×996-tone RU) on the right side of the direct current subcarrier position are combined, and a user may learn, based on a combined MRU, that a 5×996-tone MRU 1 for the 640 MHz PPDU is actually allocated.

For another example, a 7×996-tone MRU 4 for the 640 MHz PPDU includes a 3×996-tone MRU 4, a 996-tone RU, DC, and a 4×996-tone RU with frequencies in ascending order.

If the MRU combining indication field is 0, no MRU with a bandwidth greater than 320 MHz exists in the 640 MHz PPDU.

If the MRU combining indication field is 2, the 2^{nd} RU/MRU (the 3×996-tone MRU 4) on the left side of the direct current subcarrier position in 640 MHz and the 1^{st} RU/MRU (the 4×996-tone RU) on the right side of the direct current subcarrier position are combined and allocated to a same user. The user may learn, based on a combined MRU, that a 7×996-tone MRU 4 oriented to the 640 MHz PPDU is actually allocated.

For another example, a 7×996-tone MRU 4 for the 640 MHz PPDU includes a 4×996-tone RU, a 996-tone RU, DC, and a 3×996-tone MRU 1 with frequencies in ascending order.

If the MRU combining indication field is 0, no MRU with a bandwidth greater than 320 MHz exists in the 640 MHz PPDU.

If the MRU combining indication field is 1, the 1^{st} RU/MRU (the 4×996-tone RU) on the left side of the direct current subcarrier position in 640 MHz and the 2^{nd} RU/MRU (the 3×996-tone MRU 1) on the right side of the direct current subcarrier position are combined and allocated to a same user. The user may learn, based on a combined MRU, that a 7×996-tone MRU 4 oriented to the 640 MHz PPDU is actually allocated.

In addition, the current RU allocation subfield may be extended to indicate different MRU modes, as shown in the following Manner 5.

Manner 5: The PPDU includes the resource allocation field, and the RU allocation subfield includes 10 bits. It should be noted that, in the case shown in Manner 5, that the RU allocation subfield is 10 bits is used for description. Actually, the RU allocation subfield may be X bits (X is an integer greater than 9).

Specifically, if the RU allocation subfield is extended from 9 bits (for example, B8 B7 B6 B5 B4 B3 B2 B1 B0 in Table 1) to 10 bits (B9 B8 B7 B6 B5 B4 B3 B2 B1 B0) in this embodiment, it is equivalent to that 2⁹=512 entries (entries) are added, and every 8 entries are allocated to one MRU. It is equivalent to that a remaining resource of the RU allocation subfield and a resource obtained through extension may be further used for allocation of 28+64=92 MRUs. However, for 132 MRU modes corresponding to the 640 MHz bandwidth, same entries may indicate a plurality of MRU modes. Therefore, the number of entries after extension can meet the requirement of indicating 132 MRU modes.

For example, the 132 MRU modes corresponding to the 640 MHz bandwidth include a 7×996+484-tone MRU, a 7×996-tone MRU, a 6×996+484-tone MRU, a 6×996-tone MRU, a 5×996+484-tone MRU, a 5×996-tone MRU, and a 4×996+484-tone MRU. A specific number of entries required for each MRU mode is as follows:
7×996+484-tone MRU: 16×1 (a same entry indicates one MRU, where for example, the 7×996+484-tone MRU 1 to the 7×996+484-tone MRU 16 shown in FIG. 10(d) have different puncturing positions, so that a same entry indicates one MRU);
7×996-tone MRU: 8×1 (a same entry indicates one MRU, where for example, the 7×996-tone MRU 1 to the 7×996-tone MRU 8 shown in FIG. 10(a) have different puncturing positions, so that a same entry indicates one MRU);
6×996+484-tone MRU: 14×2 (a same entry indicates two MRUs, where in the 6×996+484-tone MRU 1 to the 6×996+484-tone MRU 28 shown in FIG. 10(e), a 996-tone RU 8 is punctured in the 6×996+484-tone MRU 1 to the 6×996+484-tone MRU 14, and a 996-tone RU 1 is punctured in the 6×996+484-tone MRU 13 to the 6×996+484-tone MRU 24, to indicate the MRU modes of the 6×996+484-tone MRU 1 to the 6×996+484-tone MRU 12 by indicating the punctured 996-tone RU 8 or 996-tone RU 1, so that a same entry indicates two MRUs);
6×996-tone MRU: 4×1 (a same entry indicates one MRU, where for example, the 6×996-tone MRU 1 to the 6×996-tone MRU 4 shown in FIG. 10(b) have different puncturing positions, so that a same entry indicates one MRU);
5×996+484-tone MRU: 12×2 (a same entry indicates two MRUs, where in the 5×996+484-tone MRU 1 to the 5×996+484-tone MRU 24 shown in FIG. 10(f), a 2×996-tone RU 4 is punctured in the 5×996+484-tone MRU 1 to the 5×996+484-tone MRU 12, and a 2×996-tone RU 1 is punctured in the 5×996+484-tone MRU 13 to the 5×996+484-tone MRU 24, to indicate the MRU modes of the 5×996+484-tone MRU 1 to the 5×996+484-tone MRU 12 by indicating the punctured 2×996-tone RU 4 or 2×996-tone RU 1, so that a same entry indicates two MRUs);
5×996-tone MRU: 6×2 (a same entry indicates two MRUs, where in the 5×996-tone MRU 1 to the 5×996-tone MRU 12 shown in FIG. 10(c), a 2×996-tone RU 4 is punctured in the 5×996-tone MRU 1 to the 5×996-tone MRU 6, and a 2×996-tone RU 1 is punctured in the 5×996-tone MRU 7 to the 5×996-tone MRU 12, to indicate MRU modes of the 5×996-tone MRU 1 to the 5×996-tone MRU 6 by indicating the punctured 2×996-tone RU 4 or 2×996-tone RU 1, so that a same entry indicates two MRUs); and
4×996+484-tone MRU: 10×4 (a same entry indicates four MRUs, where in the 4×996+484-tone 1 to the 4×996+484-tone 40 shown in FIG. 10(g)-1 and FIG. 10(g)-2, a 2×996-tone RU 4 is punctured in the 4×996+484-tone 1 to the 4×996+484-tone MRU 10 and in the 4×996+484-tone 21 to the 4×996+484-tone 30, a 2×996-tone RU 1 is punctured in the 4×996+484-tone 11 to the 4×996+484-tone 20 and in the 4×996+484-tone 31 to the 4×996+484-tone 40, a 996-tone RU 6 is punctured in the 4×996+484-tone 1 to the 4×996+484-tone MRU 10, and a 996-tone RU 1 is punctured in the 4×996+484-tone 21 to the 4×996+484-tone 30; similarly, a 996-tone RU 3 is punctured in the 4×996+484-tone 11 to the 4×996+484-tone 20, and a 996-tone RU 8 is punctured in the 4×996+484-tone 31 to the 4×996+484-tone 40, to indicate MRU modes of the 4×996+484-tone 1 to the 4×996+484-tone MRU 10 by indicating a position of a punctured 2×996-tone RU and a position of a punctured 996-tone RU, so that a same entry indicates four MRUs).

A total of (16+8+14+4+12+6+10)×8=560 entries are required for all the MRU modes.

An RU Allocation Table in the existing standard 802.11be defines 2^9=512 entries corresponding to the 9 bit RU allocation field to indicate the RU and the MRU, and corresponding sequence numbers are 0 to 511. Entries 304 to 511 are currently idle and not used, with a number of 208. The 9 bit RU allocation field is extended to 10 bits, and 512 entries can be added. In this case, a number of indications that can be used for the MRU pattern 2 oriented to the 640 MHz PPDU is 208+512=720, and the number is far greater than the required number 560.

Therefore, when the 9 bit RU allocation field is extended to 10 bits, a corresponding RU Allocation table may meet an indication of the MRU pattern 2 oriented to the 640 MHz PPDU.

For ease of understanding, with reference to Table 2, a possible form of the RU allocation subfield in this implementation is described.

**Table 2 RU Allocation subfield**

| RU allocation subfield (B9 B8 B7 B6 B5 B4 B3 B2 B1 B0) | | | | | | | | | | | Number of entries (Number of entries) |
|---|---|---|---|---|---|---|---|---|---|---|---|
| 0 to 303 (0000000000 to | Compatible with 802.11be and consistent with content in Table 36-34 in 802.11be | | | | | | | | | | 304 |
| 0100101111) | | | | | | | | | | | |
| 304 to 311 (0100110y2y1y0) | 2×996-tone RU; allocated but not set a User Specific field in a content channel of a corresponding next-generation SIG field (for example, UHR-SIG) | | | | | | | | | | 8 |
| 312 to 319 (0100111y2yly0) | 4×996 | | | | | | | | | | 8 |
| 320 to 327 (0101000y2yly0) | MRU mode: [gap-996]-996-2×996-2×996-2×996, that is, 7×996-tone MRU-1 | | | | | | | | | | 8 |
| 328 to 335 (0101001y2yly0) | MRU mode: 996-[gap-996]-2×996-2×996-2×996, that is, 7×996-tone MRU-2 | | | | | | | | | | 8 |
| 336 to 343 (0101010y2yly0) | MRU mode: 2×996-[gap-996]-996-2×996-2×996, that is, 7×996-tone MRU-3 | | | | | | | | | | 8 |
| 344 to 351 (0101011y2y1y0) | MRU mode: 2×996-996-[gap-996]-2×996-2×996, that is, 7×996-tone MRU-4 | | | | | | | | | | 8 |
| 352 to 359 (0101100y2y1y0) | MRU mode: 2×996-2×996-[gap-996]-996-2×996, that is, 7×996-tone MRU-5 | | | | | | | | | | 8 |
| 360 to 367 (0101101y2y1y0) | MRU mode: 2×996-2×996-996-[gap-996]-2×996, that is, 7×996-tone MRU-6 | | | | | | | | | | 8 |
| 368 to 375 (0101110y2yly0) | MRU mode: 2×996-2×996-2×996-[gap-996]-996, that is, 7×996-tone MRU-7 | | | | | | | | | | 8 |
| 376 to 383 (0101111y2y1y0) | MRU mode: 2×996-2×996-2×996-996-[gap-996], that is, 7×996-tone MRU-8 | | | | | | | | | | 8 |
| 384 to 391 (0110000y2y1y0) | MRU mode: [gap-2×996]-2×996-2×996-2×996, that is, 6×996-tone MRU-1 | | | | | | | | | | 8 |
| 392 to 399 (0110001y2yly0) | MRU mode: 2×996-[gap-2×996]-2×996-2×996, that is, 6×996-tone MRU-2 | | | | | | | | | | 8 |
| 400 to 407 (0110010y2yly0) | MRU mode: 2×996-2×996-[gap-2×996]- 2×996, that is, 6×996-tone MRU-3 | | | | | | | | | | 8 |
| 408 to 415 | MRU mode: 2×996-2×996-2×996-[gap-2×996], that is, | | | | | | | | | | 8 |
| (0110011y2y1y0) | 6×996-tone MRU-4 | | | | | | | | | | |
| 416 to 423 (0110100y2y1y0) | MRU mode: [gap-996]-996-2×996-2×996, that is, 5×996-tone MRUs 1 and 7 are respectively in a 480 MHz subblock formed by the 1^{st}, 2^{nd}, and 3^{rd} 160 MHz frequency subblocks and a 480 MHz subblock formed by the 2^{nd}, 3^{rd}, and 4^{th} 160 MHz frequency subblocks (frequencies of the 1^{st}, 2^{nd}, 3^{rd}, and 4^{th} frequency subblocks increase in ascending order). | | | | | | | | | | 8 |
| 424 to 431 (0110101y2y1y0) | MRU mode: 996-[gap-996]-2×996-2×996, that is, 5×996-tone MRUs 2 and 8 are respectively in a 480 MHz subblock formed by the 1^{st}, 2^{nd}, and 3^{rd} 160 MHz frequency subblocks and a 480 MHz subblock formed by the 2^{nd}, 3^{rd}, and 4^{th} 160 MHz frequency subblocks (frequencies of the 1^{st}, 2^{nd}, 3^{rd}, and 4^{th} frequency subblocks increase in ascending order). | | | | | | | | | | 8 |
| 432 to 439 (0110110y2y1y0) | MRU mode: 2×996-996-[gap-996]-2×996, that is, 5×996-tone MRUs 3 and 9 are respectively in a 480 MHz subblock formed by the 1^{st}, 2^{nd}, and 3^{rd} 160 MHz frequency subblocks and a 480 MHz subblock formed by the 2^{nd}, 3^{rd}, and 4^{th} 160 MHz frequency subblocks (frequencies of the 1^{st}, 2^{nd}, 3^{rd}, and 4^{th} frequency subblocks increase in ascending order). | | | | | | | | | | 8 |
| 440 to 447 (0110111y2y1y0) | MRU mode: 2×996-996-[gap-996]-2×996, that is, 5×996-tone MRUs 4 and 10 are respectively in a 480 MHz subblock formed by the 1^{st}, 2^{nd}, and 3^{rd} 160 MHz frequency subblocks and a 480 MHz subblock formed by the 2^{nd}, 3^{rd}, and 4^{th} 160 MHz frequency subblocks (frequencies of the 1^{st}, 2^{nd}, 3^{rd}, and 4^{th} frequency subblocks increase in ascending order). | | | | | | | | | | 8 |
| 448 to 455 | MRU mode: 2×996-2×996-[gap-996]-996, that is, 5×996- | | | | | | | | | | 8 |
| (0111000y2y1y0) | tone MRU 5 and 11 are 480 MHz subblocks formed by the first, second, and third 160 MHz frequency subblocks and 480 MHz subblocks formed by the second, third, and fourth 160 MHz frequency subblocks (frequency of the first, second, third, and fourth frequency subblocks increases in ascending order). | | | | | | | | | | |
| 456 to 463 (0111001y2y1y0) | MRU mode: 2×996-2×996-996-[gap-996], that is, 5×996-tone MRU 6 and 12 are 480 MHz subblocks formed by the first, second, and third 160 MHz frequency subblocks and 480 MHz subblocks formed by the second, third, and fourth 160 MHz frequency subblocks (frequency of the first, second, third, and fourth frequency subblocks increases in ascending order). | | | | | | | | | | 8 |
| 464 to 511 (0111010Y2yly0 to 0111111y2y1y0) | Disregard | | | | | | | | | | 48 |
| 512 to 519 1000000y2y1y0 | MRU mode: [gap-484]-484-996-2×996-2×996-2×996, that is, 7×996+484-tone MRU-1 | | | | | | | | | | 8 |
| 520 to 527 1000001y2y1y0 | MRU mode: 484-[gap-484]-996-2×996-2×996-2×996, that is, 7×996+484-tone MRU-2 | | | | | | | | | | 8 |
| 528 to 535 1000010y2y1y0 | MRU mode: 996-[gap-484]-484-2×996-2×996-2×996, that is, 7×996+484-tone MRU-3 | | | | | | | | | | 8 |
| 536 to 543 1000011y2y1y0 | MRU mode: 996-484-[gap-484]-2×996-2×996-2×996, that is, 7×996+484-tone MRU-4 | | | | | | | | | | 8 |
| 544 to 551 1000100y2y1y0 | MRU mode: 2×996-[gap-484]-484-996-2×996-2×996, that is, 7×996+484-tone MRU-5 | | | | | | | | | | 8 |
| 552 to 559 1000101y2y1y0 | MRU mode: 2×996-484-[gap-484]-996-2×996-2×996, that is, 7×996+484-tone MRU-6 | | | | | | | | | | 8 |
| 560 to 567 1000110y2y1y0 | MRU mode: 2×996-996-[gap-484]-484-2×996-2×996, that is, 7×996+484-tone MRU-7 | | | | | | | | | | 8 |
| 568 to 575 1000111y2y1y0 | MRU mode: 2×996-996-484-[gap-484]-2×996-2×996, that is, 7×996+484-tone MRU-8 | | | | | | | | | | 8 |
| 576 to 583 1001000y2y1y0 | MRU mode: 2×996-2×996-[gap-484]-484-996-2×996, that is, 7×996+484-tone MRU-9 | | | | | | | | | | 8 |
| 584 to 591 1001001y2y1y0 | MRU mode: 2×996-2×996-484-[gap-484]-996-2×996, that is, 7×996+484-tone MRU-10 | | | | | | | | | | 8 |
| 592 to 599 1001010y2y1y0 | MRU mode: 2×996-2×996-996-[gap-484]-484-2×996, that is, 7×996+484-tone MRU-11 | | | | | | | | | | 8 |
| 600 to 607 1001011y2y1y0 | MRU mode: 2×996-2×996-996-484-[gap-484]-2×996, that is, 7×996+484-tone MRU-12 | | | | | | | | | | 8 |
| 608 to 615 1001100y2y1y0 | MRU mode: 2×996-2×996-2×996-[gap-484]-484-996, that is, 7×996+484-tone MRU-13 | | | | | | | | | | 8 |
| 616 to 623 1001101y2y1y0 | MRU mode: 2×996-2×996-2×996-484-[gap-484]-996, that is, 7×996+484-tone MRU-14 | | | | | | | | | | 8 |
| 624 to 631 1001110y2y1y0 | MRU mode: 2×996-2×996-2×996-996-[gap-484]-484, that is, 7×996+484-tone MRU-15 | | | | | | | | | | 8 |
| 632 to 639 1001111y2y1y0 | MRU mode: 2×996-2×996-2×996-996-484-[gap-484], that is, 7×996+484-tone MRU-16 | | | | | | | | | | 8 |
| 640 to 647 1010000y2y1y0 | MRU mode: [gap-484]-484-996-996-996-996-996-996, that is, 6×996+484-tone MRUs 1 and 15 are respectively in a 560 MHz subblock formed by the first seven 80 MHz frequency subblocks and a 560 MHz subblock formed by the last seven 80 MHz frequency subblocks (within the 560 MHz subblock composed of the first seven 80 MHz frequency subblocks and the 560 MHz subblock composed of the last seven 80 MHz frequency subblock in increasing frequency order, respectively). | | | | | | | | | | 8 |
| 648 to 655 1010001y2y1y0 | MRU mode: 484-[gap-484]-996-996-996-996-996-996, that is, 6×996+484-tone MRUs 2 and 16 are respectively in a 560 MHz subblock formed by the first seven 80 MHz frequency subblocks and a 560 MHz subblock formed by the last seven 80 MHz frequency subblocks. | | | | | | | | | | 8 |
| 656 to 663 1010010y2y1y0 | MRU mode: 996-[gap-484]-484-996-996-996-996-996, that is, 6×996+484-tone MRUs 3 and 17 are respectively in a 560 MHz subblock formed by the first seven 80 MHz frequency subblocks and a 560 MHz subblock formed by the last seven 80 MHz frequency subblocks. | | | | | | | | | | 8 |
| 664 to 671 1010011y2y1y0 | MRU mode: 996-484-[gap-484]-996-996-996-996-996, that is, 6×996+484-tone MRUs 4 and 18 are respectively in a 560 MHz subblock formed by the first seven 80 MHz frequency subblocks and a 560 MHz subblock formed by the last seven 80 MHz frequency subblocks. | | | | | | | | | | 8 |
| 672 to 679 1010100y2yly0 | MRU mode: 996-996-[gap-484]-484-996-996-996-996, that is, 6×996+484-tone MRUs 5 and 19 are respectively in a 560 MHz subblock formed by the first seven 80 MHz frequency subblocks and a 560 MHz subblock formed by the last seven 80 MHz frequency subblocks. | | | | | | | | | | 8 |
| 680 to 687 1010101y2y1y0 | MRU mode: 996-996-484-[gap-484]-996-996-996-996, that is, 6×996+484-tone MRUs 6 and 20 are respectively in a 560 MHz subblock formed by the first seven 80 MHz frequency subblocks and a 560 MHz subblock formed by the last seven 80 MHz frequency subblocks. | | | | | | | | | | 8 |
| 688 to 695 1010110y2yly0 | MRU mode: 996-996-996-[gap-484]-484-996-996-996, that is, 6×996+484-tone MRUs 7 and 21 are respectively in a 560 MHz subblock formed by the first seven 80 MHz frequency subblocks and a 560 MHz subblock formed by the last seven 80 MHz frequency subblocks. | | | | | | | | | | 8 |
| 696 to 703 1010111y2y1y0 | MRU mode: 996-996-996-484-[gap-484]-996-996-996, that is, 6×996+484-tone MRUs 8 and 22 are respectively in a 560 MHz subblock formed by the first seven 80 MHz frequency subblocks and a 560 MHz subblock formed by the last seven 80 MHz frequency subblocks. | | | | | | | | | | 8 |
| 704 to 711 1011000y2y1y0 | MRU mode: 996-996-996-996-[gap-484]-484-996-996, that is, 6×996+484-tone MRUs 9 and 23 are respectively in a 560 MHz subblock formed by the first seven 80 MHz frequency subblocks and a 560 MHz subblock formed by the last seven 80 MHz frequency subblocks. | | | | | | | | | | 8 |
| 712 to 719 1011001y2y1y0 | MRU mode: 996-996-996-996-484-[gap-484]-996-996, that is, 6×996+484-tone MRUs 10 and 24 are respectively in a 560 MHz subblock formed by the first seven 80 MHz frequency subblocks and a 560 MHz subblock formed by the last seven 80 MHz frequency subblocks. | | | | | | | | | | 8 |
| 720 to 727 1011010y2y1y0 | MRU mode: 996-996-996-996-996-[gap-484]-484-996, that is, 6×996+484-tone MRUs 11 and 25 are respectively in a 560 MHz subblock formed by the first seven 80 MHz frequency subblocks and a 560 MHz subblock formed by the last seven 80 MHz frequency subblocks. | | | | | | | | | | 8 |
| 728 to 735 1011011y2y1y0 | MRU mode: 996-996-996-996-996-484-[gap-484]-996, that is, 6×996+484-tone MRUs 12 and 26 are respectively in a 560 MHz subblock formed by the first seven 80 MHz frequency subblocks and a 560 MHz subblock formed by the last seven 80 MHz frequency subblocks. | | | | | | | | | | 8 |
| 736 to 743 1011100y2y1y0 | MRU mode: 996-996-996-996-996-996-[gap-484]-484, that is, 6×996+484-tone MRUs 13 and 27 are respectively in a 560 MHz subblock formed by the first seven 80 MHz frequency subblocks and a 560 MHz subblock formed by the last seven 80 MHz frequency subblocks. | | | | | | | | | | 8 |
| 744 to 751 1011101y2y1y0 | MRU mode: 996-996-996-996-996-996-484-[gap-484], that is, 6×996+484-tone MRUs 14 and 28 are respectively in a 560 MHz subblock formed by the first seven 80 MHz frequency subblocks and a 560 MHz subblock formed by the last seven 80 MHz frequency subblocks. | | | | | | | | | | 8 |
| 752 to 759 1011110y2y1y0 | MRU mode: [gap-484]-484-996-2×996-2×996, that is, 5×996+484-tone MRUs 1 and 13 are respectively in a 480 MHz subblock formed by the 1^{st}, 2^{nd}, and 3^{rd} 160 MHz frequency subblocks and a 480 MHz subblock formed by the 2^{nd}, 3^{rd}, and 4^{th} 160 MHz frequency subblocks (frequencies of the 1^{st}, 2^{nd}, 3^{rd}, and 4^{th} frequency subblocks increase in ascending order). | | | | | | | | | | 8 |
| 760 to 767 1011111y2y1y0 | MRU mode: 484-[gap-484]-996-2×996-2×996, that is, 5×996+484-tone MRUs 2 and 14 are respectively in a 480 MHz subblock formed by the 1^{st}, 2^{nd}, and 3^{rd} 160 MHz frequency subblocks and a 480 MHz subblock formed by the 2^{nd}, 3^{rd}, and 4^{th} 160 MHz frequency subblocks (frequencies of the 1^{st}, 2^{nd}, 3^{rd}, and 4^{th} frequency subblocks increase in ascending order). | | | | | | | | | | 8 |
| 768 to 775 1100000y2yly0 | MRU mode: 996-[gap-484]-484-2×996-2×996, that is, 5×996+484-tone MRUs 3 and 15 are respectively in a 480 MHz subblock formed by the 1^{st}, 2^{nd}, and 3^{rd} 160 MHz frequency subblocks and a 480 MHz subblock formed by the 2^{nd}, 3^{rd}, and 4^{th} 160 MHz frequency subblocks (frequencies of the 1^{st}, 2^{nd}, 3^{rd}, and 4^{th} frequency subblocks increase in ascending order). | | | | | | | | | | 8 |
| 776 to 783 1100001y2y1y0 | MRU mode: 996-484-[gap-484]-2×996-2×996, that is, 5×996+484-tone MRUs 4 and 16 are respectively in a 480 MHz subblock formed by the 1^{st}, 2^{nd}, and 3^{rd} 160 MHz frequency subblocks and a 480 MHz subblock formed by the 2^{nd}, 3^{rd}, and 4^{th} 160 MHz frequency subblocks (frequencies of the 1^{st}, 2^{nd}, 3^{rd}, and 4^{th} frequency subblocks increase in ascending order). | | | | | | | | | | 8 |
| 784 to 791 1100010y2y1y0 | MRU mode: 2×996-[gap-484]-484-996-2×996, that is, 5×996+484-tone MRUs 5 and 17 are respectively in a 480 MHz subblock formed by the 1^{st}, 2^{nd}, and 3^{rd} 160 MHz frequency subblocks and a 480 MHz subblock formed by the 2^{nd}, 3^{rd}, and 4^{th} 160 MHz frequency subblocks (frequencies of the 1^{st}, 2^{nd}, 3^{rd}, and 4^{th} frequency subblocks increase in ascending order). | | | | | | | | | | 8 |
| 792 to 799 1100011y2y1y0 | MRU mode: 2×996-484-[gap-484]-996-2×996, that is, 5×996+484-tone MRUs 6 and 18 are respectively in a 480 MHz subblock formed by the 1^{st}, 2^{nd}, and 3^{rd} 160 MHz frequency subblocks and a 480 MHz subblock formed by the 2^{nd}, 3^{rd}, and 4^{th} 160 MHz frequency subblocks (frequencies of the 1^{st}, 2^{nd}, 3^{rd}, and 4^{th} frequency subblocks increase in ascending order). | | | | | | | | | | 8 |
| 800 to 807 1100100y2y1y0 | MRU mode: 2×996-996-[gap-484]-484-2×996, that is, 5×996+484-tone MRUs 7 and 19 are respectively in a 480 MHz subblock formed by the 1^{st}, 2^{nd}, and 3^{rd} 160 MHz frequency subblocks and a 480 MHz subblock formed by the 2^{nd}, 3^{rd}, and 4^{th} 160 MHz frequency subblocks (frequencies of the 1^{st}, 2^{nd}, 3^{rd}, and 4^{th} frequency subblocks increase in ascending order). | | | | | | | | | | 8 |
| 808 to 815 1100101y2y1y0 | MRU mode: 2×996-996-484-[gap-484]-2×996, that is, 5×996+484-tone MRUs 8 and 20 are respectively in a 480 MHz subblock formed by the 1^{st}, 2^{nd}, and 3^{rd} 160 MHz frequency subblocks and a 480 MHz subblock formed by the 2^{nd}, 3^{rd}, and 4^{th} 160 MHz frequency subblocks (frequencies of the 1^{st}, 2^{nd}, 3^{rd}, and 4^{th} frequency subblocks increase in ascending order). | | | | | | | | | | 8 |
| 816 to 823 1100110y2yly0 | MRU mode: 2×996-2×996-[gap-484]-484-996, that is, 5×996+484-tone MRUs 9 and 21 are respectively in a 480 MHz subblock formed by the 1^{st}, 2^{nd}, and 3^{rd} 160 MHz frequency subblocks and a 480 MHz subblock formed by the 2^{nd}, 3^{rd}, and 4^{th} 160 MHz frequency subblocks (frequencies of the 1^{st}, 2^{nd}, 3^{rd}, and 4^{th} frequency subblocks increase in ascending order). | | | | | | | | | | 8 |
| 824 to 831 1100111y2y1y0 | MRU mode: 2×996-2×996-484-[gap-484]-996, that is, 5×996+484-tone MRUs 10 and 22 are respectively in a 480 MHz subblock formed by the 1^{st}, 2^{nd}, and 3^{rd} 160 MHz frequency subblocks and a 480 MHz subblock formed by the 2^{nd}, 3^{rd}, and 4^{th} 160 MHz frequency subblocks (frequencies of the 1^{st}, 2^{nd}, 3^{rd}, and 4^{th} frequency subblocks increase in ascending order). | | | | | | | | | | 8 |
| 832 to 839 1101000y2y1y0 | MRU mode: 2×996-2×996-996-[gap-484]-484, that is, 5×996+484-tone MRUs 11 and 23 are respectively in a 480 MHz subblock formed by the 1^{st}, 2^{nd}, and 3^{rd} 160 MHz frequency subblocks and a 480 MHz subblock formed by the 2^{nd}, 3^{rd}, and 4^{th} 160 MHz frequency subblocks (frequencies of the 1^{st}, 2^{nd}, 3^{rd}, and 4^{th} frequency subblocks increase in ascending order). | | | | | | | | | | 8 |
| 840 to 847 1101001y2y1y0 | MRU mode: 2×996-2×996-996-484-[gap-484], that is, 5×996+484-tone MRUs 12 and 24 are respectively in a 480 MHz subblock formed by the 1^{st}, 2^{nd}, and 3^{rd} 160 MHz frequency subblocks and a 480 MHz subblock formed by the 2^{nd}, 3^{rd}, and 4^{th} 160 MHz frequency subblocks (frequencies of the 1^{st}, 2^{nd}, 3^{rd}, and 4^{th} frequency subblocks increase in ascending order). | | | | | | | | | | 8 |
| 848 to 855 1101010y2y1y0 | MRU mode: [gap-484]-484-996-996-996-996, that is, 4×996+484-tone MRUs 1, 11, 21, and 31 are respectively in a 400 MHz subblock formed by the 1^{st} to 5^{th} 80 MHz frequency subblocks, a 400 MHz subblock formed by the 2^{nd} to 6^{th} 80 MHz frequency subblocks, a 400 MHz subblocks formed by the 3^{rd} to 7^{th} 80 MHz frequency subblocks, and a 400 MHz subblock formed by the 4^{th} to 8^{th} 80 MHz frequency subblocks. | | | | | | | | | | 8 |
| 856 to 863 1101011y2y1y0 | MRU mode: 484-[gap-484]-996-996-996-996, that is, 4×996+484-tone MRUs 2, 12, 22, and 32 are respectively in a 400 MHz subblock formed by the 1^{st} to 5^{th} 80 MHz frequency subblocks, a 400 MHz subblock formed by the 2^{nd} to 6^{th} 80 MHz frequency subblocks, a 400 MHz subblocks formed by the 3^{rd} to 7^{th} 80 MHz frequency subblocks, and a 400 MHz subblock formed by the 4^{th} to 8^{th} 80 MHz frequency subblocks. | | | | | | | | | | 8 |
| 864 to 871 1101100y2y1y0 | MRU mode: 996-[gap-484]-484-996-996, that is, 4×996+484-tone MRUs 3, 13, 23, and 33 are respectively in a 400 MHz subblock formed by the 1^{st} to 5^{th} 80 MHz frequency subblocks, a 400 MHz subblock formed by the 2^{nd} to 6^{th} 80 MHz frequency subblocks, a 400 MHz subblocks formed by the 3^{rd} to 7^{th} 80 MHz frequency subblocks, and a 400 MHz subblock formed by the 4^{th} to 8^{th} 80 MHz frequency subblocks. | | | | | | | | | | 8 |
| 872 to 879 1101101y2y1y0 | MRU mode: 996-484-[gap-484]-996-996-996, that is, 4×996+484-tone MRUs 4, 14, 24, and 34 are respectively in a 400 MHz subblock formed by the 1^{st} to 5^{th} 80 MHz frequency subblocks, a 400 MHz subblock formed by the 2^{nd} to 6^{th} 80 MHz frequency subblocks, a 400 MHz subblocks formed by the 3^{rd} to 7^{th} 80 MHz frequency subblocks, and a 400 MHz subblock formed by the 4^{th} to 8^{th} 80 MHz frequency subblocks. | | | | | | | | | | 8 |
| 880 to 887 1101110y2yly0 | MRU mode: 996-996-[gap-484]-484-996-996, that is, 4×996+484-tone MRUs 5, 15, 25, and 35 are respectively in a 400 MHz subblock formed by the 1^{st} to 5^{th} 80 MHz frequency subblocks, a 400 MHz subblock formed by the 2^{nd} to 6^{th} 80 MHz frequency subblocks, a 400 MHz subblocks formed by the 3^{rd} to 7^{th} 80 MHz frequency subblocks, and a 400 MHz subblock formed by the 4^{th} to 8^{th} 80 MHz frequency subblocks. | | | | | | | | | | 8 |
| 888 to 895 1101111y2y1y0 | MRU mode: 996-996-484-[gap-484]-996-996, that is, 4×996+484-tone MRUs 6, 16, 26, and 36 are respectively in a 400 MHz subblock formed by the 1^{st} to 5^{th} 80 MHz frequency subblocks, a 400 MHz subblock formed by the 2^{nd} to 6^{th} 80 MHz frequency subblocks, a 400 MHz subblocks formed by the 3^{rd} to 7^{th} 80 MHz frequency subblocks, and a 400 MHz subblock formed by the 4^{th} to 8^{th} 80 MHz frequency subblocks. | | | | | | | | | | 8 |
| 896 to 903 1110000y2y1y0 | MRU mode: 996-996-996-[gap-484]-484-996, that is, 4×996+484-tone MRUs 7, 17, 27, and 37 are respectively in a 400 MHz subblock formed by the 1^{st} to 5^{th} 80 MHz frequency subblocks, a 400 MHz subblock formed by the 2^{nd} to 6^{th} 80 MHz frequency subblocks, a 400 MHz subblocks formed by the 3^{rd} to 7^{th} 80 MHz frequency subblocks, and a 400 MHz subblock formed by the 4^{th} to 8^{th} 80 MHz frequency subblocks. | | | | | | | | | | 8 |
| 904 to 911 1110001y2y1y0 | MRU mode: 996-996-996-484-[gap-484]-996, that is, 4×996+484-tone MRUs 8, 18, 28, and 38 are respectively in a 400 MHz subblock formed by the 1^{st} to 5^{th} 80 MHz frequency subblocks, a 400 MHz subblock formed by the 2^{nd} to 6^{th} 80 MHz frequency subblocks, a 400 MHz subblocks formed by the 3^{rd} to 7^{th} 80 MHz frequency subblocks, and a 400 MHz subblock formed by the 4^{th} to 8^{th} 80 MHz frequency subblocks. | | | | | | | | | | 8 |
| 912 to 919 1110010y2y1y0 | MRU mode: 996-996-996-996-[gap-484]-484, that is, 4×996+484-tone MRUs 9, 19, 29, and 39 are respectively in a 400 MHz subblock formed by the 1^{st} to 5^{th} 80 MHz frequency subblocks, a 400 MHz subblock formed by the 2^{nd} to 6^{th} 80 MHz frequency subblocks, a 400 MHz subblocks formed by the 3^{rd} to 7^{th} 80 MHz frequency subblocks, and a 400 MHz subblock formed by the 4^{th} to 8^{th} 80 MHz frequency subblocks. | | | | | | | | | | 8 |
| 920 to 927 1110011y2y1y0 | MRU mode: 996-996-996-996-484-[gap-484], that is, 4×996+484-tone MRUs 10, 20, 30, and 40 are respectively in a 400 MHz subblock formed by the 1^{st} to 5^{th} 80 MHz frequency subblocks, a 400 MHz subblock formed by the 2^{nd} to 6^{th} 80 MHz frequency subblocks, a 400 MHz subblocks formed by the 3^{rd} to 7^{th} 80 MHz frequency subblocks, and a 400 MHz subblock formed by the 4^{th} to 8^{th} 80 MHz frequency subblocks. | | | | | | | | | | 8 |
| 928 to 935 (1110100y2y1y01 111111y2y1y0) | Disregard | | | | | | | | | | 96 |

It can be learned from Table 2 that, when the RU allocation subfield value is in 0 to 303, the MRU corresponding to the bandwidth less than or equal to 320 MHz may be indicated. For a specific indication manner, refer to descriptions of how the RU allocation subfield indicates MRUs corresponding to different bandwidths (for example, MRUs corresponding to 20 MHz, 40 MHz, 80 MHz, 160 MHz, and 320 MHz) in a current protocol (for example, the 802.11be standard). Details are not described herein again.

In Table 2, a number of entries in each row refers to a number of RU allocation subfield values in the corresponding row (for example, Number of entries=8 in the 3^{rd} row in Table 2 indicates that there are eight RU allocation subfield values in 312 to 319), and the RU allocation subfield value refers to same RU allocation to be used in frequency domain. However, in this case, if the RU allocation subfield value changes, a number of user fields of user specific fields in an EHT-SIG content channel corresponding to the RU allocation subfield changes accordingly.

In addition, the RU allocation subfield of the RU or the MRU may be represented by a value in a range of 304 to 927 (00100110y2y1y0 to 1110011y2y1y0 in binary representation), and y2y1y0 indicates a number of user fields in a corresponding content channel.

Further, a remaining resource (304 to 463) of the RU allocation subfield in the current standard may indicate an MRU mode (for example, the MRU pattern #1) corresponding to the 640 MHz bandwidth. Refer to the descriptions of Table 1. In addition, an extended resource (512 to 927) indicates an MRU mode (for example, the MRU pattern #2, which is an additional MRU mode compared with the MRU pattern #1) corresponding to the 640 MHz bandwidth.

It should be noted that the communication methods shown in FIG. 9 and FIG. 16 may be independently performed. For example, an MRU mode corresponding to a large bandwidth may be defined according to the manner shown in FIG. 9. How to indicate the newly defined MRU mode is not limited, and may be the MRU indication solution shown in FIG. 16, or may be another MRU indication solution. For another example, a newly added MRU mode is indicated according to the method described in FIG. 16. The newly added MRU mode may not be an MRU mode defined in FIG. 9, but an MRU mode that is not indicated by the RU allocation subfield field in the current protocol.

In addition, the communication methods shown in FIG. 9 and FIG. 16 may be performed in combination. For example, an MRU mode corresponding to a large bandwidth is first defined according to the method described in FIG. 9, and then the newly defined MRU mode corresponding to the large bandwidth is indicated according to the method described in FIG. 16. Specifically, the cases shown in Manner 3 to Manner 5 may be understood as specific examples of performing the communication methods shown in FIG. 9 and FIG. 16 in combination.

It should be understood that sequence numbers of the foregoing processes do not mean an execution sequence. The execution sequence of the processes should be determined based on functions and internal logic of the processes, and should not constitute any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that, in some of the foregoing embodiments, a device in an existing network architecture is mainly used as an example for description. It should be understood that, a specific form of the device is not limited in embodiments of this application. For example, all devices that can implement a same function in the future are applicable to embodiments of this application.

It may be understood that, in the foregoing method embodiments, methods and operations implemented by a device (for example, an AP and a STA) may also be implemented by a component (for example, a chip or a circuit) that can be used in the device.

It may be further understood that in embodiments of this application, interaction between the AP and the STA is mainly used as an example for description. This application is not limited thereto. The AP may be replaced with a transmit end device, and the transmit end device may be a terminal device. The STA may be replaced with a receive end device, and the receive end device may be a terminal device. For example, the "AP" may be replaced with a "first terminal device", and the "STA" may be replaced with a "second terminal device".

It may be further understood that, some optional features in embodiments of this application may be independent of other features in some scenarios, or may be combined with other features in some scenarios. This is not limited.

The foregoing describes in detail the communication method provided in embodiments of this application with reference to FIG. 7. The communication method is mainly described from a perspective of interaction between the first device and the second device. It may be understood that to implement the foregoing functions, the first device and the second device include corresponding hardware structures and/or software modules for performing the functions.

A person skilled in the art should be able to be aware that, in combination with the examples described in embodiments disclosed in this specification, units and algorithm steps can be implemented by hardware or a combination of hardware and computer software in this application. Whether a function is performed by hardware or hardware driven by computer software depends on a particular application and a design constraint of the technical solutions. A person skilled in the art may use different methods to implement the described functions for each particular application, but it should not be considered that the implementation goes beyond the scope of this application.

The following describes in detail communication apparatuses provided in embodiments of this application with reference to FIG. 17 to FIG. 19. It should be understood that descriptions of apparatus embodiments correspond to the descriptions of the method embodiments. Therefore, for content that is not described in detail, refer to the method embodiments above. For brevity, details of a part of content are not described herein again.

In embodiments of this application, functional modules of a transmit end device or a receive end device may be divided based on the foregoing method examples. For example, functional modules may be divided based on functions, or two or more functions may be integrated into one processing module. The integrated module may be implemented in a form of hardware, or may be implemented in a form of a software functional module. It should be noted that, in embodiments of this application, module division is an example, and is merely a logical function division. In an actual implementation, another division manner may be used. An example in which each functional module is obtained through division based on a corresponding function is used below for description.

FIG. 17 is a block diagram of a communication apparatus 10 according to an embodiment of this application. The apparatus 10 includes a transceiver module 11 and a processing module 12. The transceiver module 11 may implement a corresponding communication function. The processing module 12 is configured to perform data processing. In other words, the transceiver module 11 is configured to perform receiving and sending-related operations. The processing module 12 is configured to perform operations other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to enable the apparatus to implement actions of a device in the foregoing method embodiments.

In a design, the apparatus 10 may correspond to the AP in the foregoing method embodiments, or may be a component (for example, a chip) of the AP.

The apparatus 10 can implement corresponding steps or procedures performed by the AP in the foregoing method embodiments. The transceiver module 11 may be configured to perform receiving and sending-related operations of the AP in the foregoing method embodiments. The processing module 12 may be configured to perform processing-related operations of the AP in the foregoing method embodiments.

In a possible implementation, the transceiver module 11 is configured to communicate with a second device based on a frequency resource, where the frequency resource includes a multiple resource unit MRU, the MRU includes a k×996+m×484-tone MRU, k is an integer greater than or equal to 4, and m is equal to 0 or 1.

In another possible implementation, the processing module 12 is configured to generate a PPDU, where the PPDU includes a resource allocation field, the resource allocation field indicates an allocation status of a frequency resource of a station, and the frequency resource includes a multiple resource unit MRU; and the transceiver module 11 is configured to send the PPDU to the station, where when a value range of the resource allocation field is greater than or equal to 304, the resource allocation field indicates an MRU corresponding to a bandwidth greater than 320 MHz.

In another possible implementation, the processing module 12 is configured to generate a PPDU, where the PPDU includes a resource allocation field and a combination field, and the resource allocation field and the combination field indicate an allocation status of a frequency resource of a station; and the transceiver module 11 is configured to send the PPDU to the station.

When the apparatus 10 is configured to perform the method in FIG. 9, the transceiver module 11 may be configured to perform steps of receiving and sending information in the method, for example, step S920; and the processing module 12 may be configured to perform a processing step in the method, for example, step S910.

When the apparatus 10 is configured to perform the method in FIG. 16, the transceiver module 11 may be configured to perform steps of receiving and sending information in the method, for example, step S1620; and the processing module 12 may be configured to perform a processing step in the method, for example, step S1610.

It should be understood that a specific process in which the units perform the foregoing corresponding steps is described in detail in the foregoing method embodiments, and for brevity, details are not described herein.

In another design, the apparatus 10 may correspond to the STA in the foregoing method embodiments, or may be a component (for example, a chip) of the STA.

The apparatus 10 can implement corresponding steps or procedures performed by the STA in the foregoing method embodiments. The transceiver module 11 may be configured to perform receiving and sending-related operations of the STA in the foregoing method embodiments. The processing module 12 may be configured to perform processing-related operations of the STA in the foregoing method embodiments.

In a possible implementation, the transceiver module 11 is configured to receive a PPDU from an access point, where the PPDU includes a resource allocation field, the resource allocation field indicates an allocation status of a frequency resource of a station, and the frequency resource includes a multiple resource unit MRU; and the processing module 12 is configured to determine an allocated frequency resource based on the resource indication information, where when a value range of the resource allocation field is greater than or equal to 304, the resource allocation field indicates an MRU corresponding to a bandwidth greater than 320 MHz.

In another possible implementation, the transceiver module 11 is configured to receive a PPDU from an access point, where the PPDU includes a resource allocation field and a combination field, and the resource allocation field and the combination field indicate an allocation status of a frequency resource of a station; and the processing module 12 is configured to determine an allocated frequency resource based on the resource indication information.

When the apparatus 10 is configured to perform the method in FIG. 9, the transceiver module 11 may be configured to perform steps of receiving and sending information in the method, for example, step S920; and the processing module 12 may be configured to perform a processing step in the method.

When the apparatus 10 is configured to perform the method in FIG. 16, the transceiver module 11 may be configured to perform steps of receiving and sending information in the method, for example, step S1620; and the processing module 12 may be configured to perform a processing step in the method, for example, step S1630.

It should be understood that a specific process in which the units perform the foregoing corresponding steps is described in detail in the foregoing method embodiments, and for brevity, details are not described herein.

It should be further understood that the apparatus 10 herein is embodied in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another suitable component that supports the described function. In an optional example, a person skilled in the art may understand that the apparatus 10 may be specifically the mobility management network element in the foregoing embodiments, and may be configured to perform procedures and/or steps corresponding to the mobility management network element in the foregoing method embodiments. Alternatively, the apparatus 10 may be specifically the terminal device in the foregoing embodiments, and may be configured to perform procedures and/or steps corresponding to the terminal device in the foregoing method embodiments. To avoid repetition, details are not described herein again.

The apparatus 10 in each of the foregoing solutions has a function of implementing corresponding steps performed by devices (such as an AP and a STA) in the foregoing methods. The function may be implemented by hardware, or may be implemented by hardware executing corresponding software. The hardware or software includes one or more modules corresponding to the foregoing functions. For example, the transceiver module may be replaced with a transceiver (for example, a sending unit in the transceiver module may be replaced with a transmitter, and a receiving unit in the transceiver module may be replaced with a receiver), and another unit such as a processing module may be replaced with a processor, to separately perform a receiving and sending operation and a related processing operation in each method embodiment.

In addition, the transceiver module 11 may alternatively be a transceiver circuit (for example, may include a receiving circuit and a sending circuit), and the processing module may be a processing circuit.

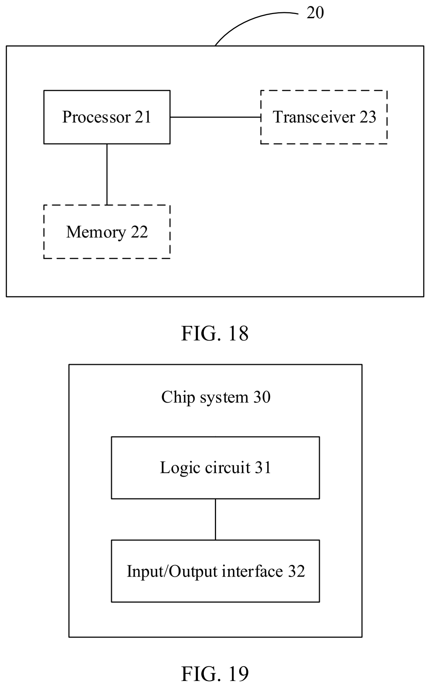

FIG. 18 is a diagram of another communication apparatus 20 according to an embodiment of this application. The apparatus 20 includes a processor 21. The processor 21 is configured to execute a computer program or instructions stored in a memory 22, or read data/signaling stored in a memory 22, to perform the methods in the foregoing method embodiments. Optionally, there are one or more processors 21.

Optionally, as shown in FIG. 18, the apparatus 20 further includes the memory 22, and the memory 22 is configured to store a computer program or instructions and/or data. The memory 22 may be integrated with the processor 21, or may be disposed separately. Optionally, there are one or more memories 22.

Optionally, as shown in FIG. 18, the apparatus 20 further includes a transceiver 23. The transceiver 23 is configured to receive and/or send signals. For example, the processor 21 is configured to control the transceiver 23 to receive and/or send signals.

In a solution, the apparatus 20 is configured to implement operations performed by the AP and the STA in the method embodiments.

It should be understood that, the processor in this embodiment of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), or another programmable logic device, a discrete gate or transistor logic device, a discrete hardware component, or the like. The general-purpose processor may be a microprocessor, or the processor may be any conventional processor, or the like.

It should be further understood that the memory mentioned in this embodiment of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described herein is intended to include, but is not limited to, these and any other appropriate type of memory.

FIG. 19 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by the AP and the STA in the method embodiments.

For example, the logic circuit 31 is configured to implement processing-related operations performed by the AP and the STA in the foregoing method embodiments, and the input/output interface 32 is configured to implement sending and/or receiving-related operations performed by the terminal device in the foregoing method embodiments.

An embodiment of this application further provides a computer-readable storage medium. The computer-readable storage medium stores computer instructions for implementing a method performed by a device in the foregoing method embodiments.

For example, when the computer program is executed by a computer, the computer is enabled to implement the method performed by the AP and the STA in the method embodiments.

An embodiment of this application further provides a computer program product, including instructions. When the instructions are executed by a computer, the method performed by the AP and the STA in the method embodiments is implemented.

An embodiment of this application further provides a communication system, including the AP and the STA.

For explanations and beneficial effect of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings, direct couplings, or communication connections may be implemented through some interfaces. Indirect couplings or communication connections between the apparatuses or units may be implemented in an electronic form, a mechanical form, or another form.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the usable medium may include but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
communicating, by a first device, with a second device based on a frequency resource, wherein the frequency resource comprises a multiple resource unit MRU, wherein
the MRU comprises a k×996+m×484-tone MRU, k is an integer greater than or equal to 4, and m is equal to 0 or 1.

2. The method according to claim 1, wherein the frequency resource further comprises a resource unit RU, and the RU comprises at least one of a 484-tone RU, a 996-tone RU, a 2×996-tone RU, and a 4×996-tone RU.

3. The method according to claim 1 or 2, wherein the MRU is a part of a frequency resource in a 640 MHz bandwidth; and
the MRU comprises at least one of the following:
a 7×996-tone MRU, a 6×996-tone MRU, a 5×996-tone MRU, a 7×996+484-tone MRU, a 6×996+484-tone MRU, a 5×996+484-tone MRU, and a 4×996+484-tone MRU.

4. The method according to claim 3, wherein if no 40 MHz subchannel is punctured in the 640 MHz bandwidth, the MRU comprises at least one of the following:
the 7×996-tone MRU, the 6×996-tone MRU, and the 5×996-tone MRU; or
if a punctured subchannel in the 640 MHz bandwidth comprises one 40 MHz subchannel, the MRU comprises at least one of the following:
the 7×996+484-tone MRU, the 6×996+484-tone MRU, the 5×996+484-tone MRU, and the 4×996+484-tone MRU.

5. The method according to claim 4, wherein
if one 80 MHz subchannel is punctured in the 640 MHz bandwidth, the MRU comprises the 7×996-tone MRU;
if one 160 MHz subchannel is punctured in the 640 MHz bandwidth, the MRU comprises the 6×996-tone MRU;
if one 160 MHz subchannel and one 80 MHz subchannel are punctured in the 640 MHz bandwidth, the MRU comprises the 5×996-tone MRU, and the punctured 160 MHz subchannel is 160 MHz with a lowest or highest frequency in the 640 MHz bandwidth;
if one 40 MHz subchannel is punctured in the 640 MHz bandwidth, the MRU comprises the 7×996+484-tone MRU;
if one 80 MHz subchannel and one 40 MHz subchannel are punctured in the 640 MHz bandwidth, the MRU comprises the 6×996+484-tone MRU, and the punctured 80 MHz subchannel is 80 MHz with a lowest or highest frequency in the 640 MHz bandwidth;
if one 160 MHz subchannel and one 40 MHz subchannel are punctured in the 640 MHz bandwidth, the MRU comprises the 5×996+484-tone MRU, and the punctured 160 MHz subchannel is 160 MHz with a lowest or highest frequency in the 640 MHz bandwidth; or
if one 160 MHz subchannel, one 80 MHz subchannel, and one 40 MHz subchannel are punctured in the 640 MHz bandwidth, the MRU comprises the 4×996+484-tone MRU, the punctured 160 MHz subchannel is 160 MHz with a lowest or highest frequency in the 640 MHz bandwidth, and the punctured 80 MHz subchannel is 80 MHz with a lowest or highest frequency in a remaining 480 MHz bandwidth after the 160 MHz subchannel is punctured in the 640 MHz bandwidth.

6. The method according to claim 1 or 2, wherein the MRU is a part of a frequency resource in a 480 MHz bandwidth; and
the MRU comprises at least one of the following:
a 5×996+484-tone MRU, a 5×996-tone MRU, a 4×996+484-tone MRU, and a 4×996-tone MRU.

7. The method according to claim 6, wherein
if an MRU corresponding to the 480 MHz bandwidth reuses an MRU corresponding to a 640 MHz bandwidth, the MRU corresponding to the 480 MHz bandwidth comprises at least one of a 5×996+484-tone MRU, a 5×996-tone MRU, and a 4×996+484-tone MRU of the 640 MHz bandwidth; or
if an MRU corresponding to the 480 MHz bandwidth does not reuse any part of an MRU in a 640 MHz bandwidth, the MRU corresponding to the 480 MHz bandwidth is generated for a 480 MHz physical layer protocol data unit PPDU.

8. The method according to claim 7, wherein
if one 40 MHz subchannel is punctured in the 480 MHz bandwidth, the MRU comprises the 5×996+484-tone MRU;
if one 80 MHz subchannel is punctured in the 480 MHz bandwidth, the MRU comprises the 5×996-tone MRU;
if one 80 MHz subchannel and one 40 MHz subchannel are punctured in the 480 MHz bandwidth, the MRU comprises the 4×996+484-tone MRU, and the punctured 80 MHz subchannel is 80 MHz with a lowest or highest frequency in the 480 MHz bandwidth; or
if one 160 MHz subchannel is punctured in the 480 MHz bandwidth, the MRU comprises the 4×996-tone MRU.

9. The method according to any one of claims 1 to 8, wherein the method further comprises:
determining, by the first device, the frequency resource based on a resource allocation field, wherein the resource allocation field comprises information indicating the MRU, wherein
when a value range of the resource allocation field is greater than or equal to 304, the resource allocation field indicates the MRU.

10. The method according to claim 9, wherein when the value range of the resource allocation field is greater than or equal to 0 and less than or equal to 303, the resource allocation field indicates an MRU corresponding to a bandwidth less than or equal to 320 MHz.

11. The method according to claim 9 or 10, wherein the resource allocation field further comprises information indicating the resource unit RU; and
when the value range of the resource allocation field is greater than or equal to 304, the resource allocation field indicates the RU, and the RU comprises at least one of the 484-tone RU, the 996-tone RU, the 2×996-tone RU, and the 4×996-tone RU.

12. The method according to any one of claims 9 to 11, wherein the resource allocation field is X bits, and X is an integer greater than or equal to 9.

13. The method according to any one of claims 1 to 8, wherein the frequency resource is a part of a frequency resource in a 2×P MHz bandwidth, and P is greater than 160; and
the method further comprises:
determining, by the first device, the frequency resource based on a resource allocation field and a combination field.

14. The method according to claim 13, wherein the resource allocation field comprises information indicating an MRU corresponding to a P MHz bandwidth, and the combination field indicates whether a first resource block on a left side of a direct current subcarrier in the 2×P MHz and a second resource block on a right side of the direct current subcarrier are combined.

15. The method according to claim 13 or 14, wherein if the combination field indicates that the first resource block and the second resource block are not combined, the first resource block and the second resource block are separately allocated to different stations; or
if the combination field indicates that the first resource block and the second resource block are combined, the first resource block and the second resource block are allocated to a same station.

16. The method according to claim 14 or 15, wherein the first resource block comprises any one of the following:
a 1^{st} adjacent RU on the left side of the direct current subcarrier in the bandwidth, a 1^{st} adjacent MRU on the left side of the direct current subcarrier in the bandwidth, a 2^{nd} adjacent RU on the left side of the direct current subcarrier in the bandwidth, or a 2^{nd} adjacent MRU on the left side of the direct current subcarrier in the bandwidth; and
the second resource block comprises any one of the following:
a 1^{st} adjacent RU on the right side of the direct current subcarrier in the bandwidth, a 1^{st} adjacent MRU on the right side of the direct current subcarrier in the bandwidth, a 2^{nd} adjacent RU on the right side of the direct current subcarrier in the bandwidth, or a 2^{nd} adjacent MRU on the right side of the direct current subcarrier in the bandwidth.

17. A communication apparatus, comprising a processor, configured to read instructions stored in a memory, wherein when the processor executes the instructions, the packet transmission apparatus is enabled to implement the method according to any one of claims 1 to 16.

18. A chip, comprising at least one processing core, configured to perform the method according to any one of claims 1 to 16.

19. A terminal device, comprising the chip according to claim 18.

20. A computer program product, wherein the computer program product comprises computer program code, and when the computer program code is run on a computer, the method according to any one of claims 1 to 16 is performed.

21. A computer-readable storage medium, comprising a computer program, wherein when the computer program is run on a computer device, a processing module in the computer device is enabled to perform the method according to any one of claims 1 to 16.

22. A communication system, comprising a first device configured to perform the method according to any one of claims 1 to 16 and a second device configured to communicate with the first device.
